(19) **Europäisches Patentamt / European Patent Office / Office européen des brevets**

(11) **EP 4 607 968 A1**

(12) **EUROPEAN PATENT APPLICATION**
published in accordance with Art. 153(4) EPC

(43) Date of publication:
**27.08.2025 Bulletin 2025/35**

(21) Application number: **23881622.7**

(22) Date of filing: **08.10.2023**

(51) International Patent Classification (IPC):
**H04W 4/02** *(2018.01)*

(52) Cooperative Patent Classification (CPC):
**H04W 4/02; H04W 64/00**

(86) International application number:
**PCT/CN2023/123451**

(87) International publication number:
**WO 2024/088043 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.10.2022 CN 202211321629**

(71) Applicant: **Huawei Technologies Co., Ltd.
Shenzhen, Guangdong 518129 (CN)**

(72) Inventor: **HUANG, Su
Shenzhen, Guangdong 518129 (CN)**

(74) Representative: **Grünecker Patent- und
Rechtsanwälte
PartG mbB
Leopoldstraße 4
80802 München (DE)**

(54) **RELATIVE POSITIONING METHOD AND COMMUNICATION APPARATUS**

(57) Embodiments of this application provide a relative positioning method and a communication apparatus, to optimize an existing relative positioning solution, so as to improve positioning accuracy. The method includes: A first device obtains measurement result information, where the measurement result information includes time measurement result information of arrival of a reference signal at a target positioning assisting node and/or a target terminal device, and angle measurement result information of the target terminal device relative to the target positioning assisting node, the target positioning assisting node includes a first positioning assisting node and a second positioning assisting node, and the target terminal device includes a first terminal device and a second terminal device. The first device determines relative location information of the first terminal device and the second terminal device based on the measurement result information. The relative location information includes one or more of the following: relative location coordinates, a relative distance, or a relative direction.

S1701: A first device obtains measurement result information

S1702: The first device determines relative location information of a first terminal device and a second terminal device based on the measurement result information

FIG. 17

## Description

This application claims priority to Chinese Patent Application No. 202211321629.7, filed with the China National Intellectual Property Administration on October 26, 2022 and entitled "METHOD FOR SENDING AND RECEIVING INFORMATION AND COMMUNICATION APPARATUS", which is incorporated herein by reference in its entirety.

## TECHNICAL FIELD

This application relates to the field of wireless communication, and in particular, to a relative positioning method and a communication apparatus.

## BACKGROUND

The 3rd generation partnership project (3rd generation partnership project, 3GPP) defines ranging (ranging) scenarios (scenarios) and indicators in the technical standard (technical standard, TS) 22.261 of version 18 (reversion 18, R18). For ranging, relative location information of two terminal devices usually needs to be obtained through relative positioning.

Currently, in a relative positioning solution, a network device may send or receive a reference signal, to separately perform absolute positioning (absolute positioning) on the two terminal devices, to obtain absolute locations (for example, geodetic coordinates or indoor map coordinates) of the two terminal devices based on location information of the network device, and convert the absolute locations of the two terminal devices into relative locations of the two terminal devices. However, the relative positioning solution needs the location information of the network device, and positioning accuracy is low. Therefore, how to optimize the existing relative positioning solution to improve positioning accuracy is an urgent problem to be resolved currently.

## SUMMARY

Embodiments of this application provide a relative positioning method and a communication apparatus, to optimize an existing relative positioning solution, so as to improve positioning accuracy.

To achieve the foregoing objectives, the following technical solutions are used in embodiments of this application.

According to a first aspect, a relative positioning method is provided. The method may be performed by a first device, or may be performed by a component of the first device, for example, a processor, a chip, or a chip system of the first device, or may be implemented by a logical module or software that can implement all or some functions of the first device. The following uses an example in which the method is performed by the first device for description. The method includes: A first device obtains measurement result information, where the measurement result information includes time measurement result information of arrival of a reference signal at a target positioning assisting node and/or a target terminal device, and angle measurement result information of the target terminal device relative to the target positioning assisting node, the target positioning assisting node includes a first positioning assisting node and a second positioning assisting node, and the target terminal device includes a first terminal device and a second terminal device. The first device determines relative location information of the first terminal device and the second terminal device based on the measurement result information. The relative location information includes one or more of the following: relative location coordinates, a relative distance, or a relative direction.

In this embodiment of this application, the first device may directly calculate the relative location information of the two terminal devices based on the time measurement result information and the angle measurement result information that are in the measurement result information, so that absolute positioning does not need to be separately performed on the two terminal devices twice based on location information of the positioning assisting node. Therefore, two positioning errors introduced by twice absolute positioning can be avoided, thereby improving positioning accuracy during relative positioning. In other words, according to the relative positioning method provided in this embodiment of this application, an existing relative positioning solution can be optimized to improve positioning accuracy.

In a possible implementation, the time measurement result information of arrival of the reference signal at the target positioning assisting node and/or the target terminal device includes one or more of the following:

a first RTOA, where the first RTOA is a difference between a first RTOA reference time value and a TOA measurement value obtained by the first positioning assisting node by measuring a reference signal sent by the first terminal device;

a second RTOA, where the second RTOA is a difference between a second RTOA reference time value and a TOA measurement value obtained by the first positioning assisting node by measuring a reference signal sent by the second terminal device;

a third RTOA, where the third RTOA is a difference between a third RTOA reference time value and a TOA measurement value obtained by the second positioning assisting node by measuring the reference signal sent by the first terminal device;

a fourth RTOA, where the fourth RTOA is a difference between a fourth RTOA reference time value and a TOA measurement value obtained by the second positioning assisting node by measuring the reference signal sent by the second terminal device;

a first RSTD, where the first RSTD is a difference between the TOA measurement value obtained by the first positioning assisting node by measuring the reference signal sent by the first terminal device and the TOA measurement value obtained by the first positioning assisting node by measuring the reference signal sent by the second terminal device;

a second RSTD, where the second RSTD is a difference between the TOA measurement value obtained by the second positioning assisting node by measuring the reference signal sent by the first terminal device and the TOA measurement value obtained by the second positioning assisting node by measuring the reference signal sent by the second terminal device;

a third RSTD, where the third RSTD is a difference between a TOA measurement value obtained by the first terminal device by measuring a reference signal sent by the first positioning assisting node and a TOA measurement value obtained by the first terminal device by measuring a reference signal sent by the second positioning assisting node;

a fourth RSTD, where the fourth RSTD is a difference between a TOA measurement value obtained by the second terminal device by measuring the reference signal sent by the first positioning assisting node and a TOA measurement value obtained by the second terminal device by measuring the reference signal sent by the second positioning assisting node;

a difference between the first RTOA and the second RTOA;

a difference between the third RTOA and the fourth RTOA;

a difference between the first RTOA and the third RTOA;

a difference between the second RTOA and the fourth RTOA;

a difference between the first RSTD and the second RSTD; or

a difference between the third RSTD and the fourth RSTD.

In other words, in this embodiment of this application, the time measurement result information of arrival of the reference signal at the target positioning assisting node and/or the target terminal device is time measurement result information (for example, the first RTOA and the second RTOA, or the first RSTD) of the first positioning assisting node relative to the first terminal device and the second terminal device, and time measurement result information (for example, the third RTOA and the fourth RTOA, or the second RSTD) of the second positioning assisting node relative to the first terminal device and the second terminal device; or time measurement result information (for example, the third RSTD) of the first terminal device relative to the first positioning assisting node and the second positioning assisting node, and time measurement result information (for example, the fourth RSTD) of the second terminal device relative to the first positioning assisting node and the second positioning assisting node.

For example, the first RSTD, or the difference between the first RTOA and the second RTOA may indicate a first distance difference. The first distance difference is a distance difference between a distance from the first positioning assisting node to the first terminal device and a distance from the first positioning assisting node to the second terminal device.

For example, the second RSTD, or the difference between the third RTOA and the fourth RTOA may indicate a second distance difference. The second distance difference is a distance difference between a distance from the second positioning assisting node to the first terminal device and a distance from the second positioning assisting node to the second terminal device.

For example, the third RSTD, or the difference between the first RTOA and the third RTOA may indicate a third distance difference. The third distance difference is a difference between a distance from the first terminal device to the first positioning assisting node and a distance from the first terminal device to the second positioning assisting node.

For example, the fourth RSTD, or the difference between the second RTOA and the fourth RTOA may indicate a fourth distance difference. The fourth distance difference is a difference between a distance from the second terminal device to the first positioning assisting node and a distance from the second terminal device to the second positioning assisting node.

Optionally, in this embodiment of this application, a difference between the first distance difference and the second distance difference may be used to determine the relative location information of the first terminal device and the second terminal device.

Optionally, in this embodiment of this application, a difference between the third distance difference and the fourth distance difference may be used to determine the relative location information of the first terminal device and the second terminal device.

In other words, in this embodiment of this application, the relative location information of the first terminal device

and the second terminal device may be determined without obtaining location information of the first positioning assisting node and the second positioning assisting node, and absolute positioning does not need to be separately performed on the first terminal device and the second terminal device to determine the relative location information. Instead, the difference between the first RSTD and the second RSTD, the difference between the third RSTD and the fourth RSTD, or the difference between every two of the first RTOA to the fourth RTOA may indicate the relative distance and the relative direction between the first terminal device and the second terminal device, so that positioning accuracy can be improved.

In addition, in this embodiment of this application, the first RSTD, the second RSTD, the third RSTD, the fourth RSTD, or the difference between every two of the first RTOA to the fourth RTOA is calculated as a difference between time measurement values, thereby eliminating start time at which a device performs time measurement. Therefore, time asynchronization (different start time) between the first positioning assisting node and the second positioning assisting node, or time asynchronization between the first terminal device and the second terminal device does not affect a relative positioning result in embodiments of this application.

In a possible implementation, the angle measurement result information of the target terminal device relative to the target positioning assisting node includes one or more of the following angle measurement values:

a first angle measurement value, where the first angle measurement value is an angle measurement value of the first terminal device relative to the first positioning assisting node;
a second angle measurement value, where the second angle measurement value is an angle measurement value of the second terminal device relative to the first positioning assisting node;
a third angle measurement value, where the third angle measurement value is an angle measurement value of the first terminal device relative to the second positioning assisting node;
a fourth angle measurement value, where the fourth angle measurement value is an angle measurement value of the second terminal device relative to the second positioning assisting node;
a fifth angle measurement value, where the fifth angle measurement value is a value between the first angle measurement value and the second angle measurement value; and
a sixth angle measurement value, where the sixth angle measurement value is a value between the third angle measurement value and the fourth angle measurement value, where
a measurement value type corresponding to the angle measurement value includes one or more of the following: an AOA, an AOD, an RSRP, or an RSRPP of at least one path.

Optionally, the fifth angle measurement value is an angle measurement value of the first terminal device and the second terminal device relative to the first positioning assisting node. The fifth angle measurement value may be an average value of the first angle measurement value and the second angle measurement value.

Optionally, the sixth angle measurement value is an angle measurement value of the first terminal device and the second terminal device relative to the second positioning assisting node. The sixth angle measurement value may be an average value of the third angle measurement value and the fourth angle measurement value.

In a possible implementation, the AOA includes a first arrival path AOA and/or a non-first arrival path AOA; or the AOD includes a first arrival path AOD and/or a non-first arrival path AOD.

Optionally, an NLOS path AOA may refer to: When a UL-SRS sent by a terminal device arrives at a network device via an intermediate device, an included angle that is between a reference direction and a direction of arrival of the UL-SRS to the intermediate device and that is observed from the intermediate device; or when an SL-PRS sent by a terminal device arrives at an assisting terminal device via an intermediate device, an included angle that is between a reference direction and a direction of arrival of the SL-PRS to the intermediate device and that is observed from the intermediate device.

Optionally, an NLOS path AOD may refer to: When a DL-PRS sent by a network device arrives at a terminal device via an intermediate device, an included angle that is between a reference direction and a direction of departure of the DL-PRS and that is observed from the intermediate device; or when an SL-PRS sent by an assisting terminal device arrives at a terminal device via an intermediate device, an included angle that is between a reference direction and a direction of departure of the SL-PRS and that is observed from the assisting terminal device.

Optionally, in this embodiment of this application, the intermediate device may include but is not limited to a reflector, a scatterer, an intelligent reflecting surface, an intelligent relay station, or the like.

Optionally, in this embodiment of this application, the intermediate device may be a reflector, a scatterer, an intelligent reflecting surface, or the like that is closest to the terminal device.

In a possible implementation, the measurement result information further includes one or more of the following: identification information of the first positioning assisting node, identification information of the second positioning assisting node, a PCI corresponding to the first positioning assisting node, a PCI corresponding to the second positioning assisting node, a GCI corresponding to the first positioning assisting node, a GCI corresponding to the second positioning assisting node, resource identification information of the reference signal, measurement time information of the reference signal, or beam index information of the reference signal.

In a possible implementation, the time measurement result information of arrival of the reference signal at the target positioning assisting node and/or the target terminal device includes first time measurement result information and second time measurement result information, the first time measurement result information includes time measurement result information of arrival of the reference signal at the first positioning assisting node, and the second time measurement result information includes time measurement result information of arrival of the reference signal at the second positioning assisting node.

The angle measurement result information of the target terminal device relative to the target positioning assisting node includes first angle measurement result information and second angle measurement result information, the first angle measurement result information includes angle measurement result information of the target terminal device relative to the first positioning assisting node, and the second angle measurement result information includes angle measurement result information of the target terminal device relative to the second positioning assisting node. A measurement value type corresponding to an angle measurement value in the first angle measurement result information and an angle measurement value in the second angle measurement result information is an AOA.

In a possible implementation, the first device is a location management network element, and that a first device obtains measurement result information includes:

The first device sends first measurement request information to the first positioning assisting node, where the first measurement request information is used to request the first positioning assisting node to send the first time measurement result information and the first angle measurement result information to the first device.

The first device sends second measurement request information to the second positioning assisting node, where the second measurement request information is used to request the second positioning assisting node to send the second time measurement result information and the second angle measurement result information to the first device.

The first device receives the first time measurement result information and the first angle measurement result information from the first positioning assisting node, and receives the second time measurement result information and the second angle measurement result information from the second positioning assisting node.

In other words, after receiving the first measurement request information from the first device, the first positioning assisting node may determine the first time measurement result information and the first angle measurement result information, and send the first time measurement result information and the first angle measurement result information to the first device. After receiving the second measurement request information from the first device, the second positioning assisting node may determine the second time measurement result information and the second angle measurement result information, and send the second time measurement result information and the second angle measurement result information to the first device.

Optionally, the first measurement request information includes a reference signal configuration for requesting the first positioning assisting node to perform measurement. The reference signal configuration for requesting the first positioning assisting node to perform measurement may include a first reference signal resource and a second reference signal resource. The first reference signal resource is used by the first terminal device to send a first reference signal to the first positioning assisting node. The second reference signal resource is used by the second terminal device to send a second reference signal to the second positioning assisting node.

Alternatively, optionally, the reference signal configuration for requesting the first positioning assisting node to perform measurement may include a first reference signal resource set and a second reference signal resource set. The first reference signal resource set includes one or more first reference signal resources. The second reference signal resource set includes one or more second reference signal resources.

In other words, the first device may request the first positioning assisting node to simultaneously measure the two reference signal resources, that is, request the first positioning assisting node to simultaneously measure the first reference signal sent by the first terminal device and the second reference signal sent by the second terminal device.

Optionally, the second measurement request information may include a reference signal configuration for requesting the second positioning assisting node to perform measurement. The reference signal configuration for requesting the second positioning assisting node to perform measurement may include a first reference signal resource and a second reference signal resource.

Alternatively, optionally, the reference signal configuration for requesting the first positioning assisting node to perform measurement may include a first reference signal resource set and a second reference signal resource set. The first reference signal resource set includes one or more first reference signal resources. The second reference signal resource set includes one or more second reference signal resources.

In other words, the first device may request the second positioning assisting node to simultaneously measure the two reference signal resources, that is, request the second positioning assisting node to simultaneously measure the first reference signal sent by the first terminal device and the second reference signal sent by the second terminal device.

In a possible implementation, the time measurement result information of arrival of the reference signal at the target positioning assisting node and/or the target terminal device includes third time measurement result information and fourth time measurement result information, the third time measurement result information includes time measurement result information of arrival of the reference signal at the first terminal device, and the fourth time measurement result information includes time measurement result information of arrival of the reference signal at the second terminal device; and the angle measurement result information of the target terminal device relative to the target positioning assisting node includes third angle measurement result information and fourth angle measurement result information, the third angle measurement result information includes angle measurement result information of the first terminal device relative to the target positioning assisting node, and the fourth angle measurement result information includes angle measurement result information of the second terminal device relative to the target positioning assisting node. A measurement value type corresponding to an angle measurement value in the third angle measurement result information and an angle measurement value in the fourth angle measurement result information is an AOD, or an RSRP and/or an RSRPP.

In a possible implementation, the first device is a location management network element, and that a first device obtains measurement result information includes:
The first device sends third measurement request information to the first terminal device, where the third measurement request information is used to request the first terminal device to send the third time measurement result information and the third angle measurement result information to the first device.

The first device sends fourth measurement request information to the second terminal device, where the fourth measurement request information is used to request the second terminal device to send the fourth time measurement result information and the fourth angle measurement result information to the first device.

The first device receives the third measurement result information and the third angle measurement result information from the first terminal device, and receives the fourth measurement result information and the fourth angle measurement result information from the second terminal device.

In other words, after receiving the third measurement request information from the first device, the first terminal device may determine the third time measurement result information and the third angle measurement result information, and send the third time measurement result information and the third angle measurement result information to the first device. After receiving the fourth measurement request information from the first device, the second terminal device may determine the fourth time measurement result information and the fourth angle measurement result information, and send the fourth time measurement result information and the fourth angle measurement result information to the first device.

In a possible implementation, the first device is the first terminal device or the second terminal device.

Optionally, the first device is the first terminal device or the second terminal device, and that a first device obtains measurement result information may include: The first device receives the measurement result information from the location management network element. In other words, after obtaining the measurement result information, the location management network element may not perform relative positioning, but send the measurement result information to the first device, and the first device performs relative positioning location solving.

In a possible implementation, the first device is the first terminal device, the measurement result information includes first information, and the first information includes time measurement result information of arrival of the reference signal at the second terminal device and/or the target positioning assisting node, and angle measurement result information of the second terminal device relative to the target positioning assisting node; and that a first device obtains measurement result information includes:
The first device receives the first information from the location management network element.

In other words, when the first device is the first terminal device, the first device may obtain some measurement result information by receiving the first information from the location management network element.

In a possible implementation, the first device is the first terminal device, the measurement result information includes second information, and the second information includes time measurement result information of arrival of the reference signal at the second terminal device, and angle measurement result information of the second terminal device relative to the target positioning assisting node; and that a first device obtains measurement result information includes:
The first device receives the second information from the second terminal device.

In other words, when the first device is the first terminal device, the first device may obtain some measurement result information by receiving the second information from the second terminal device.

Optionally, before the first device receives the second information from the second terminal device, the method provided in the first aspect further includes:
The first device sends a request message to the second terminal device. The request message is used to request the second terminal device to send the second information to the first device.

In a possible implementation, the first device is the second terminal device, the measurement result information includes third information, and the third information includes time measurement result information of arrival of the reference signal at the first terminal device and/or the target positioning assisting node, and angle measurement result information of the first terminal device relative to the target positioning assisting node; and that a first device obtains measurement result information includes:
The first device receives the third information from a location management network element.

In other words, when the first device is the second terminal device, the first device may obtain some measurement result information by receiving the third information from the location management network element.

In a possible implementation, the first device is the second terminal device, the measurement result information includes fourth information, and the fourth information includes time measurement result information of arrival of the reference signal at the first terminal device and angle measurement result information of the first terminal device relative to the target positioning assisting node; and that a first device obtains measurement result information includes: The first device receives the fourth information from the first terminal device.

**In** other words, when the first device is the second terminal device, the first device may obtain some measurement result information by receiving the fourth information from the first terminal device.

Optionally, before the first device receives the fourth information from the first terminal device, the method provided in the first aspect further includes: The first device sends a request message to the first terminal device. The request message is used to request the first terminal device to send the fourth information to the first device.

Optionally, the first positioning assisting node is a first assisting terminal device, the second positioning assisting node is a second assisting terminal device, and the measurement result information includes time measurement result information of arrival of the reference signal at the target positioning assisting node and angle measurement result information of the target terminal device relative to the target positioning assisting node; and that a first device obtains measurement result information includes: The first device receives the measurement result information from the first positioning assisting node or the second positioning assisting node.

In other words, when the first positioning assisting node is the first assisting terminal device, and the second positioning assisting node is the second assisting terminal device, the first device may obtain the measurement result information via the first positioning assisting node or the second positioning assisting node.

According to a second aspect, a communication apparatus is provided, to implement the foregoing various methods. The communication apparatus may be the first device in the first aspect, or an apparatus including the first device, or an apparatus included in the first device, for example, a chip. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible designs, the communication apparatus may include a processing module and a transceiver module. The transceiver module may also be referred to as a transceiver unit, and is configured to implement a sending function and/or a receiving function in any one of the first aspect or the possible implementations of the first aspect. The transceiver module may include a transceiver circuit, a transceiver machine, a transceiver, or a communication interface. The processing module may be configured to implement a processing function in any one of the first aspect and the possible implementations of the first aspect.

In some possible designs, the transceiver module includes a sending module and a receiving module, respectively configured to implement the sending function and the receiving function in any one of the first aspect and the possible implementations of the first aspect.

According to a third aspect, a communication apparatus is provided, including a processor and a memory. The memory is configured to store computer instructions. When the processor executes the instructions, the communication apparatus is enabled to perform the method in the first aspect. The communication apparatus may be the first device in the first aspect, or an apparatus including the first device, or an apparatus included in the first device, for example, a chip.

According to a fourth aspect, a communication apparatus is provided, including a processor and a communication interface. The communication interface is configured to communicate with a module other than the communication apparatus. The processor is configured to execute a computer program or instructions, so that the communication apparatus performs the method in any one of the foregoing aspects. The communication apparatus may be the first device in the first aspect, or an apparatus including the first device, or an apparatus included in the first device, for example, a chip.

According to a fifth aspect, a communication apparatus is provided, including at least one processor. The processor is configured to execute a computer program or instructions stored in a memory, to enable the communication apparatus to perform the method according to the first aspect. The memory may be coupled to the processor, or may be independent of the processor. The communication apparatus may be the first device in the first aspect, or an apparatus including the first device, or an apparatus included in the first device, for example, a chip.

According to a sixth aspect, a computer-readable storage medium is provided. The computer-readable storage medium stores a computer program or instructions. When the computer program or instructions are run on a communication apparatus, the communication apparatus may be enabled to perform the method according to the first aspect.

According to a seventh aspect, a computer program product including instructions is provided. When the computer program product runs on a communication apparatus, the communication apparatus may be enabled to perform the method according to the first aspect.

According to an eighth aspect, a communication apparatus (for example, the communication apparatus may be a chip or a chip system) is provided. The communication apparatus includes a processor, configured to implement functions in the first aspect.

In some possible designs, the communication apparatus includes the memory, and the memory is configured to store necessary program instructions and data.

In some possible designs, when the apparatus is a chip system, the apparatus may include a chip, or may include a chip and another discrete component.

It may be understood that, when the communication apparatus provided in any one of the second aspect to the eighth aspect is a chip, the foregoing sending action/function may be understood as an output, and the foregoing receiving action/function may be understood as an input.

For technical effect brought by any one of the design manners of the second aspect to the eighth aspect, refer to technical effect brought by the different design manners of the first aspect. Details are not described herein again.

## BRIEF DESCRIPTION OF DRAWINGS

FIG. 1 is a diagram of a principle of TDOA positioning according to an embodiment of this application;

FIG. 2 is a diagram of a principle of angle positioning according to an embodiment of this application;

FIG. 3 is a diagram of a positioning capability reporting procedure initiated by an LMF network element according to an embodiment of this application;

FIG. 4 is a diagram of a positioning capability reporting procedure initiated by a terminal device according to an embodiment of this application;

FIG. 5 is a diagram of an LPP assistance data transmission procedure initiated by an LMF network element according to an embodiment of this application;

FIG. 6 is a diagram of an LPP assistance data transmission procedure initiated by a terminal device according to an embodiment of this application;

FIG. 7 is a diagram of an NRPPa assistance data transmission procedure according to an embodiment of this application;

FIG. 8 is a diagram of an LPP location information transmission procedure initiated by an LMF network element according to an embodiment of this application;

FIG. 9 is a diagram of an LPP location information transmission procedure initiated by a terminal device according to an embodiment of this application;

FIG. 10 is a diagram of an NRPPa location information transmission procedure according to an embodiment of this application;

FIG. 11 is a diagram of wireless coverage of a terminal device participating in ranging according to an embodiment of this application;

FIG. 12 is a diagram of an architecture of a communication system corresponding to a relative positioning method according to an embodiment of this application;

FIG. 13 is a diagram 1 of a relationship between a terminal device, an NG-RAN device, an LMF network element, and an AMF network element according to an embodiment of this application;

FIG. 14 is a diagram 2 of a relationship between a terminal device, an NG-RAN device, an LMF network element, and an AMF network element according to an embodiment of this application;

FIG. 15 is a diagram of a relationship between a terminal device, an assisting terminal device, an NG-RAN device, an LMF network element, and an AMF network element according to an embodiment of this application;

FIG. 16 is a diagram of a structure of a communication apparatus according to an embodiment of this application;

FIG. 17 is a schematic flowchart of a relative positioning method according to an embodiment of this application;

FIG. 18 is a diagram of a geometric relationship between a first positioning assisting node, a second positioning assisting node, a first terminal device, and a second terminal device according to an embodiment of this application;

FIG. 19 is a diagram of an application scenario according to an embodiment of this application;

FIG. 20 is a diagram of relative positioning in an application scenario shown in FIG. 19 according to an embodiment of this application;

FIG. 21 is an example diagram of a relative positioning method according to an embodiment of this application;

FIG. 22 is another example diagram of a relative positioning method according to an embodiment of this application;

FIG. 23 is still another example diagram of a relative positioning method according to an embodiment of this application;

FIG. 24 is still another example diagram of a relative positioning method according to an embodiment of this application;

FIG. 25 is still another example diagram of a relative positioning method according to an embodiment of this application;

FIG. 26 is still another example diagram of a relative positioning method according to an embodiment of this application;

FIG. 27 is still another example diagram of a relative positioning method according to an embodiment of this application; and

FIG. 28 is a diagram of a structure of a first device according to an embodiment of this application.

## DESCRIPTION OF EMBODIMENTS

For ease of understanding technical solutions provided in embodiments of this application, technologies related to this application are first described briefly. The brief descriptions are provided in the following.

First, reference signal

In embodiments of this application, the reference signal may include one or more of the following: an uplink reference signal (uplink reference signal, UL-RS), a downlink reference signal (downlink reference signal, DL-RS), and a sidelink reference signal (sidelink reference signal, SL-RS).

The uplink reference signal may be a reference signal sent by a terminal device to a network device. The uplink reference signal may include one or more of the following: a sounding reference signal (sounding reference signal, SRS), a positioning sounding reference signal (positioning SRS), an uplink demodulation reference signal (UL demodulation reference signal, UL-DMRS), another future uplink reference signal, or the like.

It should be understood that, in embodiments of this application, meanings of "uplink reference signal" and "UL-SRS" are the same. In other words, "uplink reference signal" and "UL-SRS" may be interchanged for description. This is uniformly described herein, and details are not described below again.

The downlink reference signal may be a reference signal sent by the network device to the terminal device. The downlink reference signal may include a positioning-dedicated positioning reference signal (positioning reference signal, PRS), a synchronization signal/physical layer broadcast channel block (synchronization signal/physical broadcast channel block, SSB), a channel state information reference signal (channel state information reference signal, CSI-RS), a downlink DMRS, a tracking reference signal (tracking reference signal, TRS), another future downlink reference signal, or the like that is proposed in R16. This is not specifically limited in embodiments of this application.

It can be understood that meanings of "PRS" and "downlink PRS (DL-PRS)" are the same. In other words, "PRS" and "DL-PRS" may be interchanged for description. This is uniformly described herein, and details are not described below again.

It should be understood that, in a new radio (new radio, NR) system, because the terminal device is connected to the network device through a Uu interface, the uplink reference signal and the downlink reference signal are transmitted through the Uu interface.

The sidelink reference signal may be a reference signal transmitted between two terminal devices through a sidelink (sidelink, SL). The SL may also be referred to as a direct link, a secondary link, a sidelink, or the like. The SL is a link introduced to support direct communication between devices. The SL may be used in a device-to-device (device-to-device, D2D) communication scenario, and may be further used in a vehicle-to-everything (vehicle-to-everything, V2X) scenario. The sidelink reference signal may include a sidelink positioning reference signal (SL-positioning reference signal, SL-PRS).

For example, the terminal device may send the SL-PRS to an assisting terminal device. Correspondingly, the assisting terminal device receives the SL-PRS from the terminal device. Alternatively, the assisting terminal device may send the SL-PRS to the terminal device. Correspondingly, the terminal device receives the SL-PRS from the assisting terminal device. The assisting terminal device may be a terminal device whose location is known and that can be SL-connected to the terminal device. For example, the assisting terminal device may be an anchor terminal device (anchor user equipment), a road side unit (road side unit, RSU), or a positioning reference unit (positioning reference unit, PRU). The anchor terminal device is a terminal device configured to support positioning of a target terminal device. For example, the anchor terminal device may send and/or receive the sidelink reference signal through an SL interface (for example, a PC5 interface), and provide positioning-related information and the like.

It should be understood that because the two terminal devices are connected through the PC5 interface, the sidelink reference signal is transmitted through the PC5 interface.

Second, reference signal configuration

In embodiments of this application, a terminal device may measure a reference signal based on a reference signal configuration delivered by a network device. The reference signal configuration may include a related parameter for receiving or sending the reference signal by the terminal device, for example, a resource for receiving or sending the reference signal by the terminal device. The resource may include a time domain resource and/or a frequency domain resource.

Currently, 3GPP supports use of an orthogonal frequency division multiplexing (orthogonal frequency division multiplexing, OFDM) technology in a transmission solution of an NR system. A principle of the OFDM technology is as follows: A plurality of sub-channels are obtained through division in frequency domain, serial-to-parallel conversion is performed on to-be-transmitted data to obtain a plurality of groups of data to be transmitted in parallel, and then each group of data is modulated onto a subcarrier (subcarrier) of each sub-channel for transmission. Therefore, in time domain, transmission of the to-be-transmitted data is performed on a plurality of subcarriers superimposed in space, where the plurality of subcarriers are orthogonal to each other. Further, when a signal is received, the plurality of subcarriers may be separated, and then each subcarrier is demodulated, to obtain the to-be-transmitted data. In other words, in the NR system, a minimum frequency domain resource is one subcarrier, and a minimum time domain resource is one OFDM symbol.

Time domain resource: In the NR system, information transmission may form a plurality of radio frames. The network device may allocate a system frame number (system frame number, SFN) to each radio frame. Duration of one radio frame may be 10 ms. One radio frame may include 10 subframes (subframe). One subframe may include a plurality of slots (slot). One slot may include 14 OFDM symbols. In other words, in the NR system, the time domain resource occupied by the reference signal may be determined based on an SFN, a subframe index in a radio frame, a slot index in a subframe, or an OFDM symbol index in a slot.

Frequency domain resource: In the NR system, one subcarrier in frequency domain and one OFDM symbol in time domain may be defined as a resource element (resource element, RE). The RE is a resource with a minimum granularity at a physical layer. In the NR system, 12 consecutive subcarriers can be defined as one resource block (resource block, RB). At the physical layer, the RB may be referred to as a physical resource block (physical resource block, PRB). In the NR system, the frequency domain resource occupied by the reference signal may be determined based on an index of the RB.

In the NR system, a concept of a beam is introduced. The beam is a communication resource. The beam may be a wide beam, a narrow beam, or another type of beam. A technology for forming the beam may be a beamforming technology or another technical means. The beamforming technology may be specifically a digital beamforming technology, an analog beamforming technology, or a hybrid digital/analog beamforming technology. Different beams may be considered as different resources. Same information or different information may be sent through different beams. Optionally, a plurality of beams having same or similar communication features may be considered as one beam. One beam may include one or more antenna ports, and is used to transmit a data channel, a control channel, a reference signal, and the like. For example, a transmit beam may be distribution of signal strength formed in different directions in space after a signal is transmitted through an antenna, and a receive beam may be distribution in which an antenna array enhances or weakens reception of a radio signal in different directions in space. It may be understood that one or more antenna ports forming one beam may also be considered as one antenna port set. In a current NR protocol, the beam may be embodied by using an antenna port (antenna port) quasi co-location (quasi colocation, QCL) relationship. Specifically, two signals of a same beam have a QCL relationship with respect to a spatial domain receive parameter (spatial Rx parameter), that is, QCL-Type D:{spatial Rx parameter} in the protocol. In the protocol, the beam may be specifically represented by using identifiers of various signals, for example, a resource identity (identity, ID) of a CSI-RS, a resource ID of an SSB, a resource ID of a TRS, a resource ID of a DL-PRS, or a resource ID of a UL-SRS. The antenna port is a logical concept, and does not one-to-one correspond to a physical antenna. The antenna port is a logical unit formed by one or more physical antennas that transmit one signal or signal stream.

It may be understood that because the concept of the beam is introduced in the NR system, a concept of a reference signal resource is introduced in the NR system, and is used to represent the beam. The reference signal may be configured in a form of a resource, and one reference signal resource is one configuration unit. The reference signal configuration may include a plurality of configuration units, that is, a plurality of reference signal resources.

The following uses a UL-SRS configuration, a DL-PRS configuration, and an SL-PRS configuration as examples to describe the reference signal configuration.

The UL-SRS configuration includes one or more UL-SRS resource sets (resource sets), or one or more UL-SRS resources. One UL-SRS resource set may include one or more UL-SRS resources. One UL-SRS resource may include one or more of the following:

(1) Quantity of antenna ports: In the NR system, one UL-SRS resource may be configured with one, two, or four antenna ports.

(2) Time domain position: may include an index of an occupied OFDM symbol, a start position, or the like. The index of the OFDM symbol may indicate a quantity of OFDM symbols occupied by the UL-SRS resource. One SRS resource may be configured with one, two, four, eight, or 12 OFDM symbols. The start position may be provided by a field startPosition.

(3) Frequency domain position: may include an index of an occupied RB. In the NR system, one UL-SRS resource may occupy 4 to 272 RBs.

(4) Time domain type: In the NR system, the UL-SRS resource may be classified into several types: periodic (periodic), semi-persistent (semi-persistent), and aperiodic (aperiodic). For the semi-persistent or periodic UL-SRS resource, the UL-SRS resource may include a periodicity and a slot offset index (or referred to as a slot offset) that are specified for the terminal device.

It should be understood that UL-SRS resource set information may further include a UL-SRS resource set identity (for example, a UL-SRS resource set ID), and the UL-SRS resource further includes a UL-SRS resource identity (for example, a UL-SRS resource ID), a repetition factor (field repetitionFactor) of UL-SRS transmission, an offset of the UL-SRS resource in frequency domain, a frequency modulation configuration of the UL-SRS resource, and the like. For specific descriptions, refer to TS 38.211. Details are not described herein again.

The DL-PRS configuration may include one or more DL-PRS resource sets, or one or more DL-PRS resources. One DL-PRS resource set may include one or more DL-PRS resources. Similar to the UL-SRS resource, the DL-PRS resource may include one or more of the following: a quantity of antenna ports, an occupied time domain position, an occupied frequency domain position, and a DL-PRS resource identity (for example, DL-PRS resource ID). It may be understood that the DL-PRS resource set further includes a DL-PRS resource set identity (for example, a DL-PRS resource set ID).

In the NR system, the UL-SRS configuration and the DL-PRS configuration may be configured by the network device or a location management function (location management function, LMF) network element. The network device may send the UL-SRS configuration and the DL-PRS configuration to the terminal device through higher layer signaling. The higher layer signaling may be, for example, radio resource control (radio resource control, RRC) signaling or medium access control (media access control, MAC) layer signaling. This is not specifically limited in embodiments of this application.

Optionally, in embodiments of this application, the network device may be an access network (radio access network, RAN) device, for example, a next generation NodeB (gNodeB, gNB), a transmission and reception point (transmission and reception point, TRP), or a transmission point (transmission point, TP) in the NR system. This is not specifically limited in embodiments of this application.

It should be understood that, in the NR system, one gNB may support one or more cells. One or more TRPs may be deployed in one cell. A plurality of reference signal resources (for example, the UL-SRS resource and the DL-PRS resource) may be configured for one TRP. In other words, the TRP may be associated with the cell and/or the reference signal, and therefore TRPs may be distinguished based on an identifier of the cell, a resource identity of the reference signal, or the like.

For example, in the NR system, identification information of the TRP may include a TRP ID and a DL-PRS ID. The TRP ID is used to uniquely identify one TRP in the gNB. An information element type (information element type) of the TRP ID is an integer. For example, a value range of the TRP ID may be (1 to 65535, ...). Each TRP may be associated with only one DL-PRS ID. The DL-PRS ID may be represented by a field dl-PRS-ID. The field dl-PRS-ID may be associated with a plurality of DL-PRS resource set IDs corresponding to one TRP, and one DL-PRS resource may be uniquely identified based on the dl-PRS-ID, the DL-PRS resource set ID, and the DL-PRS resource ID.

The SL-PRS configuration may include one or more SL-PRS resource sets, or one or more SL-PRS resources. Similar to the UL-SRS resource, the SL-PRS resource may include one or more of the following: a quantity of antenna ports, an occupied time domain position, an occupied frequency domain position, and an SL-PRS resource identity (for example, SL-PRS resource ID). It may be understood that the SL-PRS resource set further includes an SL-PRS resource set identity (for example, an SL-PRS resource set ID).

Optionally, in the SL, the SL-PRS configuration may be agreed on in a protocol; or the SL-PRS configuration may be configured by the network device or an LMF network element. This is not specifically limited in embodiments of this application.

Optionally, in embodiments of this application, the SL-PRS configuration may be received by the terminal device; or the SL-PRS configuration may be selected by the terminal device from a resource pool. This is not specifically limited in embodiments of this application.

Third, positioning assisting node

In embodiments of this application, the positioning assisting node may also be referred to as an anchor node (anchor node). The positioning assisting node may send and/or measure a reference signal for positioning. The positioning assisting node may include a network device and/or an assisting terminal device. As described above, the assisting terminal device may be an anchor terminal device, an RSU, or a PRU.

Fourth, positioning mode

In an NR system, the positioning mode may be classified into a terminal device-based (user equipment-based, UE-based) positioning mode and a terminal device-assisted (user equipment-assisted, UE-assisted) positioning mode based on different devices responsible for location estimation.

4.1 UE-based positioning mode

The UE-based positioning mode may mean that a terminal device performs location estimation on the terminal device based on assistance data, and may report measurement result information of a positioning measurement request. The terminal device in the UE-based positioning mode may also be referred to as a positioning terminal device.

4.2 UE-assisted positioning mode

The UE-assisted positioning mode may mean that a terminal device reports measurement result information of a positioning measurement request, but does not perform location estimation. The terminal device may report the measurement result information to an LMF network element, and the LMF network element performs location estimation based on the measurement result information and assistance data. It may be understood that the positioning mode in which the LMF network element performs location estimation may be referred to as an LMF-based positioning mode.

Fifth, positioning method

In an NR system, the positioning method includes time difference of arrival (time difference of arrival, TDOA) positioning, angle positioning, and the like. A procedure of the foregoing positioning method may include: measuring a received reference signal, obtaining measurement result information of the reference signal, and performing location estimation based on the measurement result information and assistance data. A difference between different positioning methods lies in different measurement result information of reference signals. The following describes the TDOA positioning and the angle positioning.

5.1 TDOA positioning

Before introducing the TDOA positioning, a time of arrival (time of arrival, TOA) measurement value in the TDOA is introduced first.

The TOA measurement value may be TOA of a symbol boundary at which the received reference signal is located; or may be TOA of a subframe boundary at which the received reference signal is located.

Optionally, in embodiments of this application, the TOA of the symbol boundary may be a time domain start moment or a time domain end moment of a symbol, and the TOA of the subframe boundary may be a time domain start moment or a time domain end moment of a subframe. The time domain start moment of the subframe may be indicated by an index of a 1st slot of the subframe, or may be indicated by an index of a symbol in the 1st slot of the subframe. The symbol in the 1st slot of the subframe may be a 1st symbol or a last symbol in the 1st slot of the subframe. The time domain end moment of the subframe may be indicated by an index of a last slot of the subframe, or may be indicated by an index of a symbol in the last slot of the subframe. The symbol in the last slot of the subframe may be a 1st symbol or a last symbol in the last slot of the subframe.

Optionally, in embodiments of this application, the TOA measurement value may be a difference between the TOA of the symbol boundary or the subframe boundary at which the received reference signal is located and an integer multiple of a first parameter. For example, the first parameter may be 0.5 ms, 1 ms, or 2 ms. This is not specifically limited in embodiments of this application.

It may be understood that, because a time domain type of a reference signal resource may be periodic, time corresponding to the symbol boundary or the subframe boundary at which the reference signal is located may exceed actual transmission time of the reference signal from a sending device to a receiving device. Consequently, the TOA of the symbol boundary or the subframe boundary at which the reference signal is located cannot be directly used for positioning. In embodiments of this application, because the TOA measurement value is the difference between the TOA of the symbol boundary or the subframe boundary at which the reference signal is located and the integer multiple of the first parameter, the symbol boundary or the subframe boundary at which the reference signal is located may be limited within a specific range, so that the TOA measurement value can be directly used for positioning.

For example, in an example, the TOA of the subframe boundary at which the reference signal is located is 3.7 ms, and the first parameter is 1 ms. The TOA measurement value may be 3.7 ms-3×1 ms=0.7 ms, or the TOA measurement value may be 3.7 ms-4×1 ms=-0.3 ms. In other words, the TOA measurement value may be limited within [0, 1 ms) or [-0.5 ms, 0.5 ms).

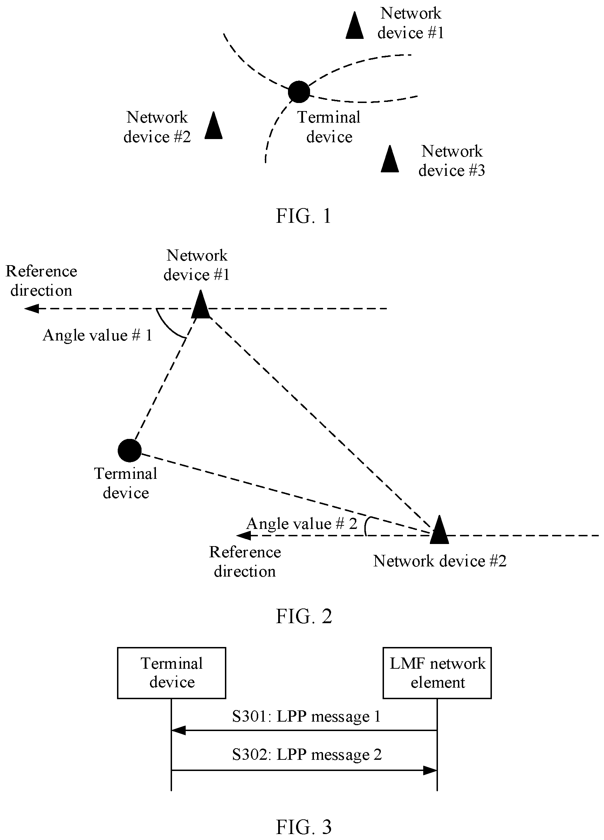

For example, FIG. 1 is a diagram of a principle of TDOA positioning according to an embodiment of this application. As shown in FIG. 1, a terminal device may separately send a UL-SRS to a network device #1, a network device #2, and a network device #3, and separately measure a TOA measurement value of the UL-SRS from the terminal device to the network device #1 (referred to as a TOA measurement value of the network device #1 in the following), a TOA measurement value of the UL-SRS from the terminal device to the network device #2 (referred to as a TOA measurement value of the network device #2 in the following), and a TOA measurement value of the UL-SRS from the terminal device to the network device #3 (referred to as a TOA measurement value of the network device #3 in the following). Therefore, the terminal device may obtain at least two time differences based on the TOA measurement value of the network device #1, the TOA measurement value of the network device #2, and the TOA measurement value of the network device #3, for example, a time difference between the TOA measurement value of the network device #1 and the TOA measurement value of the network device #2, and a time difference between the TOA measurement value of the network device #1 and the TOA measurement value of the network device #3. A distance difference corresponding to each time difference may form a hyperbola that uses two corresponding network devices as focuses, and a location of the terminal device may be estimated by using an intersection point of two hyperbolas and location information of the network devices #1 to #3.

Optionally, in embodiments of this application, the TDOA positioning may include uplink time difference of arrival (uplink time difference of arrival, UL-TDOA) positioning, downlink time difference of arrival (downlink time difference of arrival, DL-TDOA) positioning, and sidelink time difference of arrival (sidelink time difference of arrival, SL-TDOA) positioning. Brief descriptions are as follows.

5.1.1 UL-TDOA positioning

In embodiments of this application, measurement result information corresponding to the UL-TDOA positioning may include an uplink relative time of arrival (uplink relative time of arrival, UL-RTOA) and/or an uplink reference signal time difference of arrival (uplink reference signal time difference, UL-RSTD).

5.1.1.1 UL-RTOA

In embodiments of this application, the UL-RTOA may be a difference between the TOA measurement value obtained by the network device by measuring the UL-SRS sent by the terminal device and an RTOA reference time value corresponding to the UL-SRS. The TOA measurement value is start time of a subframe in which the UL-SRS received by the network device is located. The RTOA reference time value corresponding to the UL-SRS may be indicated by an SFN and an index of the subframe in which the UL-SRS is located.

It should be understood that, in embodiments of this application, because the reference signal corresponds to one reference signal resource, the RTOA reference time value corresponding to the UL-SRS may also be represented as an RTOA reference time value corresponding to the UL-SRS resource.

For example, the RTOA reference time value corresponding to the UL-SRS may be $T_0 + t_{SRS}$. $T_0$ is nominal start time of an SFN #0 provided in SFN initialization time. The SFN #0 is used to represent a 1st SFN. $t_{SRS}$ is $(10n_f + n_{sf}) \times 10^{-3}$. $n_f$ is the SFN in which the UL-SRS is located. $n_{sf}$ is the index of the subframe in which the UL-SRS is located.

It may be understood that, in embodiments of this application, when a same network device calculates, based on different UL-SRS resources, UL-RTOAs corresponding to the different UL-SRS resources, the network device may use a same $T_0$.

5.1.1.2 UL-RSTD

In embodiments of this application, when measuring the UL-SRS sent by the terminal device, the network device may select one UL-SRS resource as a reference resource, and use a UL-SRS resource other than the reference resource as a non-reference resource. Therefore, the UL-RSTD is a difference between a TOA measurement value obtained by the network device by measuring a UL-SRS corresponding to the non-reference resource and a TOA measurement value obtained by the network device by measuring a UL-SRS corresponding to the reference resource.

For example, a UL-SRS resource *a* is the reference resource, a UL-SRS resource b is the non-reference resource, and the UL-RSTD is $T_{SubframeRxb} - T_{SubframeRxa}$. $T_{SubframeRxa}$ is a time domain start moment of a subframe in which a UL-SRS that corresponds to the UL-SRS resource *a* and that is received by the network device is located. $T_{SubframeRxb}$ is a time domain start moment of a subframe in which a UL-SRS that corresponds to the UL-SRS resource b and that is received by the network device is located. The subframe in which the UL-SRS that corresponds to the UL-SRS resource b and that is received by the network device is located is closest, in terms of time, to the subframe in which the UL-SRS that corresponds to the UL-SRS resource *a* and that is received by the network device is located.

Alternatively, optionally, when measuring the UL-SRS sent by the terminal device, the network device may select one group of UL-SRS resources as reference resources, and select another group of UL-SRS resources as non-reference resources. One group of UL-SRS resources may include one or more UL-SRS resources. The network device may determine one group of UL-SRS resources based on a reference signal resource set. For example, one group of UL-SRS resources may be one or more UL-SRS resources in one UL-SRS resource set.

Optionally, in embodiments of this application, one group of UL-SRS resources may correspond to one TOA measurement value.

Optionally, in embodiments of this application, the UL-RSTD reported during the UL-TDOA positioning may be a time value obtained by quantizing the UL-RSTD. The UL-RSTD quantization may be performing a modulo operation or performing a difference operation on the US-RSTD. For example, the UL-RSTD quantization may be performing a modulo operation on a second parameter based on the UL-RSTD. For another example, the UL-RSTD quantization may be an operation of subtracting an integer multiple of the second parameter from the UL-RSTD.

Optionally, in embodiments of this application, the second parameter may be the same as or different from the first parameter. This is not specifically limited in embodiments of this application. For example, the second parameter may be 0.5 ms, 1 ms, or 2 ms.

For example, the second parameter is 1 ms, and the time value obtained by quantizing the UL-RSTD may be limited within [0, 1 ms) or [-0.5 ms, 0.5 ms). In other words, if an obtained UL-RSTD is X ms, and a quantized UL-RSTD is Y ms, X and Y satisfy the following relationship: X=Y+N ms. N is an integer, and a range of Y is within [0, 1 ms) or [-0. 5 ms, 0.5 ms). Alternatively, if an obtained UL-RSTD is X ms, and an index of a quantized UL-RSTD is I, X and I satisfy the following relationship: $LB(I) \leq X-N$ ms$< UB(I)$; or $LB(I) < X-N$ ms$\leq UB(I)$. N is an integer, LB(I) is a lower bound of a quantization interval determined by the quantization index I, UB(I) is an upper bound of the quantization interval determined by the quantization index I, and UB(I)=LB(I)+1 ms. In other words, 1 ms (that is, the second parameter) is a quantization step.

5.1.2 DL-TDOA positioning

In embodiments of this application, measurement result information corresponding to the DL-TDOA positioning may include a downlink reference signal time difference of arrival (downlink reference signal time difference, DL-RSTD). When measuring the reference signal, the terminal device may select one network device as a reference network device, and one DL-PRS resource used by the reference network device to send the reference signal is used as a reference resource. Therefore, the DL-RSTD is a difference between a TOA measurement value obtained by the terminal device by measuring a DL-PRS sent by a non-reference network device and a TOA measurement value obtained by the terminal device by measuring a DL-PRS, based on the reference resource, sent by the reference network device. Alternatively, the terminal device may select one TRP controlled by one network device as a reference TRP, and one DL-PRS resource used by the reference TRP to send a reference signal is used as a reference resource.

For example, a network device i is the reference network device, a network device j is the non-reference network device, and the DL-RSTD is $T_{SubframeRxj} - T_{SubframeRxi}$. $T_{SubframeRxj}$ is a time domain start moment of a subframe in which a DL-PRS received by the terminal device from the network device j is located. $T_{SubframeRxi}$ is a time domain start moment of a subframe in which a DL-PRS corresponding to the reference resource received by the terminal device from the network device i is located, and the subframe is closest, in terms of time, to the subframe in which the DL-PRS received by the terminal device from the network device j is located.

It may be understood that a value of the DL-RSTD of the reference network device may be 0.

5.1.3 SL-TDOA positioning

In embodiments of this application, measurement result information corresponding to the SL-TDOA positioning may include one or more of the following: a sidelink relative time of arrival (sidelink relative time of arrival, SL-RTOA) and/or a sidelink reference signal time difference of arrival (sidelink reference signal time difference, SL-RSTD).

5.1.3.1 SL-RTOA

The SL-RTOA may be a difference between the TOA measurement value obtained by the terminal device by measuring the SL-PRS and an RTOA reference time value corresponding to the SL-PRS. The RTOA reference time value corresponding to the SL-PRS may be indicated by an SFN and an index of a subframe in which the SL-PRS is located.

For example, the RTOA reference time value corresponding to the SL-PRS may be $T_0 + t_{SL-PRS}$. $T_0$ is nominal start time of an SFN #0 provided in SFN initialization time. The SFN #0 is used to represent a 1st SFN. $t_{SL-PRS}$ is ($10n_{f,SL-PRS} + n_{sf,SL-PRS}$) $\times$ $10^{-3}$. $n_{f,SL-PRS}$ is the SFN in which the SL-PRS is located. $n_{sf,SL-PRS}$ is the index of the subframe in which the SL-PRS is located.

It may be understood that, in embodiments of this application, when a same terminal device calculates, based on different SL-PRS resources, SL-RTOAs corresponding to the different SL-PRS resources, the terminal device may use a

same $T_0$.

5.1.3.2 SL-RSTD

In embodiments of this application, when measuring the SL-PRS, the terminal device may select one SL-PRS resource as a reference resource, and use an SL-PRS resource other than the reference resource as a non-reference resource. Therefore, the SL-RSTD is a difference between a TOA measurement value obtained by the terminal device by measuring an SL-PRS corresponding to the non-reference resource and a TOA measurement value obtained by the terminal device by measuring an SL-PRS corresponding to the reference resource.

Alternatively, optionally, when measuring the SL-PRS, the terminal device may further select one group of SL-PRS resources as reference resources, and select another group of SL-PRS resources as non-reference resources. One group of SL-PRS resources may include one or more SL-PRS resources. The terminal device may determine one group of SL-PRS resources based on a reference signal resource set. For example, one group of SL-PRS resources may be one or more SL-PRS resources in one SL-PRS resource set. One group of SL-PRS resources may correspond to one TOA measurement value.

Optionally, in embodiments of this application, when measuring the SL-PRS, the terminal device may further select one terminal device as a reference terminal device, where one SL-PRS resource used when the reference terminal device sends the SL-PRS is used as a reference resource, or one SL-PRS resource set used when the reference device sends the SL-PRS is used as a reference resource.

5.2 Angle positioning

Before introducing the angle positioning, the following concepts are introduced.

An angle of arrival (angle of arrival, AOA) may be an included angle that is between a reference direction (for example, a horizontal plane or a normal line of the horizontal plane) and a direction of arrival of a reference signal and that is observed from a receiving device when the reference signal sent by a sending device arrives at the receiving device. The AOA may include an azimuth angle of arrival (azimuth AOA, A-AOA) and/or a zenith angle of arrival (zenith AOA, Z-AOA). For example, a range of the A-AOA may be [0°, 359°] or [-180°, 180°], and a range of the Z-AOA may be [0°, 180°].

An angle of departure (angle of departure, AOD) may be an included angle that is between a reference direction (for example, a horizontal plane or a normal line of the horizontal plane) and a direction of departure of a reference signal and that is observed from a sending device when the reference signal sent by the sending device arrives at a receiving device. The AOD may include an azimuth angle of departure (azimuth AOD, A-AOD) and/or a zenith angle of departure (zenith AOD, Z-AOD). For example, a range of the A-AOD may be [0°, 359°] or [-180°, 180°], and a range of the Z-AOD may be [0°, 180°].

For example, in an NR system, the AOA and the AOD may be expressed in a global coordinate system (global coordinate system), or may be expressed in a local coordinate system (local coordinate system). In the global coordinate system, due north is an x-axis, due west is a y-axis, and a zenith is a z-axis. In the local coordinate system, the device can set an x-axis direction, a y-axis direction, and a z-axis direction. In the local coordinate system, the device may further indicate a conversion relationship between the local coordinate system and the global coordinate system of the device. The conversion relationship may include one or more of the following: a bearing (bearing/yaw), a tilt (tilt/pitch), and a slant (slant/roll). It should be understood that the device for setting the local coordinate system may be a terminal device, an LMF network element, or a network device. This is not specifically limited in embodiments of this application.

It should be understood that, in embodiments of this application, in the local coordinate system, the Z-AOA may represent a tilt direction of the AOA, and the Z-AOD may represent a tilt direction of the AOD. This is uniformly described herein, and details are not described below again.

A reference signal received power (reference signal received power, RSRP) may be a linear average value of power contributions of frequency domain units carrying reference signals. The frequency domain unit may be a resource element RE.

A reference signal received path power (reference signal received path power, RSRPP) may be a power of a linear average value of channel responses of a frequency domain unit carrying a reference signal at an $i^{th}$ path latency, where i is an integer greater than or equal to 1, and a path latency of a first path corresponds to a $1^{st}$ path latency.

Path (path): In embodiments of this application, the path may indicate a path on which a reference signal is transmitted in a wireless environment. Because an obstacle may exist in the wireless transmission environment, the reference signal may arrive at the receiving device through different paths from the sending device. Therefore, the path may be classified into a line of sight (line of sight, LOS) path and a non-line of sight (non-line of sight, NLOS) path. The LOS path may be a corresponding transmission path on which the reference signal directly arrives at the receiving device from the sending device. The NLOS path may be a corresponding transmission path on which the reference signal arrives at the receiving device from the sending device through reflection, refraction, scattering, diffraction, or the like. It may be understood that, because different paths correspond to different transmission distances, and sequences of detecting reference signals on the different paths are different, the different paths correspond to different latencies. In other words, the different paths may be distinguished based on the different latencies.

It should be understood that the first path may be a path corresponding to a reference signal that is first detected when the reference signal is received. In an ideal wireless environment in which there is no obstacle between the sending device and the receiving device, the first path is usually the LOS path. In a non-ideal wireless environment, the first path may be the NLOS path.

It should be further understood that the non-first path may be an additional path (additional path) other than the first path.

It should be understood that, in embodiments of this application, "first path" and "first arrival path" may be interchanged for representation, and "LOS path" and "direct path" may be interchanged for representation. This is uniformly described herein, and details are not described below again.

For example, FIG. 2 is a diagram of a principle of angle positioning according to an embodiment of this application. As shown in FIG. 2, an angle includes an angle value #1 of a terminal device relative to a network device #1 and an angle value #2 of the terminal device relative to a network device #2. A geometric relationship between the network device #1, the network device #2, and the terminal device is a triangle, and location information of the network device #1 and the network device #2 is known. Therefore, a location of the terminal device may be estimated based on the geometric relationship, the angle value #1, the angle value #2, the location information of the network device #1, and the location information of the network device #2.

In embodiments of this application, the angle positioning includes uplink angle of arrival (uplink angle of arrival, UL-AOA) positioning, downlink angle of departure (downlink angle of departure, DL-AOD) positioning, and sidelink angle positioning.

5.2.1 UL-AOA positioning

A UL-AOA may be an included angle that is between a reference direction and a direction of arrival of a UL-SRS and that is observed from the network device when the UL-SRS sent by the terminal device arrives at the network device. The UL-AOA may be obtained by the network device by measuring the UL-SRS sent by the terminal device.

Optionally, in embodiments of this application, measurement result information corresponding to the UL-AOA positioning may include the UL-AOA. The UL-AOA may include an uplink azimuth angle of arrival (uplink azimuth AOA, UL-A-AOA) and/or an uplink zenith angle of arrival (uplink zenith AOA, UL-Z-AOA).

Optionally, in embodiments of this application, the measurement result information corresponding to the UL-AOA positioning may further include an RSRPP of the UL-SRS and/or an RSRPP of a UL-SRS of at least one path.

It may be understood that "RSRP of the UL-SRS" and "UL-SRS-RSRP" may be interchanged for representation, and "RSRPP of the UL-SRS" and "UL-SRS-RSRPP" may be interchanged for representation. This is uniformly described herein, and details are not described below again.

5.2.2 DL-AOD positioning

A DL-AOD may be an included angle that is between a reference direction and a direction of departure of a DL-PRS and that is observed from the network device when the DL-PRS sent by the network device arrives at the terminal device. The DL-AOD may be determined by measuring received powers of reference signals in a plurality of different beam directions. For example, the network device sends DL-PRSs in the plurality of different beam directions to the terminal device, and the terminal device measures received powers of the DL-PRSs in the plurality of different beam directions, and sends the received powers of the DL-PRSs in the plurality of different beam directions to the LMF network element. Correspondingly, the LMF network element receives the received powers of the DL-PRSs in the plurality of different beam directions from the terminal device, and determines the DL-AOD between the network device and the terminal device based on a proportional relationship between the received powers of the DL-PRSs in the plurality of different beam directions and a beam direction corresponding to each DL-PRS.

For example, the foregoing method for determining the DL-AOD is described by using an example in which the network device sends three DL-PRSs. Transmit beams corresponding to the three DL-PRSs sent by the network device are a beam #1, a beam #2, and a beam #3, the beam #1 is not aligned with the terminal device, the beam #2 is partially aligned with the terminal device, and the beam #3 is completely aligned with the terminal device. The terminal device measures received powers of the DL-PRSs of the three beams, and feeds back measurement result information to the network device. It may be understood that because the beam #1 is not aligned with the terminal device, a received power measured on the beam #1 is the lowest. Because the beam #2 is partially aligned with the terminal device, a received power measured on the beam #2 is greater than that measured on the beam #1. Because the beam #3 is completely aligned with the terminal device, a received power obtained through measurement is the highest. After obtaining the measurement result information, the LMF network element matches the measurement result information with received powers that correspond to a plurality of beams at different emergent angles and that are measured in advance under an ideal condition, and finds that a proportion relationship between the received powers corresponding to the beam #1, the beam #2, and the beam #3 better matches a pre-measured proportion relationship between three beams in a direction of 30 degrees, and determines that the terminal device is in the direction of 30 degrees.

It should be understood that, in embodiments of this application, the network device may provide, for the LMF network element, reference signal received power information (for example, a pre-measured corresponding received power proportion relationship between the plurality of beams at the different emergent angles) corresponding to the plurality of beams at the different emergent angles, so that the LMF network element determines the DL-AOD between the network device and the terminal device. The LMF network element may further share, with the terminal device, the reference signal received power information corresponding to the plurality of beams at the different emergent angles, so that the terminal device performs location estimation and/or determines the DL-AOD.

In embodiments of this application, the measurement result information corresponding to the DL-AOD positioning may include an RSRP of the DL-PRS and/or an RSRPP of a DL-PRS of at least one path. The RSRP of the DL-PRS and/or the RSRPP of the DL-PRS of the at least one path are obtained by the terminal device by measuring the DL-PRS sent by the network device. The terminal device may send the RSRP of the DL-PRS and/or the RSRPP of the DL-PRS of the at least one path to the LMF network element. Correspondingly, the LMF network element receives the RSRP of the DL-PRS and/or the RSRPP of the DL-PRS of the at least one path from the terminal device, and determines the DL-AOD based on the RSRP of the DL-PRS and/or the RSRPP of the at least one path.

Alternatively, optionally, in embodiments of this application, the measurement result information corresponding to the DL-AOD may further include the DL-AOD. The terminal device may determine the DL-AOD between the terminal device and the network device based on the reference signal received power information corresponding to the plurality of beams that are of the network device that sends the DL-PRS and that are at the different emergent angles. The reference signal received power information may be preconfigured by the terminal device, or may be received by the terminal device.

Optionally, in embodiments of this application, the terminal device may send the DL-AOD to a terminal device that is SL-connected to the terminal device.

Optionally, in embodiments of this application, the terminal device may perform reporting in a reporting periodicity corresponding to the DL-AOD positioning method. It can be understood that, because the DL-PRS may be sent periodically, when a periodicity of the DL-PRS is less than the reporting periodicity, the terminal device may measure the DL-PRS for a plurality of times in one reporting periodicity, but the terminal device reports only one RSRP in one reporting periodicity. Therefore, the RSRP reported by the terminal device may be an average value obtained after the plurality of times of measurement.

Optionally, in embodiments of this application, the DL-AOD may include a downlink azimuth angle of departure (downlink azimuth AOD, DL-A-AOD) and/or a downlink zenith angle of departure (downlink zenith AOD, DL-Z-AOD).

It may be understood that "RSRP of the DL-PRS" and "DL-PRS-RSRP" may be interchanged for representation, and "RSRPP of the DL-PRS" and "DL-PRS-RSRPP" may be interchanged for representation. This is uniformly described herein, and details are not described below again.

5.2.3 Sidelink angle positioning

In embodiments of this application, the sidelink angle positioning may be positioning performed based on angle information between a plurality of terminal devices that are SL-connected. The angle information between the plurality of terminal devices that are SL-connected may include an SL-AOA and an SL-AOD. The plurality of terminal devices that are SL-connected may include one or more assisting terminal devices (for example, the anchor terminal device, the RSU, or the PRU described above) and the target terminal device.

5.2.3.1 SL-AOA positioning

The SL-AOA may be an included angle that is between a reference direction and a direction of arrival of an SL-PRS and that is observed from the assisting terminal device when the SL-PRS sent by the target terminal device arrives at the assisting terminal device. The SL-AOA is obtained by the assisting terminal device by measuring the SL-PRS sent by the target terminal device.

Optionally, in embodiments of this application, measurement result information corresponding to the SL-AOA positioning may include the SL-AOA.

Optionally, in embodiments of this application, the measurement result information corresponding to the SL-AOA positioning may further include an RSRPP of the SL-PRS and/or an RSRPP of an SL-PRS of at least one path.

It may be understood that "RSRP of the SL-PRS" and "SL-PRS-RSRP" may be interchanged for representation, and "RSRPP of the SL-PRS" and "SL-PRS-RSRPP" may be interchanged for representation. This is uniformly described herein, and details are not described below again.

5.2.3.2 SL-AOD positioning

The SL-AOD may be an included angle that is between a reference direction and a direction of departure of an SL-PRS and that is observed from the assisting terminal device when the SL-PRS sent by the assisting terminal device arrives at the target terminal device.

In embodiments of this application, measurement result information corresponding to the SL-AOD positioning may include one or more of the following: an SL-PRS-RSRP, an SL-PRS-RSRPP of at least one path, or an SL-AOD. The SL-PRS-RSRP and/or the SL-PRS-RSRPP of the at least one path are obtained by the target terminal by measuring the SL-PRS sent by the assisting terminal device. The target terminal device may send the SL-PRS-RSRP and/or the SL-PRS-RSRPP of the at least one path to the LMF network element. Correspondingly, the LMF network element receives the SL-PRS-RSRP and/or the SL-PRS-RSRPP of the at least one path from the target terminal device, and determines the SL-AOD based on the SL-PRS-RSRP and/or the SL-PRS-RSRPP of the at least one path.

Optionally, in embodiments of this application, the SL-AOD is obtained by the target terminal device by measuring the SL-PRS sent by the assisting terminal device. The target terminal device may receive the SL-PRS through a plurality of antennas, and determine the SL-AOD based on a phase difference of arrival of the SL-PRS at different antennas.

Optionally, in embodiments of this application, the target terminal device may send the SL-AOD to a terminal device that is SL-connected to the target terminal device.

It should be understood that, in the foregoing positioning method, when the terminal device or the LMF network element performs location estimation, not only the measurement result information is required, but also location information of a positioning assisting node (for example, the network device and the assisting terminal device) is required, to determine a location estimation result of the terminal device. The measurement result information may be transmitted by using a location information transmission procedure in a positioning procedure, and the location information of the positioning assisting node may be transmitted by using an assistance data transmission procedure in the positioning procedure. The following describes the positioning procedure in the NR system.

Sixth, positioning procedure

In an NR system, a location service requester may initiate a location service request for a terminal device. The location service requester may be a terminal device, an access and mobility management function (access and mobility management function, AMF) network element, or a location service (location service, LCS) entity of a core network.

Optionally, in embodiments of this application, after sending the location service request, the location service requester may enable an LMF network element to trigger the positioning procedure. The positioning procedure includes a positioning capability reporting procedure, an assistance data transmission procedure, and a location information transmission procedure.

Optionally, in embodiments of this application, in the positioning procedure, information may be transmitted through a long term evolution (long term evolution, LTE) positioning protocol (LTE positioning protocol, LPP) message and/or an NR positioning protocol A (NR positioning protocol annex, NRPPa) message. Information may be transmitted between the LMF network element and the terminal device through an LPP message, and information may be transmitted between the LMF network element and a network device through an NRPPa message.

6.1 Positioning capability reporting procedure

The positioning capability reporting procedure may be used to transmit positioning capability information of the terminal device between the terminal device and the LMF network element. The positioning capability information sent by the terminal device to the LMF network element may include a positioning method supported by the terminal device. The LMF network element configures a proper positioning method for the terminal device based on a positioning capability of the terminal device, and configures a subsequent assistance data transmission procedure and a subsequent location information transmission procedure.

In the NR system, the positioning capability reporting procedure may be classified into two types according to different initiation objects: a terminal device-initiated (UE-initiated) positioning capability reporting procedure and an LMF network element-initiated (LMF-initiated) positioning capability reporting procedure.

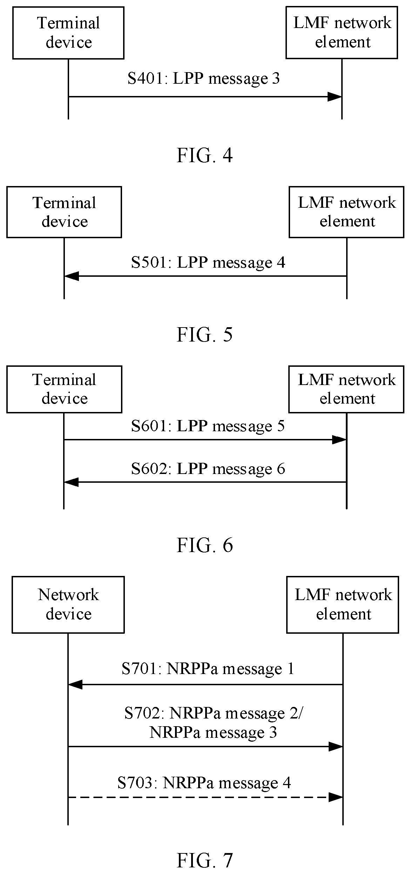

The following uses an LPP protocol as an example to describe the positioning capability reporting procedure with reference to FIG. 3 and FIG. 4.

FIG. 3 is a diagram of the positioning capability reporting procedure initiated by the LMF network element. As shown in FIG. 3, positioning capability reporting initiated by the LMF network element includes the following steps.

S301: The LMF network element sends an LPP message 1 to the terminal device. Correspondingly, the terminal device receives the LPP message 1 from the LMF network element. The LPP message 1 is used to request the terminal device to send positioning capability information of the terminal device to the LMF network element. The positioning capability information of the terminal device includes a positioning method supported by the terminal device.

For example, the LPP message 1 may be an LPP request capability (LPP request capability) message.

S302: The terminal device sends an LPP message 2 to the LMF network element. Correspondingly, the LMF network element receives the LPP message 2 from the terminal device. The LPP message 2 includes the positioning capability information of the terminal device.

For example, the LPP message 2 may be an LPP provide capability (LPP provide capability) message.

FIG. 4 is a diagram of the positioning capability reporting procedure initiated by the terminal device. As shown in FIG. 4, the positioning capability reporting procedure initiated by the terminal device includes the following steps.

S401: The terminal device sends an LPP message 3 to the LMF network element. Correspondingly, the LMF network element receives the LPP message 3 from the terminal device. The LPP message 3 includes positioning capability information of the terminal device. For example, the LPP message 3 may be an LPP provide capability message.

6.2 Assistance data transmission procedure

In the NR system, according to different assistance data transmission objects, the assistance data transmission procedure may be classified into an LPP assistance data transmission procedure and an NRPPa assistance data transmission procedure.

6.2.1 LPP assistance data transmission procedure

The LPP assistance data transmission procedure may be used to transmit assistance data between the terminal device and the LMF network element. The LPP assistance data transmission procedure may be classified into a terminal device-initiated LPP assistance data transmission procedure and an LMF network element-initiated LPP assistance data transmission procedure according to different initiation objects.

The following describes the LPP assistance data transmission procedure with reference to FIG. 5 and FIG. 6.

FIG. 5 is a diagram of the LPP assistance data transmission procedure initiated by the LMF network element. As shown in FIG. 5, the LPP assistance data transmission procedure initiated by the LMF network element includes the following steps.

S501: The LMF network element sends an LPP message 4 to the terminal device. Correspondingly, the terminal device receives the LPP message 1 from the LMF network element. The LPP message 4 includes assistance data.

For example, the LPP message 4 may be an LPP provide assistance data (LPP provide assistance data) message.

Optionally, in this embodiment of this application, the LMF network element may request assistance data from the network device to obtain the assistance data; or the LMF network element may prestore the assistance data. This is not specifically limited in embodiments of this application.

FIG. 6 is a diagram of the LPP assistance data transmission procedure initiated by the terminal device. As shown in FIG. 6, the LPP assistance data transmission procedure initiated by the terminal device includes the following steps.

S601: The terminal device sends an LPP message 5 to an LMF network element. Correspondingly, the LMF network element receives the LPP message 5 from the terminal device. The LPP message 5 is used by the terminal device to request to obtain assistance data from the LMF network element.

For example, the LPP message 5 may be an LPP request assistance data (LPP request assistance data) message.

S602: The LMF network element sends an LPP message 6 to the terminal device. Correspondingly, the terminal device receives the LPP message 6 from the LMF network element. The LPP message 6 carries the assistance data.

For example, the LPP message 6 may be an LPP provide assistance data message.

Optionally, in this embodiment of this application, the LPP message 4 or the LPP message 6 may include different types of assistance data based on different positioning capabilities and different positioning modes of the terminal device. For example, Table 1 shows assistance data that can be transmitted by the LMF network element to the terminal device in a UE-based positioning mode and a UE-assisted positioning mode in DL-AOD positioning.

Table 1

| Assistance data | UE-assisted | UE-based |
|---|---|---|
| One or more physical cell identifiers (physical cell ID, PCI), one or more global cell identifiers (global cell ID, GCI), and a TRP ID of a candidate NR TRP for measurement | Can | Can |

(continued)

| Assistance data | UE-assisted | UE-based |
|---|---|---|
| Timing of a serving TRP (or referred to as a reference TRP) relative to the candidate NR TRP | Can | Can |
| DL-PRS configuration of the candidate NR TRP | Can | Can |
| SSB information (for example, a time domain resource and/or a frequency domain resource of an SSB) | Can | Can |
| Spatial direction information (for example, an angle and a height) of DL-PRS resources of one or more TRPs provided by a gNB | Cannot | Can |
| Geographical coordinates of the one or more TRPs provided by the gNB (including a transmission reference location corresponding to each DL-PRS resource ID, a reference location of a transmit antenna of the reference TRP, and relative locations of a transmit antenna of another TRP) | Cannot | Can |
| Fine timing of the serving (reference) TRP relative to the candidate NR TRP | Cannot | Can |
| PRS-only TRP (a TRP that transmits only a PRS and is cell-independent) indication | Can | Can |
| Association information between the DL-PRS resource and a TRP transmit timing error group (timing error group, TEG) identifier | Cannot | Can |
| LOS/NLOS indication | Cannot | Can |
| On-demand DL-PRS configuration | Can | Can |

Refer to Table 1. The PCI may be used to distinguish signals from different cells. The GCI may be used to identify a coverage area of a cell. The candidate TRP for measurement may include a TRP located in a serving cell of the terminal device and/or a TRP located in a neighboring cell of the terminal device.

Optionally, in this embodiment of this application, the geographical coordinates of the TRP may be geodetic coordinates, including a longitude, a latitude, a height, or the like; or the geographical coordinates of the TRP may be indoor coordinates. This is not specifically limited in embodiments of this application.

Optionally, in this embodiment of this application, the assistance data may further include last known location information of the terminal device.

Optionally, in this embodiment of this application, the LMF network element may prestore the assistance data; or the LMF network element may request to obtain the assistance data from the network device. This is not specifically limited in embodiments of this application.

6.2.2 NRPPa assistance data transmission procedure

The NRPPa assistance data transmission procedure may be used by the network device to send assistance data to the LMF network element. Table 2 shows the assistance data sent by the network device to the LMF network element.

Table 2

| Information |
|---|
| PCI, GCI, and TRP ID of each of one or more TRPs of a gNB |
| SSB information of the one or more TRPs |
| Geographic coordinates information of DL-PRS resources of the one or more TRPs of the gNB |
| TRP type |

Refer to Table 2. The TRP type may include a reception point (reception point, RP), a transmission point (transmission point, TP), a TRP, a PRS-only TRP, or an SRS-only-RP. The SRS-only-RP may be an RP that receives only a UL-SRS and is cell-independent.

The following describes the NRPPa assistance data transmission procedure with reference to FIG. 7.

FIG. 7 is a diagram of the NRPPa assistance data transmission procedure. As shown in FIG. 7, the NRPPa assistance data transmission procedure includes the following steps.

S701: The LMF network element sends an NRPPa message 1 to the network device. Correspondingly, the network device receives the NRPPa message 1 from the LMF network element. The NRPPa message 1 may be used to request UL-SRS configuration information of the terminal device. The NRPPa message 1 may include requested transmission characteristic information of a UL-SRS of the terminal device. The network device may configure the UL-SRS for the terminal device based on the requested transmission characteristic information of the UL-SRS.

For example, Table 3 shows the requested transmission characteristic information of the UL-SRS.

Table 3

| Information |
| --- |
| Requested quantity of transmissions/duration of the UL-SRS |
| Bandwidth |
| Time domain type (periodic, semi-persistent, or aperiodic) of the UL-SRS resource |
| Path loss reference:<br>PCI, SSB index, and SSB configuration;<br>DL-PRS ID, DL-PRS resource set ID, and DL-PRS resource ID; |
| Spatial information (or referred to as beam information): |
| PCI, SSB index, and SSB configuration;<br>DL-PRS ID, DL-PRS resource set ID, and DL-PRS resource ID;<br>UL-SRS resource ID; |
| SSB information |
| SRS periodicity of each UL-SRS resource set |
| Carrier frequency of an SRS transmission bandwidth |

For example, the NRPPa message 1 may be a positioning information request message (positioning information request).

S702: The network device sends an NRPPa message 2 to the LMF network element. Correspondingly, the LMF network element receives the NRPPa message 2 from the network device. The NRPPa message 2 may include configuration data configured by the network device for the terminal device and content in Table 2. For example, Table 4 shows information that may be included in the configuration data of the terminal device.

Table 4

| Configuration data |
| --- |
| UL-SRS configuration of the terminal device |
| Timing information for configuring a TRP for UL-SRS transmission of the terminal device |
| Association information between the SRS resource and a UE Tx TEG ID |

For example, the NRPPa message 2 may be a positioning information response (positioning information response) message.

Optionally, when the network device cannot configure the terminal device based on the requested transmission characteristic information of the UL-SRS, the network device may send an NRPPa message 3 to the LMF network element. Correspondingly, the LMF network element receives the NRPPa message 3 from the network device. The NRPPa message 3 indicates a reason why the network device fails to configure the terminal device. For example, the NRPPa message 3 may be a positioning information failure (positioning information failure) message.

Optionally, if configuration data of the terminal device changes within the duration of the UL-SRS that is requested to be configured in S501, the NRPPa assistance data transmission procedure further includes the following step.

S703: The network device may send an NRPPa message 4 to the LMF network element. Correspondingly, the LMF network element receives the NRPPa message 4 from the network device. The NRPPa message 4 includes updated configuration data. For example, the NRPPa message 4 may be a positioning information update (positioning information update) message.

6.3 Location information transmission procedure

The location information transmission procedure may be used to transmit a measurement request, a location estimation request, measurement result information corresponding to the measurement request, a location estimation result corresponding to the location estimation request, and the like. According to different transmission objects, the location information transmission procedure may be classified into an LPP location information transmission procedure and an NRPPa location information transmission procedure.

6.3.1 LPP location information transmission procedure

According to different initiation objects, the LPP location information transmission procedure may similarly be classified into a terminal device-initiated LPP location information transmission procedure and an LMF network element-initiated LPP location information transmission procedure.

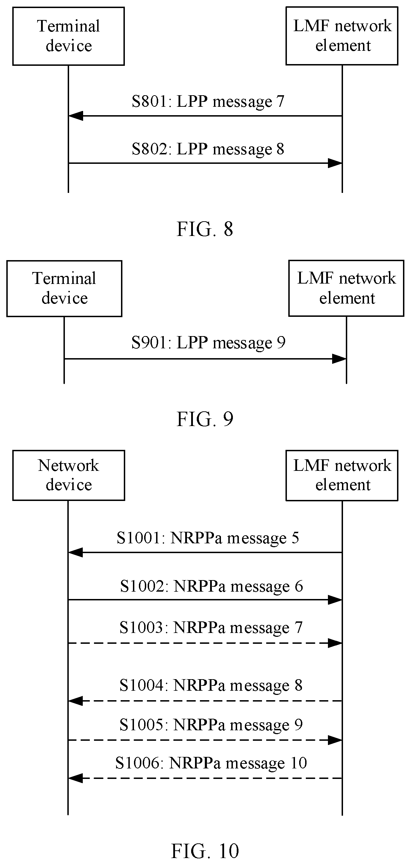

The following uses an LPP protocol as an example to describe the LPP location information transmission procedure with reference to FIG. 8 and FIG. 9.

FIG. 8 is a diagram of the LPP location information transmission procedure initiated by the LMF network element. As shown in FIG. 8, the LPP location information transmission procedure initiated by the LMF network element includes the following steps.

S801: The LMF network element sends an LPP message 7 to the terminal device. Correspondingly, the terminal device receives the LPP message 7 from the LMF network element. The LPP message 7 is used to request the terminal device to perform location estimation and/or measurement, and report location estimation result and/or measurement result information.

Optionally, in this embodiment of this application, the LPP message 7 may include measurement request information, positioning mode indication information (a UE-based positioning mode or a UE-assisted positioning mode), or a quality of service parameter (for example, accuracy). The measurement request information may indicate the terminal device to perform a positioning method corresponding to measurement and report measurement result information corresponding to the positioning method. For example, the measurement request information may request the terminal device to report a measurement result information obtained by measuring a reference signal, a type indicating the reported measurement result information, and the like. For example, the type of the measurement result information may be the corresponding UL-RTOA, UL-RSTD, DL-RSTD, SL-RTOA, UL-AOA, DL-AOD, SL-AOA, SL-AOD, or the like in "positioning method" in the preamble portion of the specific implementation. For example, the LPP message 7 may be an LPP request location information (LPP request location information) message.

It may be understood that, in different positioning modes, the LPP message 7 requests different parameters and carries different information. For example, if a positioning mode of the terminal device is the UE-assisted positioning mode, the LPP message 7 is used to request the terminal device to perform measurement and report measurement result information. If the positioning mode of the terminal device is the UE-based positioning mode, the LPP message 7 is used to request the terminal device to perform location estimation and report the location estimation result.

Optionally, in this embodiment of this application, the accuracy may be accuracy or uncertainty of the location estimation result. This is not specifically limited in embodiments of this application.

S802: The terminal device sends an LPP message 8 to the LMF network element. Correspondingly, the LMF network element receives the LPP message 8 from the terminal device. The LPP message 8 is used to transmit the location estimation result information and/or the measurement result information.

For example, the LPP message 8 may be an LPP provide location information (LPP provide location information) message. Table 5 shows information that may be carried in the LPP message 8 in DL-AOD positioning.

Table 5

| Information | UE-assisted | UE-based |
|---|---|---|
| Longitude, latitude, altitude, and uncertainty of the location estimation result | Cannot | Can |
| PCI, GCI, and TRP ID of each measurement | Can | Cannot |
| Measurement result information of a DL-PRS-RSRP | Can | Cannot |
| Measurement timestamp (timestamp) | Can | Cannot |
| Location estimation timestamp | Cannot | Can |
| DL-PRS receive beam index | Can | Cannot |

Refer to Table 5. The measurement timestamp is an instantaneous moment at which the terminal device records and measures the reference signal. The measurement timestamp may include one or more of the following: an SFN corresponding to a reference signal periodicity, a subframe index of a subframe in which a reference signal is located, a slot index of a slot in which a reference signal is located, a symbol index of a symbol in which a reference signal is located, or the like. It should be understood that, because different paths of the reference signal have different latencies, the measurement timestamp may be used to distinguish the different paths, so that an RSRPP of each path may be measured. In addition, the measurement timestamp may be further used to estimate a speed of the terminal device, so as to obtain the location estimation result more accurately.

Refer to Table 5. The DL-PRS receive beam index indicates a beam used by the terminal device to receive a DL-PRS. If the LPP message 8 includes the DL-PRS receive beam index, it indicates that the terminal device receives different DL-PRS resources through a same receive beam. For example, the DL-PRS receive beam index may be represented by a field DL-PRS-RxBeamIndex.

FIG. 9 is a diagram of the LPP location information transmission procedure initiated by the terminal device. As shown in FIG. 9, the location information transmission procedure initiated by the terminal device includes the following steps.

S901: The terminal device sends an LPP message 9 to the LMF network element. Correspondingly, the LMF network element receives the LPP message 9 from the terminal device. The LPP message 9 may include measurement result information.

For example, the LPP message 9 may be an LPP provide location information message.

6.3.2 NRPPa location information transmission procedure

The NRPPa location information transmission procedure may be used by the LMF network element to request the network device to perform positioning measurement. The LMF network element may further provide necessary assistance data for positioning measurement of the network device.

The following uses an NRPPa protocol as an example to describe the NRPPa location information transmission procedure with reference to FIG. 10.

FIG. 10 is a diagram of the NRPPa location information transmission procedure. As shown in FIG. 10, the NRPPa location information transmission procedure includes the following steps.

S1001: The LMF network element sends an NRPPa message 5 to the network device. Correspondingly, the network device receives the NRPPa message 5 from the LMF network element. The NRPPa message 5 is used to request the network device to perform positioning measurement. For example, the NRPPa message 5 may be used to request the network device to perform UL-TDOA measurement, or request the network device to perform UL-AOA measurement. The NRPPa message 5 may include information required for positioning measurement. For example, the UL-AOA positioning measurement is used as an example. Table 6 shows information included in the NRPPa message 5. It should be understood that the UL-SRS configuration in Table 6 is a UL-SRS configuration corresponding to one terminal device. The UL-SRS configuration includes a UL-SRS resource or a UL-SRS resource set used by the terminal device to send a UL-SRS.

Table 6

| Information |
| --- |
| Cell ID of a TRP that receives the UL-SRS |
| UL-SRS configuration |
| UL timing information and timing uncertainty for a candidate TRP to receive the UL-SRS |
| Characteristic of reporting measurement |
| Measurement quality |
| Measurement periodicity |
| Expected UL-AOA (including a UL-A-AOA and/or a UL-Z-AOA) and uncertain range |
| Response time |
| Measurement characteristic request indicator |
| Measurement time of a measurement instance |

For example, the NRPPa message 5 may be a measurement request message (measurement request).

S1002: The network device sends an NRPPa message 6 to the LMF network element. Correspondingly, the LMF network element receives the NRPPa message 6 from the network device. The NRPPa message 6 may include measurement result information. For example, UL-AOA positioning measurement is used as an example. Table 7 shows information included in the NRPPa message 6.

Table 7

| Measurement result information |
|---|
| NR CGI (NCGI), measured TRP ID |
| UL-AOA |
| A plurality of UL-AOAs |
| Time domain type of an SRS resource |
| UL-SRS-RSRP |
| UL-SRS-RSRPP |
| Measurement timestamp |
| Quality of each measurement |
| Beam information of each measurement |
| LOS/NLOS information of each measurement |
| Measured antenna reference point (antenna reference point, ARP) identifier |

Optionally, if the LMF network element requests the network device to periodically perform positioning measurement in S1001, the network device may send measurement result information to the LMF network element for a plurality of times. For example, after S1001, the NRPPa location information transmission procedure further includes the following step.

S1003: The network device periodically sends an NRPPa message 7 to the LMF network element. Correspondingly, the LMF network element periodically receives the NRPPa message 7 from the network device. The NRPPa message 7 includes the measurement result information. For example, the NRPPa message 7 may be a measurement report (measurement report) message.

Optionally, after S1002, the LMF network element may update request information carried in the NRPPa message 5 in S1001. For example, the NRPPa location information transmission procedure further includes the following step.

S1004: The LMF network element sends an NRPPa message 8 to the network device. Correspondingly, the network device receives the MRPPa message 8 from the LMF network element. The NRPPa message 8 is used to update content that is used to request the network device to perform positioning measurement. For example, the NRPPa message 8 may be a measurement update (measurement update) message.

Optionally, if the network device cannot report the measurement result information requested by the LMF, the network device may notify the LMF network element of a measurement failure. For example, the NRPPa location information transmission procedure further includes the following step.

S1005: The network device sends an NRPPa message 9 to the LMF network element. Correspondingly, the LMF network element receives the NRPPa message 9 from the network device. The NRPPa message 9 indicates the measurement failure. For example, the NRPPa message 9 may be a measurement failure indication (measurement failure indication) message.

Optionally, the LMF network element may abort positioning measurement of the network device. For example, the NRPPa location information transmission procedure further includes the following step.

S1006: The LMF network element sends an NRPPa message 10 to the network device. Correspondingly, the network device receives the NRPPa message 10 from the LMF network element. The NRPPa message 10 indicates to abort the measurement. For example, the NRPPa message 10 may be a measurement abort (measurement abort) message.

It should be understood that, in this embodiment of this application, various procedures may be performed once or more times, and there is no sequence requirement. For example, in the location information transmission procedure, if the assistance data provided by the LMF network element is insufficient to meet a requirement of the terminal device for performing location estimation, the terminal device may initiate the assistance data transmission procedure (for example, steps S601 and S602).

Seventh, ranging scenario

TS 22.261 defines ranging scenarios and related indicators, as shown in Table 8. The related indicators are as follows:

Ranging accuracy (ranging accuracy) may include distance accuracy and/or direction accuracy. The distance accuracy indicates an absolute value of a deviation between a measurement distance value and a true distance between two terminal devices. The direction accuracy indicates an absolute value of a deviation between a measurement direction value (including an A-AOA) and a true direction between two terminal devices.

Confidence level (confidence level): In view of ranging accuracy, the confidence level may represent a percentage of a measurement distance value and/or direction value that is expected to include a true distance and/or a true direction in all possible measurement distance values and/or direction values.

Availability (availability) is a percentage of a time amount in which a ranging system can provide required ranging-related data within a performance objective or a required range in an expected time amount in which the system provides a ranging service in a target service area.

A latency (latency) is time elapsed between triggering an event of determining ranging-related data and obtaining availability of the ranging-related data at a ranging system interface.

A ranging distance (effective ranging distance) is a maximum distance between a terminal device that initiates ranging and a target terminal device in a ranging operation.

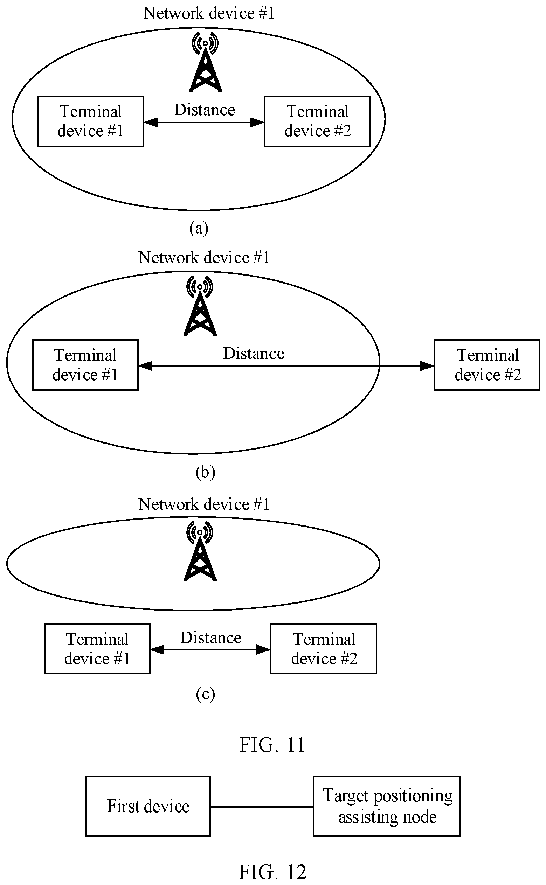

Coverage (coverage) indicates a wireless coverage type of a terminal device participating in ranging. The wireless coverage includes in-coverage (in coverage, IC), partial coverage (partial coverage, PC), and out-of-coverage (out-of-coverage, OOC). For example, FIG. 11 is a diagram of wireless coverage of a terminal device participating in ranging according to an embodiment of this application. As shown in FIG. 11, an example in which terminal devices participating in ranging include a terminal device #1 and a terminal device #2, and a network device #1 provides wireless access for the terminal device 1 and the terminal device #2 is used. As shown in (a) in FIG. 11, both the terminal device #1 and the terminal device #2 are located in a wireless coverage area of the network device #1. As shown in (b) in FIG. 11, the terminal device #1 is located within a wireless coverage area of the network device #1, and the terminal device #2 is located outside the wireless coverage area of the network device #1. As shown in (c) in FIG. 11, both the terminal device #1 and the terminal device #2 are located outside a wireless coverage area of the network device #1.

An NLOS/LOS indicates an environment between a terminal device that initiates ranging and a target terminal. The environment may be a transmission environment of a reference signal, for example, an NLOS environment or an LOS environment.

A relative velocity (relative user equipment velocity) may be a speed of a target terminal device relative to a terminal device that initiates ranging. The target terminal device may be static or may be moving relative to the terminal device that initiates ranging. When the target terminal device is moving relative to the terminal device that initiates ranging, the relative velocity may further include other movement information of the target terminal device, for example, a maximum speed or a track.

A time interval (ranging interval) is a time difference between two consecutive ranging operations.

A number of concurrent ranging operations for a single terminal device (number of concurrent ranging operation for a UE) indicates a number of concurrent ranging operations that one terminal device can perform. The number of concurrent ranging operations for the single terminal device may be represented by N1.

A number of concurrent ranging operations for terminal devices in an area (number of concurrent ranging operation in an area) indicates a number of concurrent ranging operations for terminal devices in one area. The number of concurrent ranging operations for the terminal devices in the area may be represented by N2.

Table 8

| Ranging scenario | Ranging accuracy (95% confidence level) | | Avail ability | Latency | Ranging distance | Cove rage | NLOS /LOS | Relative velocity | Time interval | N1 | N2 |
|---|---|---|---|---|---|---|---|---|---|---|---|
| | Distance accuracy | Direction accuracy | | | | | | | | | |
| Smart TV remoter | Note 1 | Note 2 | 99% | 50 ms | 10 m | IC/P C/O OC | LOS | Static/Moving (<1 m/s) | 50 ms | - | - |
| Picture and video sharing based on a ranging result | 10 cm | 2° | 99% | 50 ms | 10 m | IC/P C/O OC | LOS | Static/Moving (<1 m/s) | 50 ms | - | - |
| Distance-based smart device control | 10 cm | - | 99% | 100 ms | 20 m | IC/P C/O OC | LOS | Static/Moving (<1 m/s) | 50 ms | 20 | - |
| Smart vehicle key | 10 cm | - | 99% | 50 ms | 30 m | IC/P C/O OC | LOS | Static/Moving (<2 m/s) | 25 ms | - | 50/ ($10^4$ $m^2$) |
| Touchles s self-checkout machine control | 10 cm | - | 99% | 150 ms | 1 m | IC/P C/O OC | LOS | Static/Moving (<1 m/s) | 100 ms | - | = |
| Hands-free access | 10 cm | - | 99% | 500 ms | 10 m | IC/P C/O OC | LOS | Static/Moving (1 m/s) | 50 ms | - | 20/3.1 $4 \times 100$ $m^2$ |
| Smart transport ation metro/bu s validatio n | 10 cm | - | 99% | - | 2 m | IC/P C/O OC | LOS | Static/Moving (3 km/h) | 50 ms | 20 | 100 in an 8 $m^2$ area |
| Ranging of a term- inal device in front of a vending machine | 20 cm | 10° | - | 1s | 5 m | IC/P C/O OC | LOS | Static/Moving (<1 m/s) | 50 ms | - | 10 |
| Items finding in a supermar ket | 50 cm | 5° | 95% | - | 100 m | IC/P C/O OC | LOS | Static/Moving (<1 m/s) | 250 ms | - | 100/ (3.14× $10^4$ $m^2$) |
| Distance-based in-telligen t perceptio n for public safety | 50 cm | - | 99% | - | 20 m | IC/P C/O OC | LOS | Static/Moving (<20 km/h) | - | 100 | - |

| Ranging scenario | Ranging accuracy (95% confidence level) | | Avail ability | Latency | Ranging distance | Cove rage | NLOS /LOS | Relative velocity | Time interval | N1 | N2 |
|---|---|---|---|---|---|---|---|---|---|---|---|
| | Distance accuracy | Direction accuracy | | | | | | | | | |
| Long distance search | 20 m | 5° | 99% | - | 100 m to 1 km | IC/P C/O OC | LOS | Static/Moving (maximum: 10 m/s) | 5s | - | - |
| Long distance ap- proxim ate location | [10 m] | $\pm$[12.5°] | 99% | - | 500 m | IC/P C/O OC | LOS | Static/Moving (<10 m/s) | - | 1 | [50]/(1 0$^4$ m$^2$) |
| Note 1 in Table 8 is a spacing of 10 cm to 3 m. Note 2 in Table 8 indicates that horizontal accuracy is $\pm 2°$ (a spacing of 0.1 to 3 m) and an AOA coverage area is -60° to +60°; and elevation direction accuracy is $\pm 2°$ (a spacing of 0.1 to 3 m) and an AOA coverage area is -45° to +45°. | | | | | | | | | | | |

EP 4 607 968 A1

Refer to Table 8. Ranging distance ranges required by the service types corresponding to the ranging scenarios are mostly less than 20 m. In other words, a distance between two terminal devices is short. Items finding in the supermarket in the ranging scenarios is used as an example. A user may carry a terminal device A to search for a terminal device B. When the terminal device A determines relative location information of the terminal device A and the terminal device B, the terminal device A may determine a rough search direction of the terminal device B based on the relative location information, and when a distance between the terminal device A and the terminal device B is less than an error provided by a positioning system, the user of the terminal device A may actually view the terminal device B, and further find the terminal device B.

Optionally, in this embodiment of this application, the relative location information of the two terminal devices may include one or more of the following: relative location coordinates, a relative distance, or a relative direction.

The relative location coordinates may be location coordinates of one terminal device in the two terminal devices relative to the other terminal device. The location coordinates may be in a form of a vector from one terminal device to the other terminal device. The relative location coordinates may be expressed in a global coordinate system, or may be expressed in a local coordinate system. This is not specifically limited in embodiments of this application.

The relative distance may be a distance between the two terminal devices. The relative distance may include a plane distance and/or an elevation distance.

The relative direction may be a direction in which one terminal device in the two terminal devices points to the other terminal device. The relative direction may be represented by using a relative azimuth and a relative zenith. For example, the relative azimuth may be an included angle between a horizontal plane and a direction in which one terminal device points to the other terminal device. The relative zenith may be an included angle between a zenith direction and a direction in which one terminal device points to the other terminal device.

In the ranging scenario, to determine the relative location information of the two terminal devices, in a relative positioning solution, absolute positioning may be separately performed on the two terminal devices according to methods such as the TDOA positioning or the angle positioning, to obtain absolute location information (for example, geodetic coordinates (such as a longitude, a latitude, or an altitude) or indoor map coordinates) of the two terminal devices, and the absolute location information of the two terminal devices is converted into relative location information.

However, as described in the "positioning method" part above, the location information of the positioning assisting node needs to be obtained when the absolute positioning is performed on the terminal device, and a positioning error exists when the absolute positioning is performed on the terminal device. Therefore, when the absolute location information of the two terminal devices is converted into the relative location information, the relative location information brings positioning errors of twice absolute positioning. This is equivalent to amplifying a positioning error of relative positioning, and consequently positioning accuracy is low.

Based on this, an embodiment of this application provides a relative positioning method, to optimize an existing relative positioning solution, so as to improve positioning accuracy.

The following describes the technical solutions in embodiments of this application with reference to the accompanying drawings in embodiments of this application. In descriptions of this application, unless otherwise specified, "/" represents an "or" relationship between associated objects. For example, A/B may represent A or B. In this application, "and/or" describes only an association relationship between associated objects and represents that three relationships may exist. For example, A and/or B may represent the following three cases: Only A exists, both A and B exist, and only B exists, where A or B may be singular or plural. In addition, in the descriptions of this application, "a plurality of" means two or more than two unless otherwise specified. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The technical solutions in embodiments of this application may be applied to a 5th generation (5th generation, 5G) system or an NR system. The technical solutions in embodiments of this application may also be applied to another communication system, for example, an LTE system, an LTE frequency division duplex (frequency division duplex, FDD) system, an LTE time division duplex (time division duplex, TDD) system, a universal mobile telecommunications system (universal mobile telecommunications system, UMTS), or a worldwide interoperability for microwave access (worldwide interoperability for microwave access, WiMAX) communication system. The 5G system in this application includes an NR system in non-standalone (non-standalone, NSA) networking or an NR system in standalone (standalone, SA) networking. The technical solutions provided in this application are also applicable to a future communication system, for example, a 6th generation mobile communication system. Alternatively, the communication system may be a public land mobile network (public land mobile network, PLMN), a D2D communication system, a machine to machine (machine to machine, M2M) communication system, an internet of things (Internet of Things, IoT) communication system, or another communication system.

FIG. 12 is a diagram of an architecture of a communication system corresponding to a relative positioning method according to an embodiment of this application. As shown in FIG. 12, the communication system includes a first device and a target positioning assisting node. The first device may be a location management network element or a target terminal device. The target terminal device may include a first terminal device and a second terminal device. The target positioning assisting node may include a first positioning assisting node and a second positioning assisting node. The first positioning assisting node may be a first network device or a first assisting terminal device. The second positioning assisting node may be a second network device or a second assisting terminal device. The first device may directly communicate with the target positioning assisting node, or may communicate with the target positioning assisting node through forwarding by another device. This is not specifically limited in embodiments of this application.

Optionally, the location management network element in embodiments of this application may be an LMF network element, a location management unit (location management unit, LMU), a location management component (location management component, LMC), an LMC integrated on a RAN side, a local location management function (local location management function, LLMF) network element located in an NG-RAN device, an enhanced serving mobile location center (enhanced serving mobile location center, E-SMLC), a secure user plane location platform (secure user plane location platform, SLP), a location server, a navigation server, or the like; and may alternatively be a chip (system) that may be disposed in the LMF network element, the E-SMLC, the SLP, the location server, or the navigation server, or another component that has a function of the location management network element.

Optionally, the network device (including the first network device, the second network device, or the like) in embodiments of this application may be any communication device that has wireless sending and receiving functions and that is configured to communicate with the terminal device. The network device includes but is not limited to an eNB, a baseband unit (baseband unit, BBU), an access point (access point, AP) in a Wi-Fi system, a wireless relay node, a wireless backhaul node, and the like. Alternatively, the network device may be one or a group of antenna panels (including a plurality of antenna panels) of a base station in an NR system. In addition, the network device may alternatively be a network device that forms a gNB or a TP, for example, a BBU or a distributed unit (distributed unit, DU).

In some deployments, the gNB may include a central unit (central unit, CU) and a DU. In addition, the gNB may further include an active antenna unit (active antenna unit, AAU). The CU implements a part of functions of the gNB, and the DU implements some functions of the gNB. For example, the CU is responsible for processing a non-real-time protocol and a service, and implementing functions of an RRC and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements a part of physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node.

Optionally, the terminal device (including the first terminal device, the second terminal device, the first assisting terminal device, the second assisting terminal device, or the like) in embodiments of this application may be an access terminal, a subscriber unit, a subscriber station, a mobile station, a relay station, a remote station, a remote terminal, a mobile device, UE, a terminal (terminal), a wireless communication device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future NR network, a terminal device in a future evolved PLMN, a terminal device in a future internet of vehicles, or the like. This is not limited in embodiments of this application.

By way of example and not limitation, in embodiments of this application, the terminal device may be a mobile phone, a tablet computer, a computer having wireless sending and receiving functions, a virtual reality terminal device, an augmented reality terminal device, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or the like.

As an example rather than a limitation, in embodiments of this application, the wearable device may also be referred to as a wearable intelligent device, and is a general name of a wearable device developed by intelligently designing daily wear through a wearable technology, such as glasses, gloves, watches, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, the terminal device in embodiments of this application may alternatively be a terminal device in an IoT system. An IoT is an important part of future development of information technologies. A main technical feature of the IoT is connecting a thing to a network through a communication technology, to implement an intelligent network for interconnection between a person and a machine or between one thing and another. In embodiments of this application, an IoT technology may implement massive connections, deep coverage, and terminal power saving by using, for example, a narrowband (narrowband, NB) technology.

In addition, in embodiments of this application, the terminal device may further include a sensor such as an intelligent printer, a train detector, and a gas station. Main functions of the terminal device include collecting data (some terminal devices), receiving control information and downlink data of the network device, sending an electromagnetic wave, and transmitting uplink data to the network device.

Optionally, the network device and the terminal device in embodiments of this application may communicate with each other through a licensed spectrum, may communicate with each other through an unlicensed spectrum, or may communicate with each other through both a licensed spectrum and an unlicensed spectrum. The network device and the terminal device may communicate with each other through a spectrum below 6 gigahertz (gigahertz, GHz), may communicate with each other through a spectrum above 6 GHz, or may communicate with each other through both a spectrum below 6 GHz and a spectrum above 6 GHz. A spectrum resource used between the network device and the terminal device is not limited in embodiments of this application.

Optionally, the terminal device or the network device in embodiments of this application may be deployed on land, including an indoor or outdoor device, a handheld device, or a vehicle-mounted device; or may be deployed on a water surface; or may be deployed on a plane, a balloon, or an artificial satellite in the air. Application scenarios of the terminal device or the network device are not limited in embodiments of this application.

As described above, the relative positioning method provided in embodiments of this application is applicable to the foregoing various communication systems.

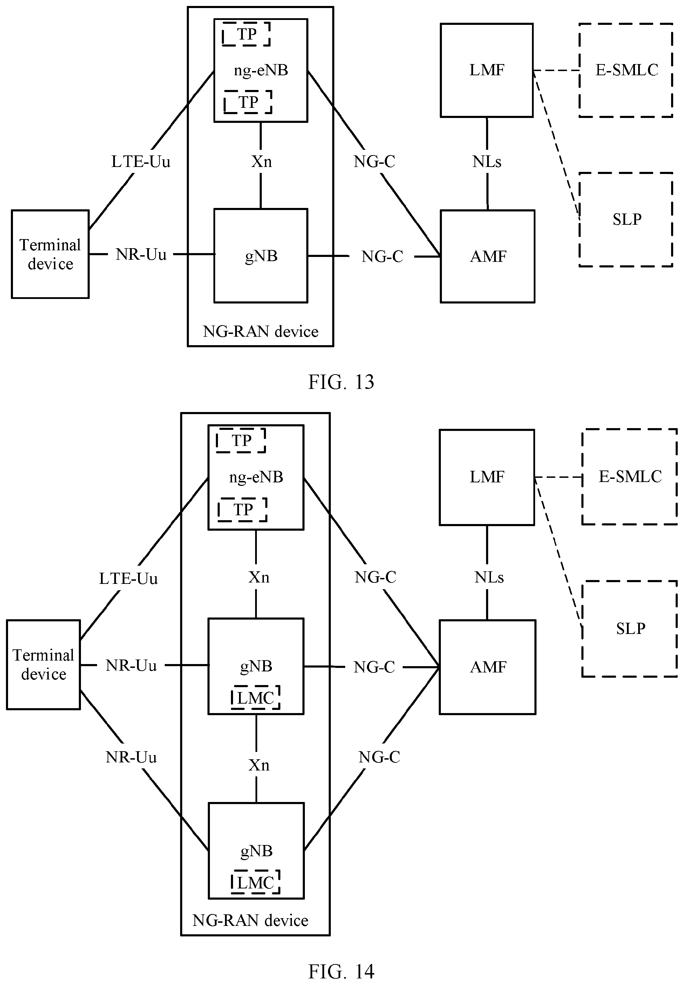

For example, FIG. 13 or FIG. 14 is a diagram of a relationship between a terminal device, an NG-RAN device, an LMF network element, and an AMF network element when a relative positioning method in an embodiment of this application is applied to an NR system. As shown in FIG. 13 or FIG. 14, the terminal device is connected to the NG-RAN device via a ng-eNB and a gNB through an LTE-Uu interface and/or an NR-Uu interface, and the NG-RAN device is connected to a 5G core network (5G core, 5GC) through an NG-C interface. There may be one or more terminal devices, for example, a first terminal device and a second terminal device. The NG-RAN device includes one or more ng-eNBs (one ng-eNB is used as an example in FIG. 13 or FIG. 14). Alternatively, the NG-RAN device may include one or more gNBs (one gNB is used as an example in FIG. 13 and two gNBs are used as examples in FIG. 14, and the two gNBs may be a first network device and a second network device). The ng-eNB is an LTE base station accessing the 5GC, and the gNB is a 5G base station accessing the 5GC. The 5GC includes an AMF network element and an LMF network element. The AMF network element is configured to implement functions such as access management, and the LMF network element is configured to interact with the terminal device or the NG-RAN device to implement various functions (for example, a positioning function). The AMF network element is connected to the LM network element through an NLs interface.

Further, a control plane interface between the 5GC and the NG-RAN device is an N2 interface, a user plane interface between the 5GC and the NG-RAN is an N3 interface, and an interface between gNBs is an Xn interface.

Optionally, as shown in FIG. 13 or FIG. 14, the 5GC may further include an E-SMLC and an SLP. The E-SMLC and the SLP are separately connected to the LMF network element. The E-SMLC and the SLP may provide, to the LMF network element, assistance data (for example, the assistance data shown in Table 1) required by the terminal device, for relative positioning.

It may be understood that FIG. 13 is similar to FIG. 14. A difference lies, for example, in that: A location management function apparatus or component (such as the LMF network element) in FIG. 13 is deployed in the 5GC, and a location management function apparatus or component (such as an LMC) in FIG. 14 may be deployed in the NG-RAN device. As shown in FIG. 14, the gNB includes the LMC. The LMC is a partial functional component of the LMF network element and can be integrated into the gNB of the NG-RAN device.

It should be understood that FIG. 13 or FIG. 14 is merely an example of the diagram of the relationship between the terminal device, the NG-RAN device, the LMF network element, and the AMF network element when the relative positioning method in this embodiment of this application is applied to a 5G communication system, and does not limit to including only one NG-RAN device, or only one terminal device is included.

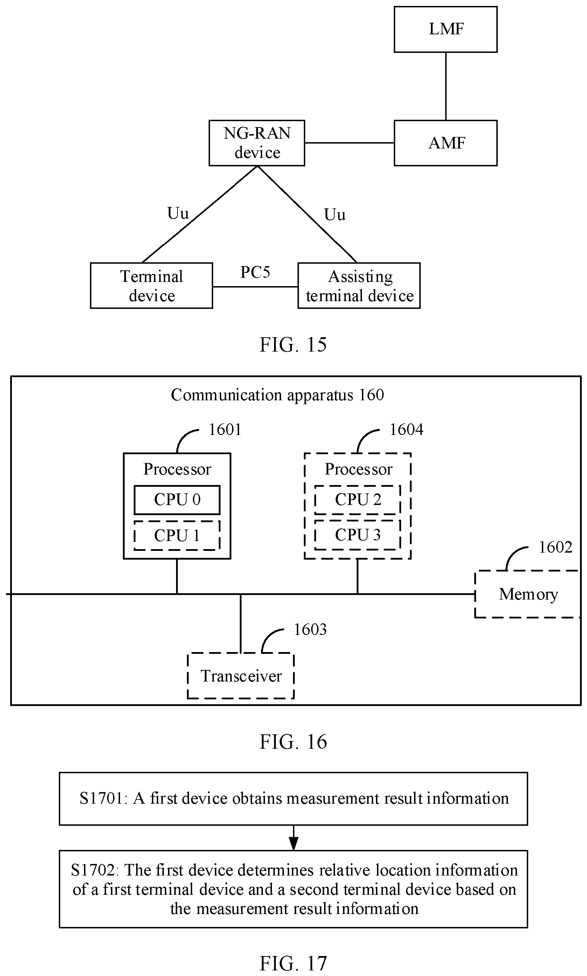

For example, FIG. 15 is a diagram of a relationship between a terminal device, an assisting terminal device, an NG-RAN device, an LMF network element, and an AMF network element when a relative positioning method in an embodiment of this application is applied to an NR system. As shown in FIG. 15, a difference between FIG. 15 and FIG. 13 or FIG. 14 lies in that the terminal device is directly connected to the assisting terminal device through a PC5 interface. A related specification of the PC5 interface is specified in a sidelink (sidelink, SL) protocol. For details, refer to the SL protocol. Details are not described herein again.

It may be understood that the assisting terminal device in FIG. 15 may include one or more assisting terminal devices, for example, a first assisting terminal device and a second assisting terminal device.

It should be understood that the device or the functional node included in FIG. 13 to FIG. 15 is merely an example for description, and does not constitute a limitation on embodiments of this application. Actually, FIG. 13 to FIG. 15 may further include another network element, device, or functional node that has an interaction relationship with the device or the functional node shown in the figure. This is not specifically limited in this application.

FIG. 16 is a diagram of a structure of a communication apparatus 160 that may be configured to perform a relative positioning method according to an embodiment of this application. The communication apparatus 160 may be a first device, a first terminal device, or a second terminal device, or may be a chip or a component applied to the first device, or a chip or a component in the first terminal device, or a chip or a component in the second terminal device.

As shown in FIG. 16, the communication apparatus 160 may include a processor 1601. Optionally, the communication apparatus 160 may further include either or both of a memory 1602 and a transceiver 1603. The processor 1601 and either or both of the memory 1602 and the transceiver 1603 may be coupled, for example, may be connected through a communication bus; or the processor 1601 may be used independently.

The following describes components of the communication apparatus 160 in detail with reference to FIG. 16.

The processor 1601 is a control center of the communication apparatus 160, and may be one processor or may be a collective term of a plurality of processing elements. For example, the processor 1601 is one or more central processing units (central processing units, CPUs), or may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

The processor 1601 may run or execute a software program stored in the memory 1602, and invoke data stored in the memory 1602, to perform various functions of the communication apparatus 160.

During specific implementation, in an embodiment, the processor 1601 may include one or more CPUs, such as a CPU 0 and a CPU 1 shown in FIG. 16.

During specific implementation, in an embodiment, the communication apparatus 160 may alternatively include a plurality of processors, for example, the processor 1601 and a processor 1604 shown in FIG. 16. Each of the processors may be a single-core processor (single-CPU), or may be a multi-core processor (multi-CPU). The processor herein may be one or more communication devices, circuits, and/or processing cores configured to process data (for example, computer program instructions).

The memory 1602 may be a read-only memory (read-only memory, ROM) or another type of static storage communication device that can store static information and instructions, or a random access memory (random access memory, RAM) or another type of dynamic storage communication device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage communication device, or any other medium that can be configured to carry or store expected program code in a form of instructions or a data structure and that can be accessed by a computer, but is not limited thereto. The memory 1602 may be integrated with the processor 1601, or may exist independently, and is coupled to the processor 1601 through an input/output port (not shown in FIG. 16) of the communication apparatus 160. This is not specifically limited in embodiments of this application.

The memory 1602 is configured to store a software program for executing the solutions of this application, and the processor 1601 controls the execution. For the specific implementation, refer to the following method embodiment. Details are not described herein again.

The transceiver 1603 is configured to communicate with another communication apparatus. For example, the communication apparatus 160 is a first device, and the transceiver 1603 may be configured to communicate with a positioning terminal device. **In** addition, the transceiver 1603 may include a receiver and a transmitter (not separately shown in FIG. 16). The receiver is configured to implement a receiving function, and the transmitter is configured to implement a sending function. The transceiver 1603 may be integrated with the processor 1601, or may exist independently, and is coupled to the processor 1601 through an input/output port (not shown in FIG. 16) of the communication apparatus 160. This is not specifically limited in embodiments of this application.

It should be noted that the structure of the communication apparatus 160 shown in FIG. 16 does not constitute a limitation on the communication apparatus. An actual communication apparatus may include more or fewer components than those shown in the figure, combine some components, or have different component arrangements.

It should be noted that a specific structure of an execution body of the method provided in embodiments of this application is not specifically limited in embodiments of this application, provided that communication can be performed according to the method provided in embodiments of this application by running a program that records code of the method provided in embodiments of this application. For example, the execution body of the method provided in embodiments of this application may be a first device, or may be a functional module that can invoke a program and execute the program in the first device.

**In** other words, a related function of the first device or the positioning terminal device in embodiments of this application may be implemented by one device, or may be jointly implemented by a plurality of devices, or may be implemented by one or more functional modules in one device. This is not specifically limited in embodiments of this application. It may be understood that the foregoing function may be a network element in a hardware device, a software function running on special-purpose hardware, a combination of hardware and software, or a virtualization function instantiated on a platform (for example, a cloud platform).

The following describes in detail the relative positioning method provided in embodiments of this application with reference to FIG. 1 to FIG. 16.

It should be noted that names of messages between network elements, names of parameters in the messages, or the like in the following embodiments of this application are merely examples, and there may be other names in a specific implementation. This is not specifically limited in embodiments of this application.

Based on the foregoing communication system architecture and implementation scenario, FIG. 17 is a schematic flowchart of a relative positioning method according to an embodiment of this application. The method includes the following steps.

S1701: A first device obtains measurement result information. The measurement result information includes time measurement result information of arrival of a reference signal at a target positioning assisting node and/or a target terminal device, and angle measurement result information of the target terminal device relative to the target positioning assisting node. The target positioning assisting node includes a first positioning assisting node and a second positioning assisting node, and the target terminal device includes a first terminal device and a second terminal device.

S1702: The first device determines relative location information of the first terminal device and the second terminal device based on the measurement result information. The relative location information includes one or more of the following: relative location coordinates, a relative distance, or a relative direction. Because the relative location information is described in detail in "ranging scenario" described above. Details are not described herein again.

The following describes in detail the foregoing steps S1701 and S1702.

For S1701:

Optionally, in this embodiment of this application, the first device may be a location management network element, the first terminal device, or the second terminal device. The first positioning assisting node may be a first network device or a first assisting terminal device. The second positioning assisting node may be a second network device or a second assisting terminal device. Related descriptions of the location management network element, the assisting terminal device, and the network device are described in detail above. Details are not described herein again.

Optionally, in this embodiment of this application, a type of the reference signal may include the UL-SRS, the DL-PRS, or the SL-PRS described above. For example, the reference signal may be one or more of the following:

a first UL-SRS sent by the first terminal device to the first network device and the second network device based on a first UL-SRS resource;

a second UL-SRS sent by the second terminal device to the first network device and the second network device based on a second UL-SRS resource;

a first SL-PRS sent by the first terminal device to the first assisting terminal device and the second assisting terminal device based on a first SL-PRS resource;

a second SL-PRS sent by the second terminal device to the first assisting terminal device and the second assisting terminal device based on a second SL-PRS resource;

a first DL-PRS sent by the first network device to the first terminal device and the second terminal device based on a first DL-PRS resource;

a second DL-PRS sent by the second network device to the first terminal device and the second terminal device based on a second DL-PRS resource;

a third SL-PRS sent by the first assisting terminal device to the first terminal device and the second terminal device based on a third SL-PRS resource; or

a fourth SL-PRS sent by the second assisting terminal device to the first terminal device and the second terminal device based on a fourth SL-PRS resource.

The following describes the first UL-SRS resource and the second UL-SRS resource described above.

It should be understood that, in this embodiment of this application, the first network device and the second network device may measure, based on the first UL-SRS resource, the first UL-SRS sent by the first terminal device. The first network device and the second network device may measure, based on the second UL-SRS resource, the second UL-SRS sent by the second terminal device. The first UL-SRS resource may be configured by the first network device or the second network device for the first terminal device. The second UL-SRS resource may be configured by the first network device or the second network device for the second terminal device.

It may be understood that if the first network device is a serving network device of the first terminal device, and the second network device is a neighboring-cell network device of the first terminal device, the first UL-SRS resource is configured by the first network device for the first terminal device. If the first network device is a serving network device of the second terminal device, and the second network device is a neighboring-cell network device of the second terminal device, the second UL-SRS resource is configured by the first network device for the second terminal device.

Optionally, in this embodiment of this application, the first UL-SRS resource and/or the second UL-SRS resource may be determined by the location management network element. The location management network element may request, through a positioning information request message in an NRPPa assistance data transmission procedure request, the first network device or the second network device to configure the first UL-SRS resource or the second UL-SRS resource for a terminal device covered by a serving cell of the first network device or the second network device. In this way, the first terminal device may obtain the first UL-SRS resource, and the second terminal device may obtain the second UL-SRS resource.

Optionally, in this embodiment of this application, the first UL-SRS resource may be configured in a manner of a first UL-SRS resource set. The first UL-SRS resource set may include one or more first UL-SRS resources.

Optionally, in this embodiment of this application, the second UL-SRS resource may be configured in a manner of a second UL-SRS resource set. The second UL-SRS resource set may include one or more second UL-SRS resources.

The following describes the first SL-PRS resource and the second SL-PRS resource described above.

It should be understood that, in this embodiment of this application, the first assisting terminal device and the second assisting terminal device may measure, based on the first SL-PRS resource, the first SL-PRS sent by the first terminal device. The first assisting terminal device and the second assisting terminal device may measure, based on the second SL-PRS resource, the second SL-PRS sent by the second terminal device.

Optionally, in this embodiment of this application, the first SL-PRS resource may be configured by a serving network device of the first terminal device. The first terminal device may send the first SL-PRS resource or a first SL-PRS resource set to the first assisting terminal device and the second assisting terminal device through a PC5 message.

Alternatively, optionally, the first SL-PRS resource may be agreed on in a protocol, and is selected by the first terminal device from a resource pool. The first terminal device may send the first SL-PRS resource or a first SL-PRS resource set to the first assisting terminal device and the second assisting terminal device through a PC5 message.

Alternatively, optionally, the first SL-PRS resource may be configured by the first assisting terminal device and/or the second assisting terminal device.

It should be understood that, similar to the configuration manner of the first SL-PRS resource, the second SL-PRS resource may be configured by a serving network device of the second terminal device; or the second SL-PRS resource may be agreed on in a protocol; or the second SL-PRS resource may be configured by the first assisting terminal device and/or the second assisting terminal device. For details, refer to the related descriptions of the first SL-PRS resource. Details are not described herein again.

The following describes the first DL-PRS resource and the second DL-PRS resource described above.

Optionally, in this embodiment of this application, the first terminal device and the second terminal device may measure, based on the first DL-PRS resource, the first DL-PRS sent by the first network device. The first terminal device and the second terminal device may measure, based on the second DL-PRS resource, the second DL-PRS sent by the second network device. The first DL-PRS resource may be configured by the first network device for the first terminal device and the second terminal device. The second DL-PRS resource may be configured by the second network device for the first terminal device and the second terminal device.

It may be understood that, similar to the configuration manners of the first UL-SRS resource and the second UL-SRS resource, the first DL-PRS resource may be configured in a manner of a first DL-PRS resource set, and the second DL-PRS resource may be configured in a manner of a second DL-PRS resource set.

The following describes the third SL-PRS resource and the fourth SL-PRS resource described above.

It should be understood that, in this embodiment of this application, the first terminal device and the second terminal device may measure, based on the third SL-PRS resource, the third SL-PRS sent by the first assisting terminal device. The first terminal device and the second terminal device measure, based on the fourth SL-PRS resource, the fourth SL-PRS sent by the second assisting terminal device.

Optionally, in this embodiment of this application, the third SL-PRS resource may be configured by a serving network device of the first assisting terminal device. The first assisting terminal device may send the third SL-PRS resource or a third SL-PRS resource set to the first terminal device and the second terminal device through a PC5 message.

Alternatively, optionally, the third SL-PRS resource may be agreed on in a protocol, and is selected by the first assisting terminal device from a resource pool. The first assisting terminal device may send the third SL-PRS resource or a third SL-PRS resource set to the first terminal device and the second terminal device through a PC5 message.

Alternatively, optionally, the third SL-PRS resource may be configured by the first terminal device and/or the second terminal device.

It should be understood that, similar to the configuration manner of the third SL-PRS resource, the fourth SL-PRS resource may be configured by a serving network device of the second assisting terminal device; or the fourth SL-PRS resource may be agreed on in a protocol; or the fourth SL-PRS resource may be configured by the first terminal device and/or the second terminal device. For details, refer to the related descriptions of the third SL-PRS resource. Details are not described herein again.

Optionally, in this embodiment of this application, the time measurement result information of arrival of the reference signal at the target positioning assisting node and/or the target terminal device includes one or more of the following:

a first RTOA, where the first RTOA is a difference between a first RTOA reference time value and a TOA measurement value obtained by the first positioning assisting node by measuring a reference signal sent by the first terminal device;

a second RTOA, where the second RTOA is a difference between a second RTOA reference time value and a TOA measurement value obtained by the first positioning assisting node by measuring a reference signal sent by the second terminal device;

a third RTOA, where the third RTOA is a difference between a third RTOA reference time value and a TOA measurement value obtained by the second positioning assisting node by measuring the reference signal sent by the first terminal device;

a fourth RTOA, where the fourth RTOA is a difference between a fourth RTOA reference time value and a TOA measurement value obtained by the second positioning assisting node by measuring the reference signal sent by the second terminal device;

a first RSTD, where the first RSTD is a difference between the TOA measurement value obtained by the first positioning assisting node by measuring the reference signal sent by the first terminal device and the TOA measurement value obtained by the first positioning assisting node by measuring the reference signal sent by the second terminal device;

a second RSTD, where the second RSTD is a difference between the TOA measurement value obtained by the second positioning assisting node by measuring the reference signal sent by the first terminal device and the TOA measurement value obtained by the second positioning assisting node by measuring the reference signal sent by the second terminal device;

a third RSTD, where the third RSTD is a difference between a TOA measurement value obtained by the first terminal device by measuring a reference signal sent by the first positioning assisting node and a TOA measurement value obtained by the first terminal device by measuring a reference signal sent by the second positioning assisting node;

a fourth RSTD, where the fourth RSTD is a difference between a TOA measurement value obtained by the second terminal device by measuring the reference signal sent by the first positioning assisting node and a TOA measurement value obtained by the second terminal device by measuring the reference signal sent by the second positioning assisting node;

a difference between the first RTOA and the second RTOA;
a difference between the third RTOA and the fourth RTOA;
a difference between the first RTOA and the third RTOA;
a difference between the second RTOA and the fourth RTOA;
a difference between the first RSTD and the second RSTD; or
a difference between the third RSTD and the fourth RSTD.

The foregoing TOA measurement value may be "TOA measurement value" in "positioning method" in the preamble portion of the specific implementation. For details, refer to the descriptions in the preamble portion, and details are not described herein again.

In other words, in this embodiment of this application, the time measurement result information of arrival of the reference signal at the target positioning assisting node and/or the target terminal device is time measurement result information (for example, the first RTOA and the second RTOA, or the first RSTD) of the first positioning assisting node relative to the first terminal device and the second terminal device, and time measurement result information (for example, the third RTOA and the fourth RTOA, or the second RSTD) of the second positioning assisting node relative to the first terminal device and the second terminal device; or time measurement result information (for example, the third RSTD) of the first terminal device relative to the first positioning assisting node and the second positioning assisting node, and time measurement result information (for example, the fourth RSTD) of the second terminal device relative to the first positioning assisting node and the second positioning assisting node.

It may be understood that a distance between two devices may be obtained by multiplying a time difference between arrival of the reference signal at the two devices by a speed of light. Therefore, the time measurement result information of arrival of the reference signal at the target positioning assisting node and/or the target terminal device may indicate a distance between the target positioning assisting node and the target terminal device.

For example, the first RSTD, or the difference between the first RTOA and the second RTOA may indicate a first distance difference. The first distance difference is a distance difference between a distance from the first positioning assisting node to the first terminal device and a distance from the first positioning assisting node to the second terminal device.

For example, the second RSTD, or the difference between the third RTOA and the fourth RTOA may indicate a second distance difference. The second distance difference is a distance difference between a distance from the second positioning assisting node to the first terminal device and a distance from the second positioning assisting node to the second terminal device.

For example, the third RSTD, or the difference between the first RTOA and the third RTOA may indicate a third distance difference. The third distance difference is a difference between a distance from the first terminal device to the first positioning assisting node and a distance from the first terminal device to the second positioning assisting node.

For example, the fourth RSTD, or the difference between the second RTOA and the fourth RTOA may indicate a fourth distance difference. The fourth distance difference is a difference between a distance from the second terminal device to the first positioning assisting node and a distance from the second terminal device to the second positioning assisting node.

It should be understood that, when the first device is the location management network element, the first device can obtain the first RTOA reference time value to the fourth RTOA reference time value. Further, the first distance difference may be obtained based on the difference between the first RTOA and the second RTOA, the second distance difference may be obtained based on the difference between the third RTOA and the second RTOA, the third distance difference may be obtained based on the difference between the first RTOA and the third RTOA, and the fourth distance difference may be obtained based on the difference between the second RTOA and the fourth RTOA.

For ease of description, the difference between the first RTOA and the second RTOA may be referred to as a difference of the first positioning assisting node. The difference between the third RTOA and the fourth RTOA may be referred to as a difference of the second positioning assisting node. The difference between the first RTOA and the third RTOA may be referred to as a difference of the first terminal device. The difference between the second RTOA and the fourth RTOA may be referred to as a difference of the second terminal device.

It may be understood that, in this embodiment of this application, the difference between the first RSTD and the second RSTD may indicate a difference between the first distance difference and the second distance difference. Alternatively, a difference between the difference of the first positioning assisting node and the difference of the second positioning assisting node may indicate the difference between the first distance difference and the second distance difference.

It may be further understood that, in this embodiment of this application, the difference between the third RSTD and the fourth RSTD may indicate a difference between the third distance difference and the fourth distance difference. Alternatively, a difference between the difference of the first terminal device and the difference of the second terminal device may indicate the difference between the third distance difference and the fourth distance difference.

Optionally, in this embodiment of this application, the difference between the first distance difference and the second distance difference may be used to determine the relative location information of the first terminal device and the second terminal device.

Optionally, in this embodiment of this application, the difference between the third distance difference and the fourth distance difference may be used to determine the relative location information of the first terminal device and the second terminal device.

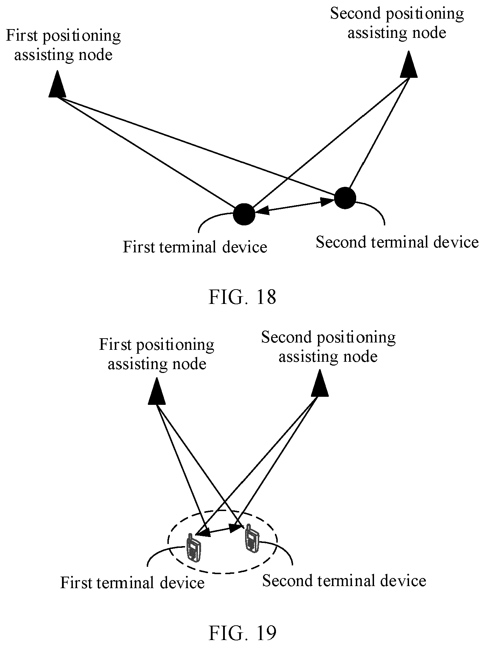

For example, as shown in FIG. 18, from a perspective of a geometric relationship, a triangle formed by the first positioning assisting node, the first terminal device, and the second terminal device and a triangle formed by the second positioning assisting node, the first terminal device, and the second terminal device have a same edge, that is, a relative distance between the first terminal device and the second terminal device. Therefore, the relative distance between the first terminal device and the second terminal device may be represented based on the first distance difference and angle information corresponding to the first distance difference, and may alternatively be represented based on the second distance difference and angle information corresponding to the second distance difference, so that the difference between the first distance difference and the second distance difference may represent the relative distance and a relative direction between the first terminal device and the second terminal device. In other words, in this embodiment of this application, the relative location information of the first terminal device and the second terminal device may be determined without obtaining location information of the first positioning assisting node and the second positioning assisting node, and absolute positioning does not need to be separately performed on the first terminal device and the second terminal device to determine the relative location information. Instead, the difference between the first RSTD and the second RSTD, the difference between the third RSTD and the fourth RSTD, or the difference between every two of the first RTOA to the fourth RTOA may indicate the relative distance and the relative direction between the first terminal device and the second terminal device. Therefore, positioning accuracy can be improved.

In addition, in this embodiment of this application, the first RSTD, the second RSTD, the third RSTD, the fourth RSTD, or the difference between every two of the first RTOA to the fourth RTOA is calculated as a difference between time measurement values, thereby eliminating start time at which a device performs time measurement. Therefore, time asynchronization (different start time) between the first positioning assisting node and the second positioning assisting node, or time asynchronization between the first terminal device and the second terminal device does not affect a relative positioning result in embodiments of this application.

It should be understood that the difference between the third distance difference and the fourth distance difference may also indicate the relative location information of the first terminal device and the second terminal device.

Optionally, in this embodiment of this application, there may be one or more first positioning assisting nodes. There may be one or more second positioning assisting nodes. In other words, a plurality of differences between the first distance difference and the second distance difference may be introduced, to determine the relative location information of the first terminal device and the second terminal device.

It may be understood that, because the first positioning assisting node may be the first network device or the first assisting terminal device, the second positioning assisting node may be the second network device or the second assisting terminal device, and the type of the reference signal may be the UL-SRS, the DL-PRS, or the SL-PRS, the following separately describes the first RTOA to the fourth RTOA, the first RSTD and the second RSTD, and the third RSTD and the fourth RSTD in this embodiment of this application in two cases.

Case 1:

In the case 1, the first positioning assisting node is the first network device, and the second positioning assisting node is the second network device.

For example, the first RTOA to the fourth RTOA are as follows:

The first RTOA may be a first UL-RTOA. The first RTOA reference time value may be a first UL-RTOA reference time value. The first UL-RTOA may be a difference between a TOA measurement value obtained by the first network device by measuring a first UL-SRS sent by the first terminal device and the first UL-RTOA reference time value.

The second RTOA may be a second UL-RTOA. The second RTOA reference time value may be a second UL-RTOA reference time value. The second UL-RTOA may be a difference between a TOA measurement value obtained by the first network device by measuring a second UL-SRS sent by the second terminal device and the second UL-RTOA reference time value.

The third RTOA may be a third UL-RTOA. The third RTOA reference time value may be a third UL-RTOA reference time value. The third UL-RTOA may be a difference between a TOA measurement value obtained by the second network device by measuring a first UL-SRS sent by the first terminal device and the third UL-RTOA reference time value.

The fourth RTOA may be a fourth UL-RTOA. The fourth RTOA reference time value may be a fourth UL-RTOA reference time value. The fourth UL-RTOA may be a difference between a TOA measurement value obtained by the second network device by measuring a second UL-SRS sent by the second terminal device and the fourth UL-RTOA reference time value.

It should be understood that the first UL-RTOA reference time value may be different from the second UL-RTOA reference time value, and the third UL-RTOA reference time value may be different from the fourth UL-RTOA reference time value. The first UL-RTOA reference time value may be the same as or different from the third UL-RTOA reference time value, and the second UL-RTOA reference time value may be the same as or different from the fourth UL-RTOA reference time value. This is not specifically limited in embodiments of this application.

For example, when nominal start time of SFNs #0 provided in SFN initialization time of the first network device and the second network device is the same, the first UL-RTOA reference time value may be the same as the third UL-RTOA reference time value, and the second UL-RTOA reference time value may be the same as the fourth UL-RTOA reference time value.

It may be understood that, for the first UL-RTOA reference time value, the second UL-RTOA reference time value, the third UL-RTOA reference time value, and the fourth UL-RTOA reference time value, refer to the foregoing related descriptions of "UL-RTOA". Details are not described herein again.

For example, the first RSTD and the second RSTD are as follows:

The first RSTD may be a first UL-RSTD. The first UL-RSTD is a difference between a TOA measurement value obtained by the first network device by measuring a first UL-SRS sent by the first terminal device and a TOA measurement value obtained by the first network device by measuring a second UL-SRS sent by the second terminal device.

The second RSTD may be a second UL-RSTD. The second UL-RSTD is a difference between a TOA measurement value obtained by the second network device by measuring a first UL-SRS sent by the first terminal device and a TOA measurement value obtained by the second network device by measuring a second UL-SRS sent by the second terminal device.

It may be understood that, for the first UL-RSTD and the second UL-RSTD, refer to the foregoing related descriptions of "UL-RSTD". Details are not described herein again.

For example, the third RSTD and the fourth RSTD are as follows:

The third RSTD may be a first DL-RSTD. The first DL-RSTD is a difference between a TOA measurement value obtained by the first terminal device by measuring a first DL-PRS sent by the first network device and a TOA measurement value obtained by the first terminal device by measuring a second DL-PRS sent by the second network device.

The fourth RSTD may be a second DL-RSTD. The second DL-RSTD is a difference between a TOA measurement value obtained by the second terminal device by measuring a first DL-PRS sent by the first network device and a TOA measurement value obtained by the second terminal device by measuring a second DL-PRS sent by the second network device.

It may be understood that, for the first DL-RSTD and the second DL-RSTD, refer to the foregoing related descriptions of "DL-RSTD". Details are not described herein again.

Case 2:

In the case 2, the first positioning assisting node is the first assisting terminal device, and the second positioning assisting node is the second assisting terminal device.

For example, the first RTOA to the fourth RTOA are as follows:

The first RTOA may be a first SL-RTOA. The first RTOA reference time value may be a first SL-RTOA reference time value. The first SL-RTOA may be a difference between a TOA measurement value obtained by the first assisting terminal device by measuring a first SL-PRS sent by the first terminal device and the first SL-RTOA reference time value.

The second RTOA may be a second SL-RTOA. The second RTOA reference time value may be a second SL-RTOA reference time value. The second SL-RTOA may be a difference between a TOA measurement value obtained by the first assisting terminal device by measuring a second SL-PRS sent by the second terminal device and the second SL-RTOA reference time value.

The third RTOA may be a third SL-RTOA. The third RTOA reference time value may be a third SL-RTOA reference time value. The third SL-RTOA may be a difference between a TOA measurement value obtained by the second assisting terminal device by measuring a first SL-PRS sent by the first terminal device and the third SL-RTOA reference time value.

The fourth RTOA may be a fourth SL-RTOA. The fourth RTOA reference time value may be a fourth SL-RTOA reference time value. The fourth SL-RTOA may be a difference between a TOA measurement value obtained by the second assisting terminal device by measuring a second SL-PRS sent by the second terminal device and the fourth SL-RTOA reference time value.

It should be understood that the first SL-RTOA reference time value may be different from the second SL-RTOA reference time value, and the third SL-RTOA reference time value may be different from the fourth SL-RTOA reference time value. The first SL-RTOA reference time value may be the same as or different from the third SL-RTOA reference time value, and the second SL-RTOA reference time value may be the same as or different from the fourth SL-RTOA reference time value. This is not specifically limited in embodiments of this application.

It may be understood that, for the first SL-RTOA reference time value, the second SL-RTOA reference time value, the third SL-RTOA reference time value, and the fourth SL-RTOA reference time value, refer to the foregoing related descriptions of "SL-RTOA". Details are not described herein again.

For example, the first RSTD and the second RSTD are as follows:

The first RSTD may be a first SL-RSTD. The first SL-RSTD is a difference between a TOA measurement value obtained by the first assisting terminal device by measuring a first SL-PRS sent by the first terminal device and a TOA measurement value obtained by the first assisting terminal device by measuring a second SL-PRS sent by the second terminal device.

The second RSTD may be a second SL-RSTD. The second SL-RSTD is a difference between a TOA measurement value obtained by the second assisting terminal device by measuring a first SL-PRS sent by the first terminal device and a TOA measurement value obtained by the second assisting terminal device by measuring a second SL-PRS sent by the second terminal device.

It may be understood that, for the first SL-RSTD and the second SL-RSTD, refer to the foregoing related descriptions of "SL-RSTD". Details are not described herein again.

For example, the third RSTD and the fourth RSTD are as follows:

The third RSTD may be a third SL-RSTD. The third SL-RSTD is a difference between a TOA measurement value obtained by the first terminal device by measuring a third SL-PRS sent by the first assisting terminal device and a TOA measurement value obtained by the first terminal device by measuring a fourth SL-PRS sent by the second assisting terminal device.

The fourth RSTD may be a fourth SL-RSTD. The fourth SL-RSTD is a difference between a TOA measurement value obtained by the second terminal device by measuring a third SL-PRS sent by the first assisting terminal device and a TOA measurement value obtained by the second terminal device by measuring a fourth SL-PRS sent by the second assisting terminal device.

It may be understood that, for the third SL-RSTD and the fourth SL-RSTD, refer to the foregoing related descriptions of "SL-RSTD". Details are not described herein again.

It should be understood that the first SL-RTOA reference time value may be different from the second SL-RTOA reference time value, and the third SL-RTOA reference time value may be different from the fourth SL-RTOA reference time value. The first SL-RTOA reference time value may be the same as or different from the third SL-RTOA reference time value, and the second SL-RTOA reference time value may be the same as or different from the fourth SL-RTOA reference time value. This is not specifically limited in embodiments of this application.

It may be understood that, for the first SL-RTOA reference time value, the second SL-RTOA reference time value, the third SL-RTOA reference time value, and the fourth SL-RTOA reference time value, refer to the foregoing related descriptions of "SL-RTOA". Details are not described herein again.

The following describes the measurement result information in this embodiment of this application by using several different examples.

Example 1: A scenario in this example is that the first device is the location management network element, the first positioning assisting node is the first network device, the second positioning assisting node is the second network device, and the first positioning assisting node and the second positioning assisting node perform positioning measurement and send positioning measurement result information to the location management network element.

In a possible implementation, time measurement result information in the positioning measurement result information may be in a form of no difference. For example, with reference to the related descriptions of the foregoing case 1 and case 2, the time measurement result information of arrival of the reference signal at the target positioning assisting node and/or the target terminal device may include:

the first UL-RTOA, the second UL-RTOA, the third UL-RTOA, and the fourth UL-RTOA.

In another possible implementation, time measurement result information in the positioning measurement result information may be in a form of a single difference. For example, the time measurement result information of arrival of the reference signal at the target positioning assisting node and/or the target terminal device may include:

the difference between the first UL-RTOA and the second UL-RTOA, and the difference between the third UL-RTOA and the fourth UL-RTOA; or

the first UL-RSTD and the second UL-RSTD.

Example 2: A scenario in this example is that the first device is the location management network element, the first positioning assisting node is the first network device, the second positioning assisting node is the second network device, and the first terminal device and the second terminal device perform positioning measurement and send positioning measurement result information to the location management network element. Time measurement result information in the positioning measurement result information may be in a form of a single difference. For example, the time measurement result information of arrival of the reference signal at the target positioning assisting node and/or the target terminal device may include:

the first DL-RSTD and the second DL-RSTD.

Example 3: A scenario in this example is that the first device is the location management network element, the first positioning assisting node is the first assisting terminal device, the second positioning assisting node is the second assisting terminal device, and the first positioning assisting node and the second positioning assisting node perform positioning measurement and send positioning measurement result information to the location management network element.

In a possible implementation, time measurement result information in the positioning measurement result information may be in a form of no difference. For example, with reference to the related descriptions of the foregoing case 1 and case 2, the time measurement result information of arrival of the reference signal at the target positioning assisting node and/or the target terminal device may include:

the first SL-RTOA, the second SL-RTOA, the third SL-RTOA, and the fourth SL-RTOA.

In another possible implementation, time measurement result information in the positioning measurement result information may be in a form of a single difference. For example, the time measurement result information of arrival of the reference signal at the target positioning assisting node and/or the target terminal device may include:

the difference between the first SL-RTOA and the second SL-RTOA, and the difference between the third UL-RTOA and the fourth UL-RTOA;
the first SL-RSTD and the second SL-RSTD.

Example 4: A scenario in this example is that the first device is the location management network element, the first positioning assisting node is the first assisting terminal device, the second positioning assisting node is the second assisting terminal device, and the first terminal device and the second terminal device perform positioning measurement and send positioning measurement result information to the location management network element. Time measurement result information in the positioning measurement result information may be in a form of a single difference. For example, the time measurement result information of arrival of the reference signal at the target positioning assisting node and/or the target terminal device may include:
the third DL-RSTD and the fourth DL-RSTD.

Example 5: A scenario in this example is that the first device is the first terminal device, the first positioning assisting node is the first network device, the second positioning assisting node is the second network device, and the first positioning assisting node and the second positioning assisting node perform positioning measurement and send positioning measurement result information to the location management network element. Correspondingly, the location management network element receives the positioning measurement result information from the first positioning assisting node and the second positioning assisting node, and sends the positioning measurement result information to the first terminal device.

In a possible implementation, time measurement result information in the positioning measurement result information may be in a form of a single difference. For example, the time measurement result information of arrival of the reference signal at the target positioning assisting node and/or the target terminal device may include:

the difference between the first UL-RTOA and the third UL-RTOA, and the difference between the second UL-RTOA and the fourth UL-RTOA; or
the first UL-RSTD and the second UL-RSTD.

In another possible implementation, time measurement result information in the positioning measurement result information may be in a form of double differences. For example, the time measurement result information of arrival of the reference signal at the target positioning assisting node and/or the target terminal device may include:
the difference between the first UL-RSTD and the second UL-RSTD.

Before the angle measurement result information in this embodiment of this application is described, an example in an application scenario in this embodiment of this application is first described with reference to "ranging scenario" in the preamble portion of the specific implementation.

For example, FIG. 19 is a diagram of an application scenario according to an embodiment of this application. As shown in FIG. 19, a distance between the first terminal device and the second terminal device is short (for example, less than 20 m), and a distance between the first terminal device and the first positioning assisting node and a distance between the first terminal device and the second positioning assisting node are long. In this way, the first terminal device and the second terminal device are viewed from the first positioning assisting node, and are approximately located in a same direction, that is, an AOA or an AOD of the first terminal device relative to the first positioning assisting node is approximately the same as an AOA or an AOD of the second terminal device relative to the first positioning assisting node, and an AOA or an AOD of the first terminal device relative to the second positioning assisting node is approximately the same as an AOA or an AOD of the second terminal device relative to the second positioning assisting node.

It may be understood that, in this embodiment of this application, the angle measurement result information of the target terminal device relative to the target positioning assisting node is the same as angle measurement result information of the target positioning assisting node relative to the target terminal device, and may be interchanged for description. This is uniformly described herein, and details are not described below again.

Optionally, in this embodiment of this application, the angle measurement result information of the target terminal device relative to the target positioning assisting node includes one or more of the following angle measurement values:

a first angle measurement value, where the first angle measurement value is an angle measurement value of the first terminal device relative to the first positioning assisting node;
a second angle measurement value, where the second angle measurement value is an angle measurement value of the second terminal device relative to the first positioning assisting node;
a third angle measurement value, where the third angle measurement value is an angle measurement value of the first terminal device relative to the second positioning assisting node;
a fourth angle measurement value, where the fourth angle measurement value is an angle measurement value of the second terminal device relative to the second positioning assisting node;

a fifth angle measurement value, where the fifth angle measurement value is a value between the first angle measurement value and the second angle measurement value; and

a sixth angle measurement value, where the sixth angle measurement value is a value between the third angle measurement value and the fourth angle measurement value, where

a measurement value type corresponding to the angle measurement value includes one or more of the following: an AOA, an AOD, an RSRP, or an RSRPP of at least one path. For the AOA, the AOD, the RSRP, or the RSRPP of the at least one path, refer to the related descriptions in the preamble portion in "positioning method" of the specific implementation. Details are not described herein again.

It should be understood that, with reference to the application scenario shown in FIG. 19, when the measurement value type corresponding to the angle measurement value is the AOA or the AOD, a difference between the first angle measurement value and the second angle measurement value is less than or equal to a first threshold, and a difference between the third angle measurement value and the fourth angle measurement value is less than or equal to a second threshold. For example, the first threshold may be 1°, 2°, or 5°, and the second threshold may be 1°, 2°, or 5°. This is not specifically limited in embodiments of this application.

Optionally, in this embodiment of this application, the fifth angle measurement value is an angle measurement value of the first terminal device and the second terminal device relative to the first positioning assisting node. When the measurement value type corresponding to the angle measurement value is the AOA or the AOD, the fifth angle measurement value may be the value between the first angle measurement value and the second angle measurement value, for example, an average value of the first angle measurement value and the second angle measurement value.

Optionally, in this embodiment of this application, the sixth angle measurement value is an angle measurement value of the first terminal device and the second terminal device relative to the second positioning assisting node. When the measurement value type corresponding to the angle measurement value is the AOA or the AOD, the sixth angle measurement value may be the value between the third angle measurement value and the fourth angle measurement value, for example, an average value of the third angle measurement value and the fourth angle measurement value.

Optionally, in this embodiment of this application, the angle measurement result information of the target terminal device relative to the target positioning assisting node may include the first angle measurement value and the third angle measurement value; or the first angle measurement value and the fourth angle measurement value; or the second angle measurement value and the third angle measurement value; or the second angle measurement value and the fourth angle measurement value.

Alternatively, optionally, in this embodiment of this application, the angle measurement result information of the target terminal device relative to the target positioning assisting node may include the fifth angle measurement value and the sixth angle measurement value.

In other words, AOAs (or AODs) of the first terminal device and the second terminal device relative to the first positioning assisting node may be the same, or AOAs (or AODs) of the first terminal device and the second terminal device relative to the second positioning assisting node may be the same.

Alternatively, optionally, in this embodiment of this application, the angle measurement result information of the target terminal device relative to the target positioning assisting node may include the first angle measurement value, the second angle measurement value, the third angle measurement value, and the fourth angle measurement value.

The following separately describes the first angle measurement value to the sixth angle measurement value in this embodiment of this application based on the case 1 and the case 2 described above.

Case 1:

In the case 1, the first positioning assisting node is the first network device, and the second positioning assisting node is the second network device.

For example, the first angle measurement value to the sixth angle measurement value are as follows:

The first angle measurement value may be a first UL-AOA; or a first DL-AOD; or a first DL-PRS-RSRP and/or a first DL-PRS-RSRPP of at least one path that correspond/corresponds to the first DL-AOD.

The first UL-AOA may be an included angle that is between a reference direction and a direction of arrival of a first UL-SRS and that is observed from the first network device when the first terminal device sends the first UL-SRS to the first network device. The first UL-AOA includes a first UL-A-AOA and/or a first UL-Z-AOA.

The first DL-AOD may be an included angle that is between a reference direction and a direction of departure of a first DL-PRS and that is observed from the first network device when the first network device sends the first DL-PRS to the first terminal device. The first DL-AOD includes a first DL-A-AOD and/or a first DL-Z-AOD.

It may be understood that, for the first UL-AOA, the first DL-AOD, the first DL-PRS-RSRP, and/or the first DL-PRS-RSRPP of the at least one path, refer to the related description of "positioning method" in the preamble portion of the specific implementation. Details are not described herein again.

The second angle measurement value may be a second UL-AOA; or a second DL-AOD; or a second DL-PRS-RSRP and/or a second DL-PRS-RSRPP of at least one path that correspond/corresponds to the second DL-AOD.

The second UL-AOA may be an included angle that is between a reference direction and a direction of arrival of a second UL-SRS and that is observed from the first network device when the second terminal device sends the second UL-SRS to the first network device. The second UL-AOA includes a second UL-A-AOA and/or a second UL-Z-AOA.

The second DL-AOD may be an included angle that is between a reference direction and a direction of departure of a first DL-PRS and that is observed from the first network device when the first network device sends the first DL-PRS to the second terminal device. The second DL-AOD includes a second DL-A-AOD and/or a second DL-Z-AOD.

The third angle measurement value may be a third UL-AOA; or a third DL-AOD; or a third DL-PRS-RSRP and/or a third DL-PRS-RSRPP of at least one path that correspond/corresponds to the third DL-AOD.

The third UL-AOA may be an included angle that is between a reference direction and a direction of arrival of a first UL-SRS and that is observed from the second network device when the first terminal device sends the first UL-SRS to the second network device. The third UL-AOA includes a third UL-A-AOA and/or a third UL-Z-AOA.

The third DL-AOD may be an included angle between a reference direction and a direction of departure of a second DL-PRS and that is observed from the second network device when the second network device sends the second DL-PRS to the first terminal device. The third DL-AOD includes a third DL-A-AOD and/or a third DL-Z-AOD.

The fourth angle measurement value may be a fourth UL-AOA; or a fourth DL-AOD; or a fourth DL-PRS-RSRP and/or a fourth DL-PRS-RSRPP of at least one path that correspond/corresponds to the fourth DL-AOD.

The fourth UL-AOA may be an included angle that is between a reference direction and a direction of arrival of a second UL-SRS and that is observed from the second network device when the second terminal device sends the second UL-SRS to the second network device. The fourth UL-AOA includes a fourth UL-A-AOA and/or a fourth UL-Z-AOA.

The fourth DL-AOD may be an included angle between a reference direction and a direction of departure of a second DL-PRS and that is observed from the second network device when the second network device sends the second DL-PRS to the second terminal device. The fourth DL-AOD includes a fourth DL-A-AOD and/or a fourth DL-Z-AOD.

The fifth angle measurement value may be the value between the first angle measurement value and the second angle measurement value. For example, the fifth angle measurement value may be an average value of the first UL-AOA and the second UL-AOA; or the fifth angle measurement value may be an average value of the first DL-AOD and the second DL-AOD.

The sixth angle measurement value may be the value between the third angle measurement value and the fourth angle measurement value. For example, the sixth angle measurement value may be an average value of the third UL-AOA and the fourth UL-AOA; or the sixth angle measurement value may be an average value of the third DL-AOD and the fourth DL-AOD.

Case 2:

In the case 2, the first positioning assisting node is the first assisting terminal device, and the second positioning assisting node is the second assisting terminal device.

For example, the first angle measurement value to the sixth angle measurement value are as follows:

The first angle measurement value may be a first SL-AOA; or a first SL-AOD; or a first SL-PRS-RSRP and/or a first SL-PRS-RSRPP of at least one path that correspond/corresponds to the first SL-AOD.

The first SL-AOA may be an included angle that is between a reference direction and a direction of arrival of a first SL-PRS and that is observed from the first assisting terminal device when the first terminal device sends the first SL-PRS to the first assisting terminal device. The first SL-AOA includes a first SL-A-AOA and/or a first SL-Z-AOA.

The first SL-AOD may be an included angle that is between a reference direction and a direction of departure of a third SL-PRS and that is observed from the first assisting terminal device when the first assisting terminal device sends the third SL-PRS to the first terminal device. The first SL-AOD includes a first SL-A-AOD and/or a first SL-Z-AOD.

It may be understood that, for the first SL-AOA, the first SL-AOD, the first SL-PRS-RSRP, and/or the first SL-PRS-RSRPP of the at least one path, refer to the related description of the foregoing "positioning method". Details are not described herein again.

The second angle measurement value may be a second SL-AOA; or a second SL-AOD; or a second SL-PRS-RSRP and/or a second SL-PRS-RSRPP of at least one path that correspond/corresponds to the second SL-AOD.

The second SL-AOA may be an included angle that is between a reference direction and a direction of arrival of a second SL-PRS and that is observed from the first assisting terminal device when the second terminal device sends the second SL-PRS to the first assisting terminal device. The second SL-AOA includes a second SL-A-AOA and/or a second SL-Z-AOA.

The second SL-AOD may be an included angle that is between a reference direction and a direction of departure of a third SL-PRS and that is observed from the first assisting terminal device when the first assisting terminal device sends the third SL-PRS to the second terminal device. The second SL-AOD includes a second SL-A-AOD and/or a second SL-Z-AOD.

The third angle measurement value may be a third SL-AOA; or a third SL-AOD; or a third SL-PRS-RSRP and/or a third SL-PRS-RSRPP of at least one path that correspond/corresponds to the third SL-AOD.

The third SL-AOA may be an included angle that is between a reference direction and a direction of arrival of a first SL-PRS and that is observed from the second assisting terminal device when the first terminal device sends the first SL-PRS to the second assisting terminal device. The third SL-AOA includes a third SL-A-AOA and/or a third SL-Z-AOA.

The third SL-AOD may be an included angle that is between a reference direction and a direction of departure of a fourth SL-PRS and that is observed from the second assisting terminal device when the second assisting terminal device sends the fourth SL-PRS to the first terminal device. The third SL-AOD includes a third SL-A-AOD and/or a third SL-Z-AOD.

The fourth angle measurement value may be a fourth SL-AOA; or a fourth SL-AOD; or a fourth SL-PRS-RSRP and/or a fourth SL-PRS-RSRPP of at least one path that correspond/corresponds to the fourth SL-AOD.

The fourth SL-AOA may be an included angle that is between a reference direction and a direction of arrival of a second SL-PRS and that is observed from the second assisting terminal device when the second terminal device sends the second SL-PRS to the second assisting terminal device. The fourth SL-AOA includes a fourth SL-A-AOA and/or a fourth SL-Z-AOA.

The fourth SL-AOD may be an included angle that is between a reference direction and a direction of departure of a fourth SL-PRS and that is observed from the second assisting terminal device when the second assisting terminal device sends the fourth SL-PRS to the second terminal device. The fourth SL-AOD includes a fourth SL-A-AOD and/or a fourth SL-Z-AOD.

The fifth angle measurement value may be the value between the first angle measurement value and the second angle measurement value. For example, the fifth angle measurement value may be an average value of the first SL-AOA and the second SL-AOA; or the fifth angle measurement value may be an average value of the first SL-AOD and the second SL-AOD.

The sixth angle measurement value may be the value between the third angle measurement value and the fourth angle measurement value. For example, the sixth angle measurement value may be an average value of the third SL-AOA and the fourth SL-AOA; or the sixth angle measurement value may be an average value of the third SL-AOD and the fourth SL-AOD.

Optionally, in this embodiment of this application, the AOA includes a first arrival path AOA and/or a non-first arrival path AOA; or the AOD includes a first arrival path AOD and/or a non-first arrival path AOD. The first arrival path or the non-first arrival path may be an NLOS path.

Optionally, in this embodiment of this application, when the first arrival path or the non-first arrival path is the NLOS path, the AOA may further include an NLOS path AOA. The NLOS path AOA may refer to: When a UL-SRS sent by a terminal device arrives at a network device via an intermediate device, an included angle that is between a reference direction and a direction of arrival of the UL-SRS to the intermediate device and that is observed from the intermediate device; or when an SL-PRS sent by a terminal device arrives at an assisting terminal device via an intermediate device, an included angle that is between a reference direction and a direction of arrival of the SL-PRS to the intermediate device and that is observed from the intermediate device.

It should be understood that, an NLOS path AOD may refer to: When a DL-PRS sent by a network device arrives at a terminal device via an intermediate device, an included angle that is between a reference direction and a direction of departure of the DL-PRS and that is observed from the intermediate device; or when an SL-PRS sent by an assisting terminal device arrives at a terminal device via an intermediate device, an included angle that is between a reference direction and a direction of departure of the SL-PRS and that is observed from the assisting terminal device.

Optionally, in this embodiment of this application, the intermediate device may include but is not limited to a reflector, a scatterer, an intelligent reflecting surface, an intelligent relay station, or the like.

Optionally, in this embodiment of this application, the intermediate device may be a reflector, a scatterer, an intelligent reflecting surface, or the like that is closest to the terminal device.

Optionally, in this embodiment of this application, the measurement result information further includes one or more of the following:

identification information of the first positioning assisting node, identification information of the second positioning assisting node, a PCI corresponding to the first positioning assisting node, a PCI corresponding to the second positioning assisting node, a GCI corresponding to the first positioning assisting node, a GCI corresponding to the second positioning assisting node, resource identification information of the reference signal, measurement time information of the reference signal, or beam index information of the reference signal. The identification information of the first positioning assisting node may be used to identify the first positioning assisting node. The identification information of the second positioning assisting node may be used to identify the second positioning assisting node. The PCI and the GCI that correspond to the first positioning assisting node may be used to identify a cell in which the first positioning assisting node sends the reference signal. The PCI and the GCI that correspond to the second positioning assisting node may be used to identify a cell in which the second positioning assisting node sends the reference signal.

It may be understood that, for the resource identification information of the reference signal, refer to the related descriptions of "reference signal configuration" in the preamble portion of the specific implementation. Details are not described herein again.

Optionally, in this embodiment of this application, the time measurement information of the reference signal may include a measurement timestamp. For the measurement timestamp, refer to the related descriptions of Table 2 in "positioning procedure" in the preamble portion of the specific implementation. Details are not described herein again.

Optionally, in this embodiment of this application, the beam index information of the reference signal may include a DL-PRS receive beam index. For the DL-PRS receive beam index, refer to the related descriptions of Table 2 in "positioning procedure" in the preamble portion of the specific implementation. Details are not described herein again.

Optionally, in this embodiment of this application, the time measurement result information of arrival of the reference signal at the target positioning assisting node and/or the target terminal device includes first time measurement result information and second time measurement result information. The first time measurement result information includes time measurement result information of arrival of the reference signal at the first positioning assisting node. The second time measurement result information includes time measurement result information of arrival of the reference signal at the second positioning assisting node.

For example, the first time measurement result information may include: the first RTOA and the second RTOA; or the first RSTD; or the difference between the first RTOA and the second RTOA. The second time measurement result information may include: the third RTOA and the fourth RTOA; or the second RTSD; or the difference between the third RTOA and the fourth RTOA.

Optionally, in this embodiment of this application, the angle measurement result information of the target terminal device relative to the target positioning assisting node includes first angle measurement result information and second angle measurement result information. The first angle measurement result information includes angle measurement result information of the target terminal device relative to the first positioning assisting node. The second angle measurement result information includes angle measurement result information of the target terminal device relative to the second positioning assisting node. A measurement value type corresponding to an angle measurement value in the first angle measurement result information and an angle measurement value in the second angle measurement result information is an AOA.

For example, the first angle measurement result information may include: the first angle measurement value; or the second angle measurement value; or the first angle measurement value and the second angle measurement value; or the fifth angle measurement value. The second angle measurement result information may include: the third angle measurement value; or the fourth angle measurement value; or the third angle measurement value and the fourth angle measurement value; or the sixth angle measurement value.

Optionally, in this embodiment of this application, the first device is a location management network element, and that a first device obtains measurement result information (S1701) includes:

S 1701a: The first device sends first measurement request information to the first positioning assisting node. The first measurement request information is used to request the first positioning assisting node to send the first time measurement result information and the first angle measurement result information to the first device.

Optionally, in this embodiment of this application, the first measurement request information includes a reference signal configuration for requesting the first positioning assisting node to perform measurement. The reference signal configuration for requesting the first positioning assisting node to perform measurement may include a first reference signal resource and a second reference signal resource. The first reference signal resource is used by the first terminal device to send a first reference signal to the first positioning assisting node. The second reference signal resource is used by the second terminal device to send a second reference signal to the second positioning assisting node. For example, when the first positioning assisting node is the first network device, the first reference signal resource may be the first UL-SRS resource described above, and the second reference signal resource may be the second UL-SRS resource described above. Alternatively, when the first positioning assisting node is the first assisting terminal device, the first reference signal resource may be the first SL-PRS resource described above, and the second reference signal resource may be the second SL-PRS resource described above.

Alternatively, optionally, the reference signal configuration for requesting the first positioning assisting node to perform measurement may include a first reference signal resource set and a second reference signal resource set. The first reference signal resource set includes one or more first reference signal resources. The second reference signal resource set includes one or more second reference signal resources.

**In** other words, the first device may request the first positioning assisting node to simultaneously measure the two reference signal resources, that is, request the first positioning assisting node to simultaneously measure the first reference signal sent by the first terminal device and the second reference signal sent by the second terminal device.

Optionally, in this embodiment of this application, the first measurement request information further includes a measurement value type expected by the first device. The measurement value type expected by the first device may include a time measurement value type and an angle measurement value type. The time measurement value type may include one or more of the following: a UL-RTOA, an SL-RTOA, a UL-RSTD, an SL-RSTD, a difference between a plurality of UL-RTOAs, or a difference between a plurality of SL-RTOAs. The angle measurement value type may include a UL-AOA or an SL-AOA. It may be understood that the UL-AOA may include a UL-A-AOA and/or a UL-Z-AOA.The SL-AOA may include an SL-A-AOA and/or an SL-Z-AOA.

S1701b: The first device receives the first time measurement result information and the first angle measurement result information from the first positioning assisting node.

In other words, after receiving the first measurement request information from the first device, the first positioning assisting node may determine the first time measurement result information and the first angle measurement result information, and send the first time measurement result information and the first angle measurement result information to the first device.

S1701c: The first device sends second measurement request information to the second positioning assisting node. The second measurement request information is used to request the second positioning assisting node to send the second time measurement result information and the second angle measurement result information to the first device.

It should be understood that, the second measurement request information is similar to the first measurement request information, and may include a reference signal configuration for requesting the second positioning assisting node to perform measurement and a measurement value type expected by the first device.

Optionally, in this embodiment of this application, the second measurement request information may include a reference signal configuration for requesting the second positioning assisting node to perform measurement. The reference signal configuration for requesting the second positioning assisting node to perform measurement may include a first reference signal resource and a second reference signal resource. Alternatively, the reference signal configuration for requesting the first positioning assisting node to perform measurement may include a first reference signal resource set and a second reference signal resource set. The first reference signal resource set includes one or more first reference signal resources. The second reference signal resource set includes one or more second reference signal resources.

In other words, the first device may request the second positioning assisting node to simultaneously measure the two reference signal resources, that is, request the second positioning assisting node to simultaneously measure the first reference signal sent by the first terminal device and the second reference signal sent by the second terminal device.

Optionally, in this embodiment of this application, the second measurement request information further includes the measurement value type expected by the first device. The measurement value type expected by the first device may include a time measurement value type and an angle measurement value type. The time measurement value type may include one or more of the following: a UL-RTOA, an SL-RTOA, a UL-RSTD, an SL-RSTD, a difference between a plurality of UL-RTOAs, or a difference between a plurality of SL-RTOAs. The angle measurement value type may include a UL-AOA or an SL-AOA. It may be understood that the UL-AOA may include a UL-A-AOA and/or a UL-Z-AOA.The SL-AOA may include an SL-A-AOA and/or an SL-Z-AOA.

S1701d: The first device receives the second time measurement result information and the second angle measurement result information from the second positioning assisting node.

In other words, after receiving the second measurement request information from the first device, the second positioning assisting node may determine the second time measurement result information and the second angle measurement result information, and send the second time measurement result information and the second angle measurement result information to the first device.

Optionally, in this embodiment of this application, the time measurement result information of arrival of the reference signal at the target positioning assisting node and/or the target terminal device includes third time measurement result information and fourth time measurement result information. The third time measurement result information includes time measurement result information of arrival of the reference signal at the first terminal device. The fourth time measurement result information includes time measurement result information of arrival of the reference signal at the second terminal device.

For example, the third time measurement result information may include the third RSTD. The fourth time measurement result information may include the fourth RSTD.

Optionally, in this embodiment of this application, the angle measurement result information of the target terminal device relative to the target positioning assisting node includes third angle measurement result information and fourth angle measurement result information. The third angle measurement result information includes angle measurement result information of the first terminal device relative to the target positioning assisting node. The fourth angle measurement result information includes angle measurement result information of the second terminal device relative to the target positioning assisting node. A measurement value type corresponding to an angle measurement value in the third angle measurement result information and an angle measurement value in the fourth angle measurement result information is an AOD, or an RSRP and/or an RSRPP.

For example, the third angle measurement result information may include the first angle measurement value and the third angle measurement value. The fourth angle measurement result information may include the second angle measurement value and the fourth angle measurement value.

Optionally, in this embodiment of this application, the first device is a location management network element, and that a first device obtains measurement result information (S1701) includes:

S1701e: The first device sends third measurement request information to the first terminal device. The third measurement request information is used to request the first terminal device to send the third time measurement result information and the third angle measurement result information to the first device.

S1701f: The first device receives the third time measurement result information and the third angle measurement result information from the first terminal device.

**In** other words, after receiving the third measurement request information from the first device, the first terminal device may determine the third time measurement result information and the third angle measurement result information, and send the third time measurement result information and the third angle measurement result information to the first device.

S1701g: The first device sends fourth measurement request information to the second terminal device. The fourth measurement request information is used to request the second terminal device to send the fourth time measurement result information and the fourth angle measurement result information to the first device.

S1701h: The first device receives the fourth measurement result information and the fourth angle measurement result information from the second terminal device.

**In** other words, after receiving the fourth measurement request information from the first device, the second terminal device may determine the fourth time measurement result information and the fourth angle measurement result information, and send the fourth time measurement result information and the fourth angle measurement result information to the first device.

Optionally, in this embodiment of this application, the first device is the first terminal device or the second terminal device. The measurement result information may be sent by the location management network element to the first device. For example, that a first device obtains measurement result information (S1701) may include: The first device receives the measurement result information from the location management network element. The location management network element may obtain the measurement result information by using steps S1701a to S1701d or steps S1701e to S1701h. **In** other words, after obtaining the measurement result information, the location management network element may not perform relative positioning, but send the measurement result information to the first device, and the first device performs relative positioning location solving.

It may be understood that, when the first device is the first terminal device or the second terminal device, the first device may also obtain some measurement result information through positioning measurement, and the other part of measurement result information may be sent by the location management network element or another device to the first device. The following describes an implementation in which the first device obtains some measurement result information.

Optionally, in this embodiment of this application, when the first device is the first terminal device, the measurement result information includes first information, and the first information includes time measurement result information of arrival of the reference signal at the second terminal device and/or the target positioning assisting node, and angle measurement result information of the second terminal device relative to the target positioning assisting node, and that a first device obtains measurement result information (S 1701) includes: The first device receives the first information from the location management network element. The location management network element may obtain the first information by using steps S1701a to S1701d, or obtain the first information by using steps S 1701g to S 1701h. Details are not described herein again. In other words, when the first device is the first terminal device, the first device may obtain some measurement result information by receiving the first information from the location management network element.

For example, the time measurement result information of arrival of the reference signal at the second terminal device may include the fourth RSTD.

For example, the time measurement result information of arrival of the reference signal at the target positioning assisting node may include: the first RTOA, the second RTOA, the third RTOA, and the fourth RTOA; or the difference between the first RTOA and the second RTOA and the difference between the third RTOA and the fourth RTOA; or the difference between the first RTOA and the third RTOA and the difference between the second RTOA and the fourth RTOA; or the first RSTD and the second RSTD; or the difference between the first RSTD and the second RSTD.

For example, the angle measurement result information of the second terminal device relative to the target positioning assisting node may include the second angle measurement value and the fourth angle measurement value.

Optionally, in this embodiment of this application, when the first device is the first terminal device, the measurement result information includes second information, and the second information includes time measurement result information of arrival of the reference signal at the second terminal device and angle measurement result information of the second terminal device relative to the target positioning assisting node, and that a first device obtains measurement result information (S1701) may include: The first device receives the second information from the second terminal device. The second terminal device may send the second information to the first device through the PC5 message. The second terminal device may obtain the second information by measuring the reference signal sent by the first positioning assisting node and the reference signal sent by the second positioning assisting node. In other words, when the first device is the first terminal device, the first device may obtain some measurement result information by receiving the second information from the second terminal device.

For example, the time measurement result information of arrival of the reference signal at the second terminal device may include the fourth RSTD.

For example, the angle measurement result information of the second terminal device relative to the target positioning assisting node may include the second angle measurement value and the fourth angle measurement value.

It should be understood that the first device may request the second terminal device to send the second information to the first device. For example, when the first device triggers a service of obtaining the relative location information of the first device and the second terminal device, the first device may send a request message to the second terminal device.

For example, before the first device receives the second information from the second terminal device, the relative positioning method provided in this embodiment of this application further includes: The first device sends the request message to the second terminal device. Correspondingly, the second terminal device receives the request message from the first device. The request message is used to request the second terminal device to send the second information to the first device.

It should be understood that, in this embodiment of this application, the second terminal device may alternatively actively send the second information to the first device. For example, when the second terminal device triggers a service of obtaining the relative location information of the first device and the second terminal device, the second terminal device may send a request message to the first device. The request message is used to request the first device to determine the relative location information of the first device and the second terminal device. The request message may include the second information, so that the first device determines the relative location information of the first device and the second terminal device.

Optionally, in this embodiment of this application, when the first device is the second terminal device, the measurement result information includes third information, and the third information includes time measurement result information of arrival of the reference signal at the first terminal device and/or the target positioning assisting node, and angle measurement result information of the first terminal device relative to the target positioning assisting node, and that a first device obtains measurement result information (S1701) may include: The first device receives the third information from the location management network element. The location management network element may obtain the third information by using S1701a to S1701d, or obtain the third information by using S1701e to S1701f. In other words, when the first device is the second terminal device, the first device may obtain some measurement result information by receiving the third information from the location management network element.

For example, the time measurement result information of arrival of the reference signal at the first terminal may include the third RSTD.

For example, the angle measurement result information of the first terminal device relative to the target positioning assisting node may include the first angle measurement value and the third angle measurement value.

Optionally, in this embodiment of this application, when the first device is the second terminal device, the measurement result information includes fourth information, and the fourth information includes time measurement result information of arrival of the reference signal at the first terminal device and angle measurement result information of the first terminal device relative to the target positioning assisting node; and that a first device obtains measurement result information (S1701) includes: The first device receives the fourth information from the first terminal device. The first terminal device may send the fourth information to the first device through the PC5 message. The first terminal device may obtain the fourth information by measuring the reference signal sent by the first positioning assisting node and the reference signal sent by the second positioning assisting node. In other words, when the first device is the second terminal device, the first device may obtain some measurement result information by receiving the fourth information from the first terminal device.

For example, the time measurement result information of arrival of the reference signal at the first terminal device may include the third RSTD.

For example, the angle measurement result information of the first terminal device relative to the target positioning assisting node may include the first angle measurement value and the third angle measurement value.

It should be understood that the first device may request the first terminal device to send the fourth information to the first device. For example, when the first device triggers a service of obtaining the relative location information of the first device and the first terminal device, the first device may send a request message to the first terminal device.

For example, before the first device receives the fourth information from the first terminal device, the relative positioning method provided in this embodiment of this application further includes: The first device sends the request message to the first terminal device. Correspondingly, the first terminal device receives the request message from the first device. The request message is used to request the first terminal device to send the fourth information to the first device.

It should be understood that, in this embodiment of this application, the first terminal device may alternatively actively send the fourth information to the first device. For example, when the first terminal device triggers a service of obtaining the relative location information of the first device and the first terminal device, the first terminal device may send a request message to the first device. The request message is used to request the first device to determine the relative location information of the first device and the first terminal device. The request message may include the second information, so that the first device determines the relative location information of the first device and the first terminal device.

Optionally, in this embodiment of this application, the first positioning assisting node is the first assisting terminal device, the second positioning assisting node is the second assisting terminal device, and the measurement result information includes time measurement result information of arrival of the reference signal at the target positioning assisting node and angle measurement result information of the target terminal device relative to the target positioning assisting node; and that a first device obtains measurement result information (S1701) may include: The first device receives the measurement result information from the first positioning assisting node. The first positioning assisting node may actively send the measurement result information to the first device. For example, when the first positioning assisting node triggers a service of obtaining the relative location information of the first terminal device and the second terminal device, the first positioning assisting node may send a request message to the first device. The request message is used to request the first device to determine the relative location information of the first terminal device and the second terminal device. The request message may include the measurement result information, and the measurement result information is used by the first device to determine the relative location information of the first terminal device and the second terminal device.

It should be understood that the time measurement result information of arrival of the reference signal at the target positioning assisting node includes: the time measurement result information of arrival of the reference signal at the first positioning assisting node, and the time measurement result information of arrival of the reference signal at the second positioning assisting node. The angle measurement result information of the target terminal device relative to the target positioning assisting node may include the angle measurement result information of the target terminal device relative to the first positioning assisting node and the angle measurement result information of the target terminal device relative to the second positioning assisting node. The first positioning assisting node may obtain, by measuring the reference signal sent by the first terminal device and the reference signal sent by the second terminal device, the time measurement result information of arrival of the reference signal at the first positioning assisting node and the angle measurement result information of the target terminal device relative to the first positioning assisting node. In addition, the first positioning assisting node may send a request message to the second positioning assisting node, to request the second positioning assisting node to send the time measurement information of arrival of the reference signal at the second positioning assisting node and the angle measurement result information of the target terminal device relative to the second positioning assisting node.

Alternatively, optionally, the first positioning assisting node is the first assisting terminal device, the second positioning assisting node is the second assisting terminal device, and the measurement result information includes time measurement result information of arrival of the reference signal at the target positioning assisting node and angle measurement result information of the target terminal device relative to the target positioning assisting node; and that a first device obtains measurement result information (S1701) may include: The first device receives the measurement result information from the second positioning assisting node. The second positioning assisting node may actively send the measurement result information to the first device. For example, when the first positioning assisting node triggers a service of obtaining the relative location information of the first terminal device and the second terminal device, the second positioning assisting node may send a request message to the first device. The request message is used to request the first device to determine the relative location information of the first terminal device and the second terminal device. The request message may include the measurement result information, and the measurement result information is used by the first device to determine the relative location information of the first terminal device and the second terminal device.

It should be understood that the time measurement result information of arrival of the reference signal at the target positioning assisting node includes: the time measurement result information of arrival of the reference signal at the first positioning assisting node, and the time measurement result information of arrival of the reference signal at the second positioning assisting node. The angle measurement result information of the target terminal device relative to the target positioning assisting node may include the angle measurement result information of the target terminal device relative to the first positioning assisting node and the angle measurement result information of the target terminal device relative to the second positioning assisting node. The second positioning assisting node may obtain, by measuring the reference signal sent by the first terminal device and the reference signal sent by the second terminal device, the time measurement result information of arrival of the reference signal at the second positioning assisting node and the angle measurement result information of the target terminal device relative to the second positioning assisting node. In addition, the second positioning assisting node may send a request message to the first positioning assisting node, to request the first positioning assisting node to send the time measurement information of arrival of the reference signal at the first positioning assisting node and the angle measurement result information of the target terminal device relative to the first positioning assisting node.

**In** other words, when the first positioning assisting node is the first assisting terminal device, and the second positioning assisting node is the second assisting terminal device, the first device may obtain the measurement result information via the first positioning assisting node or the second positioning assisting node.

For S1702:

As described in S1701, the first device may obtain the difference between the first distance difference and the second distance difference and the difference between the third distance difference and the fourth distance difference based on the measurement result information. Both the differences may be used to determine the relative location information of the first terminal device and the second terminal device. The following uses the application scenario shown in FIG. 19 as an example to describe a process in which the first device determines the relative location information of the first terminal device and the second terminal device based on the measurement result information in S1702.

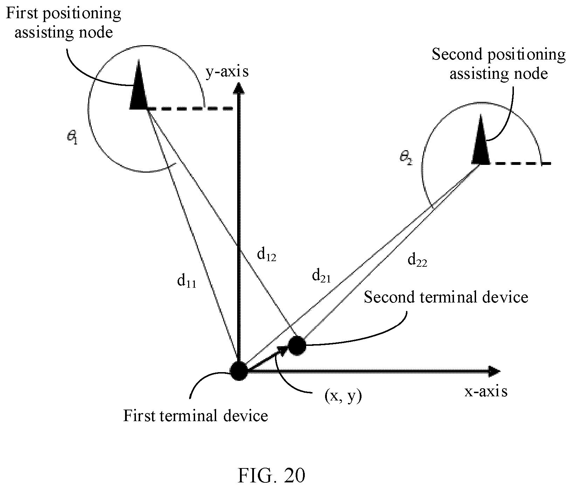

For example, FIG. 20 is a diagram of relative positioning in the application scenario shown in FIG. 19. As shown in FIG. 20, a location of the first terminal device is an origin of a reference coordinate system, and to-be-solved relative location information is a vector (x, y) from the first terminal device to the second terminal device, where $\theta_1$ represents an azimuth of the first positioning assisting node relative to the first terminal device and the second terminal device, and $\theta_2$ represents an azimuth of the second positioning assisting node relative to the first terminal device and the second terminal device. Reference directions of $\theta_1$ and $\theta_2$ are an x-axis, and counterclockwise rotation is positive. $\theta_1$ may be an angle corresponding to the first angle measurement value, or an angle corresponding to the second angle measurement value, or an angle corresponding to the fifth angle measurement value. $\theta_2$ may be an angle corresponding to the third angle measurement value, or an angle corresponding to the fourth angle measurement value, or an angle corresponding to the sixth angle measurement value.

**In** FIG. 20, unknown quantities are:

$d_{11}$: a distance between the first positioning assisting node and the first terminal device.
$d_{12}$: a distance between the first positioning assisting node and the second terminal device.
$d_{21}$: a distance between the second positioning assisting node and the first terminal device.
$d_{22}$: a distance between the second positioning assisting node and the second terminal device.

It is considered that a unit vector $\vec{e}(\theta)$ corresponding to an angle $\theta$ may be represented by using Formula (1). Formula (1) is as follows:

$$\vec{e}(\theta) = \begin{bmatrix} \cos\theta \\ \sin\theta \end{bmatrix} \qquad \text{Formula (1)}$$

With reference to Formula (1) and the foregoing unknown quantities, an equation set constructed by using Formula (2) to Formula (6) may be obtained.

$$x = (d_{12} - d_{11})\cos\theta_1 = (d_{22} - d_{21})\cos\theta_2 \qquad \text{Formula (2)}$$

$$y = (d_{12} - d_{11})\sin\theta_1 = (d_{22} - d_{21})\sin\theta_2 \qquad \text{Formula (3)}$$

$$d_{12} - d_{11} = x\cos\theta_1 + y\sin\theta_1 \qquad \text{Formula (4)}$$

$$d_{22} - d_{21} = x\cos\theta_2 + y\sin\theta_2 \qquad \text{Formula (5)}$$

$$dd^{21} = (d_{22} - d_{21}) - (d_{12} - d_{11}) = <(x, y), \vec{e}(\theta_2) - \vec{e}(\theta_1)> \qquad \text{Formula (6)}$$

In Formula (2) to Formula (6), $d_{12}$ - $d_{11}$ represents the first distance difference, $d_{22}$ -$d_{21}$ represents the second distance difference, and $dd^{21}$ may be represented as the difference between the first distance difference and the second distance difference. It may be understood that Formula (6) may be used to represent a double difference observation equation between the first positioning assisting node and the second positioning assisting node.

As described above, a distance between two devices may be obtained by multiplying a time difference between arrival of the reference signal at the two devices by a speed of light. Therefore, the time measurement result information of arrival of the reference signal at the target positioning assisting node and/or the target terminal device may indicate a distance between the target positioning assisting node and the target terminal device. For example, $dd^{21}$ may be determined based on the time measurement result information of arrival of the reference signal at the target positioning assisting node and/or the target terminal device. For example, $dd^{21}$ is the difference between the first RSTD and the second RSTD; or $dd^{21}$ is the difference between the third RSTD and the fourth RSTD; or the difference between the first RTOA and the second RTOA represents the first RTOA difference, the difference between the third RTOA and the fourth RTOA represents the second RTOA difference, and $dd^{21}$ is the difference between the first RTOA difference and the second RTOA difference.

As described in the foregoing descriptions of the quantities of first positioning assisting nodes and second positioning assisting nodes, in this embodiment of this application, there may be a plurality of first positioning assisting nodes, and there may be a plurality of second positioning assisting nodes. It should be understood that, to solve the vector $(x, y)$, a third positioning assisting node may be introduced. According to principles of Formula (2) to Formula (6), a double difference observation equation between the third positioning assisting node and the first positioning assisting node may be obtained.

For example, the double difference observation equation between the third positioning assisting node and the first positioning assisting node may be represented by using Formula (7).

$$dd^{31} = (d_{32} - d_{31}) - (d_{12} - d_{11}) = \; < (x, y), \vec{e}(\theta_3) - \vec{e}(\theta_1) > \quad \text{Formula (7)}$$

In Formula (7), $d_{32}$ represents a distance between the third positioning assisting node and the second terminal device, $d_{31}$ represents a distance between the third positioning assisting node and the first terminal device, and $\theta_3$ represents an azimuth of the third positioning assisting node relative to the first terminal device and the second terminal device. $dd^{31}$ may be represented as a difference between the first distance difference and the third distance difference. The third distance difference is a difference between a distance from the third positioning assisting node to the second terminal device and a distance from the third positioning assisting node to the first terminal device.

It may be understood that, Formula (8) and Formula (9) may be obtained by combining Formula (6) and Formula (7). Formula (8) is a matrix expression of the to-be-solved vector $(x, y)$ about $dd^{21}$ and $dd^{31}$.

$$[\vec{e}(\theta_2) - \vec{e}(\theta_1), \vec{e}(\theta_3) - \vec{e}(\theta_1)]^T \begin{bmatrix} x \\ y \end{bmatrix} = \begin{bmatrix} dd^{21} \\ dd^{31} \end{bmatrix} \qquad \text{Formula (8)}$$

It may be understood that Formula (9) may be obtained by using Formula (8), and Formula (9) is a solution formula of the to-be-solved vector $(x, y)$.

$$\begin{bmatrix} x \\ y \end{bmatrix} = ([\vec{e}(\theta_2) - \vec{e}(\theta_1), \vec{e}(\theta_3) - \vec{e}(\theta_1)]^T)^{-1} \begin{bmatrix} dd^{21} \\ dd^{31} \end{bmatrix} \qquad \text{Formula (9)}$$

Further, after $(x, y)$ is obtained, the relative location coordinates, the relative distance, and the relative direction between the first terminal device and the second terminal device may be obtained.

It should be understood that, after more positioning assisting nodes are introduced (for example, N positioning assisting nodes), an equation is overdetermined (that is, a quantity of equations is greater than a quantity of unknown quantities). In this case, Formula (8) may be represented as Formula (10). Formula (10) is as follows:

$$[\vec{e}(\theta_2) - \vec{e}(\theta_1), \vec{e}(\theta_3) - \vec{e}(\theta_1), \dots, \vec{e}(\theta_N) - \vec{e}(\theta_1)]^T \begin{bmatrix} x \\ y \end{bmatrix} = \begin{bmatrix} dd^{21} \\ dd^{31} \\ \dots \\ dd^{N1} \end{bmatrix} \qquad \text{Formula (10)}$$

$\theta_N$ represents an azimuth of an $N^{th}$ positioning assisting node relative to the first terminal device and the second terminal device. A double difference observation equation between the $N^{th}$ positioning assisting node and the first positioning assisting node may be represented by using Formula (11).

$$dd^{N1} = (d_{N2} - d_{N1}) - (d_{12} - d_{11}) = \; < (x, y), \vec{e}(\theta_N) - \vec{e}(\theta_1) > \quad \text{Formula (11)}$$

In Formula (11), $d_{N1}$ represents a distance between the $N^{th}$ positioning assisting node and the first terminal device, and $dd^{N1}$ may be represented as a difference between the first distance difference and an $N^{th}$ distance difference. The $N^{th}$ distance difference is a difference between a distance from the $N^{th}$ positioning assisting node to the second terminal device and a distance from the $N^{th}$ positioning assisting node to the first terminal device.

It should be understood that $[\vec{e}(\theta_2)\text{-}\vec{e}(\theta_1), \vec{e}(\theta_3)\text{-}\vec{e}(\theta_1), ..., \vec{e}(\theta_N)\text{-}\vec{e}(\theta_1)]^T$ in Formula (10) may be denoted as A, and $[dd^{21}, dd^{31}, ..., dd^{N1}]^T$ is denoted as $\vec{b}$, and Formula (10) may be rewritten as Formula (12). Formula (12) is as follows:

$$A \begin{bmatrix} x \\ y \end{bmatrix} = \vec{b} \qquad\qquad \text{Formula (12)}$$

Optionally, in a possible implementation, Formula (13) may be obtained based on least squares estimation and according to Formula (12). Formula (13) is as follows:

$$\begin{bmatrix} x \\ y \end{bmatrix} = (A^T A)^{-1} A^T \vec{b} \qquad\qquad \text{Formula (13)}$$

Optionally, in another possible implementation, minimum mean square error (minimum mean squared error, MMSE) estimation may be performed. A model of the MMSE estimation is Formula (14). Formula (14) is as follows:

$$A \begin{bmatrix} x \\ y \end{bmatrix} + z = \vec{b} \qquad\qquad \text{Formula (14)}$$

In Formula (14), z is a measurement noise. A solution formula of x and y may be obtained according to Formula (14) and Formula (13). The solution formula of x and y may be Formula (15) or Formula (16).

$$\begin{bmatrix} x \\ y \end{bmatrix} = A^T (A A^T + I)^{-1} \vec{b} \qquad\qquad \text{Formula (15)}$$

$$\begin{bmatrix} x \\ y \end{bmatrix} = A^T (A A^T + R)^{-1} \vec{b} \qquad\qquad \text{Formula (16)}$$

In Formula (15), $E\{zz^T\} = I$, and I is a unit matrix, and is applicable to a case in which the measurement noise is independently and identically distributed. In other words, for components in a vector z, autocorrelations of the components are equal, and a cross-correlation between the components is 0. In Formula (16), $E\{zz^T\} = R$, R is a general square matrix, and is applicable to a case in which the measurement noise is not dependently and non-identically distributed. For components in a vector z, autocorrelations of the components are unequal, and a cross-correlation between the components is not 0. $E\{zz^T\}$ is an autocovariance matrix of the measurement noise. It should be understood that Formula (15) is a special example of Formula (16), and Formula (16) has wider applicability than Formula (15). In a conventional engineering application, because it is difficult to obtain a correlation between measurement noises, Formula (15) is usually selected to simplify the calculation.

It should be understood that, in this embodiment of this application, the angle measurement value in the angle measurement result information may further include a Z-AOA, a Z-AOD, and the like, so that three-dimensional location information can be solved.

For example, the to-be-solved relative location information is a vector (x, y, z) from the first terminal device to the second terminal device, $\theta_1$ represents an azimuth of the first positioning assisting node relative to the first terminal device and the second terminal device, and $\varphi_1$ represents a tilt angle of the first positioning assisting node relative to the first terminal device and the second terminal device. $\theta_2$ represents an azimuth of the second positioning assisting node relative to the first terminal device and the second terminal device, and $\varphi_2$ represents a vertical tilt angle of the second positioning assisting node relative to the first terminal device and the second terminal device. Reference directions of $\theta_1$ and $\theta_2$ are an x-axis, and counterclockwise rotation is positive. Reference directions of $\varphi_1$ and $\varphi_2$ are a z-axis.

It should be understood that a unit vector corresponding to a three-dimensional space may be represented by $\vec{e}$ $(\varphi, \theta)$. $\varphi$ represents a tilt angle, $\theta$ represents an azimuth, and $\vec{e}(\varphi, \theta)$ may be represented by using Formula (17). Formula (17) is as follows:

$$\vec{e}(\varphi, \theta) = \begin{bmatrix} \sin\varphi\cos\theta \\ \sin\varphi\sin\theta \\ \cos\varphi \end{bmatrix} \qquad \text{Formula (17)}$$

Relationships between $d_{11}$, $d_{12}$, $d_{21}$, and $d_{22}$ may be represented by using Formula (18) to Formula (23).

$$x = (d_{12} - d_{11})\sin\varphi_1\cos\theta_1 = (d_{22} - d_{21})\sin\varphi_2\cos\theta_2 \qquad \text{Formula (18)}$$

$$y = (d_{12} - d_{11})\sin\varphi_1\sin\theta_1 = (d_{22} - d_{21})\sin\varphi_2\sin\theta_2 \qquad \text{Formula (19)}$$

$$z = (d_{12} - d_{11})\cos\varphi_1 = (d_{22} - d_{21})\cos\varphi_2 \qquad \text{Formula (20)}$$

$$d_{12} - d_{11} = x\sin\varphi_1\cos\theta_1 + y\sin\varphi_1\sin\theta_1 + z\cos\varphi_1 \qquad \text{Formula (21)}$$

$$d_{22} - d_{21} = x\sin\varphi_2\cos\theta_2 + y\sin\varphi_2\sin\theta_2 + z\cos\varphi_2 \qquad \text{Formula (22)}$$

$$dd^{21} = (d_{22} - d_{21}) - (d_{12} - d_{11}) = <(x, y, z), \vec{e}(\varphi_2, \theta_2) - \vec{e}(\varphi_1, \theta_1)> \qquad \text{Formula (23)}$$

According to the foregoing vector (x, y) solution analysis, the to-be-solved vector (x, y, z) in the three-dimensional space may also be solved based on related principles of Formula (7) to Formula (11). (x, y, z) may be solved by using Formula (24). Formula (24) is as follows:

$$[\vec{e}(\varphi_2, \theta_2) - \vec{e}(\varphi_1, \theta_1), \vec{e}(\varphi_3, \theta_3) - \vec{e}(\varphi_1, \theta_1), \dots, \vec{e}(\varphi_N, \theta_N) - \vec{e}(\varphi_1, \theta_1)]^T \begin{bmatrix} x \\ y \\ z \end{bmatrix} = \begin{bmatrix} dd^{21} \\ dd^{31} \\ \dots \\ dd^{N1} \end{bmatrix}$$

$$\text{Formula (24)}$$

It should be understood that the to-be-solved vector (x, y, z) may be solved according to Formula (24) through least squares or MMSE.

It may be understood that the foregoing two-dimensional location solution method may also be used in Formula (24). For example, a height difference $z_0$ between the first terminal device and the second terminal device is known. In this case, z in (x, y, z) is a known quantity $z_0$, and x and y are unknown quantities. The three-dimensional equation in Formula (24) may degenerate to a solution of two-dimensional unknown quantities, that is, Formula (24) may be rewritten into Formula (25).

$$[\vec{e}(\varphi_2, \theta_2) - \vec{e}(\varphi_1, \theta_1), \vec{e}(\varphi_3, \theta_3) - \vec{e}(\varphi_1, \theta_1), \dots, \vec{e}(\varphi_N, \theta_N) - \vec{e}(\varphi_1, \theta_1)]^T \begin{bmatrix} x \\ y \\ 0 \end{bmatrix} = \begin{bmatrix} dd^{21} \\ dd^{31} \\ \dots \\ dd^{N1} \end{bmatrix} -$$

$$[\vec{e}(\varphi_2, \theta_2) - \vec{e}(\varphi_1, \theta_1), \vec{e}(\varphi_3, \theta_3) - \vec{e}(\varphi_1, \theta_1), \dots, \vec{e}(\varphi_N, \theta_N) - \vec{e}(\varphi_1, \theta_1)]^T \begin{bmatrix} 0 \\ 0 \\ z_0 \end{bmatrix} \qquad \text{Formula (25)}$$

Further, to-be-solved x and y may be obtained by using Formula (25).

In other words, in this embodiment of this application, the relative location information of the first terminal device and the second terminal device may be directly determined based on the time measurement result information and the angle measurement result information that are in the measurement result information.

In this embodiment of this application, the first device may directly calculate the relative location information of the

**EP 4 607 968 A1**

two terminal devices based on the time measurement result information and the angle measurement result information that are in the measurement result information, so that absolute positioning does not need to be separately performed on the two terminal devices twice based on location information of the positioning assisting node. Therefore, two positioning errors introduced by twice absolute positioning can be avoided, thereby improving positioning accuracy during relative positioning. In other words, according to the relative positioning method provided in this embodiment of this application, an existing relative positioning solution can be optimized to improve positioning accuracy.

The actions of the first device in steps S1701 and S1702 may be performed by the communication apparatus instructed by the processor 1601 in the communication apparatus 160 shown in FIG. 16 by invoking the application program code stored in the memory 1602. This is not limited in embodiments.

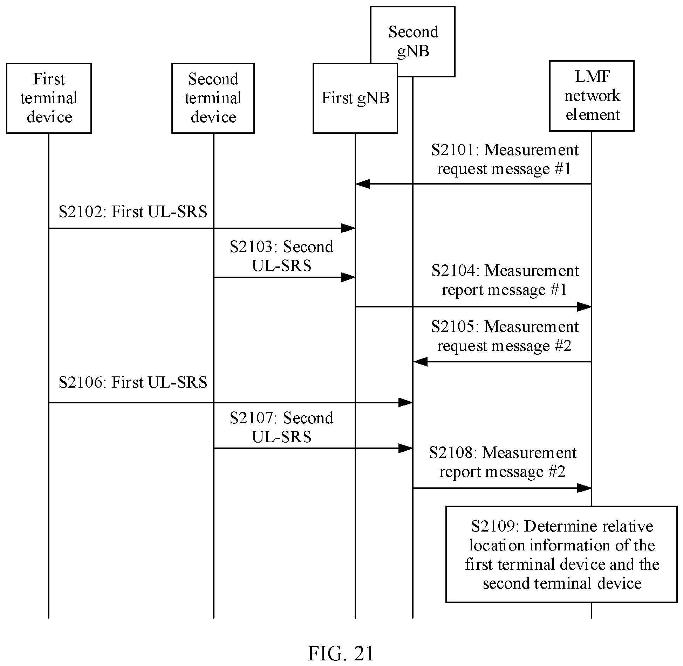

The following uses an example in which the first device is an LMF network element, the first positioning assisting node is a first gNB, the second positioning assisting node is a second gNB, and the reference signal is a UL-SRS. A relative positioning method provided in an embodiment of this application is described as an example with reference to FIG. 21.

FIG. 21 is an example of a relative positioning method according to an embodiment of this application. The method may include the following steps.

S2101: The LMF network element sends a measurement request message #1 to the first gNB. Correspondingly, the first gNB receives the measurement request message #1 from the LMF network element. The measurement request message #1 includes at least two UL-SRS resources. The at least two UL-SRS resources include a first UL-SRS resource and a second UL-SRS resource. The first UL-SRS resource may be used by a first terminal device to send a first UL-SRS. The second UL-SRS resource may be used by a second terminal device to send a second UL-SRS.

Optionally, the measurement request message #1 is used to request the first gNB to send a first UL-RTOA, a second UL-RTOA, a first UL-AOA, and a second UL-AOA to the LMF network element.

Alternatively, optionally, the measurement request message #1 is used to request the first gNB to send the first UL-RTOA, the second UL-RTOA, and a value between the first UL-AOA and the second UL-AOA to the LMF network element. The value between the first UL-AOA and the second UL-AOA may be an average value of the first UL-AOA and the second UL-AOA.

Alternatively, optionally, the measurement request message #1 is used to request the first gNB to send a first UL-RSTD, the first UL-AOA, and the second UL-AOA to the LMF network element.

Alternatively, optionally, the measurement request message #1 is used to request the first gNB to send the first UL-RSTD and the value between the first UL-AOA and the second UL-AOA to the LMF network element.

For the first UL-RSTD, the first UL-RTOA, the second UL-RTOA, the first UL-AOA, and the second UL-AOA, refer to the related descriptions of S1701. Details are not described herein again.

For example, the measurement request message #1 may be an NRPPa message.

S2102: The first terminal device sends the first UL-SRS to the first gNB. Correspondingly, the first gNB receives the first UL-SRS from the first terminal device based on the first UL-SRS resource.

S2103: The second terminal device sends the second UL-SRS to the first gNB. Correspondingly, the first gNB receives the second UL-SRS from the second terminal device based on the second UL-SRS resource.

S2104: The first gNB measures the first UL-SRS and the second UL-SRS, and sends a measurement report message #1 to the LMF network element. Correspondingly, the LMF network element receives the measurement report message #1 from the first gNB. The measurement report message #1 includes: the first UL-RTOA, the second UL-RTOA, the first UL-AOA, and the second UL-AOA; or the first UL-RTOA, the second UL-RTOA, and the value between the UL-AOA and the second UL-AOA; or the first UL-RSTD, the first UL-AOA, and the second UL-AOA; or the first UL-RSTD and the value between the first UL-AOA and the second UL-AOA.

For example, the measurement report message #1 may be an NRPPa message.

S2105: The LMF network element sends a measurement request message #2 to the second gNB. Correspondingly, the second gNB receives the measurement request message #2 from the LMF network element. The measurement request message #2 may include the at least two UL-SRS resources. The at least two UL-SRS resources include the first UL-SRS resource and the second UL-SRS resource. The first UL-SRS resource may be used by the first terminal device to send the first UL-SRS. The second UL-SRS resource may be used by the second terminal device to send the second UL-SRS.

Optionally, the measurement request message #2 is used to request the second gNB to send a third UL-RTOA, a fourth UL-RTOA, a third UL-AOA, and a fourth UL-AOA to the LMF network element.

Alternatively, optionally, the measurement request message #2 is used to request the second gNB to send the third UL-RTOA, the fourth UL-RTOA, and a value between the third UL-AOA and the fourth UL-AOA to the LMF network element. The value between the third UL-AOA and the second UL-AOA may be an average value of the first UL-AOA and the fourth UL-AOA.

Alternatively, optionally, the measurement request message #2 is used to request the second gNB to send a second UL-RSTD, the third UL-AOA, and the fourth UL-AOA to the LMF network element.

Alternatively, optionally, the measurement request message #2 is used to request the second gNB to send the

52

second UL-RSTD and the value between the third UL-AOA and the fourth UL-AOA to the LMF network element.

For the second UL-RSTD, the third UL-RTOA, the fourth UL-RTOA, the third UL-AOA, and the fourth UL-AOA, refer to the related descriptions of S1701. Details are not described herein again.

For example, the measurement request message #2 may be an NRPPa message.

S2106: The first terminal device sends the first UL-SRS to the second gNB. Correspondingly, the second gNB receives the first UL-SRS from the first terminal device based on the first UL-SRS resource.

S2107: The second terminal device sends the second UL-SRS to the second gNB. Correspondingly, the second gNB receives the second UL-SRS from the second terminal device based on the second UL-SRS resource.

S2108: The second gNB measures the first UL-SRS and the second UL-SRS, and sends a measurement report message #2 to the LMF network element. Correspondingly, the LMF network element receives the measurement report message #2 from the second gNB. The measurement report message #2 includes: the third UL-RTOA, the fourth UL-RTOA, the third UL-AOA, and the fourth UL-AOA; or the third UL-RTOA, the fourth UL-RTOA, and the value between the third UL-AOA and the fourth UL-AOA; or the second UL-RSTD, the third UL-AOA, and the fourth UL-AOA; or the second UL-RSTD and the value between the third UL-AOA and the fourth UL-AOA.

For example, the measurement report message #2 may be an NRPPa message.

It may be understood that S2101 may be performed before or after S2105, or step 2101 and S2105 may be simultaneously performed. This is not limited in embodiments of this application.

S2109: The LMF network element determines relative location information of the first terminal device and the second terminal device based on the measurement report message #1 and the measurement report message #2. The LMF network element may determine the relative location information according to the method described in S1702. Details are not described herein again.

In this embodiment of this application, the LMF network element may directly calculate the relative location information of the two terminal devices based on time measurement result information and angle measurement result information that are in measurement result information, so that absolute positioning does not need to be separately performed on the two terminal devices twice based on location information of the positioning assisting node. Therefore, two positioning errors introduced by twice absolute positioning can be avoided, thereby improving positioning accuracy during relative positioning. Further, the LMF network element may request, in one measurement request, the gNBs to perform positioning measurement on the first terminal device and the second terminal device, to obtain a difference between time measurement values that are of the two terminal devices and that are measured by the first gNB and a difference between time measurement values that are of the two terminal devices and that are measured by the second gNB. Such difference calculation can eliminate impact of time asynchronization between the first gNB and the second gNB on positioning. In other words, according to the relative positioning method provided in this embodiment of this application, an existing relative positioning solution can be optimized to improve positioning accuracy.

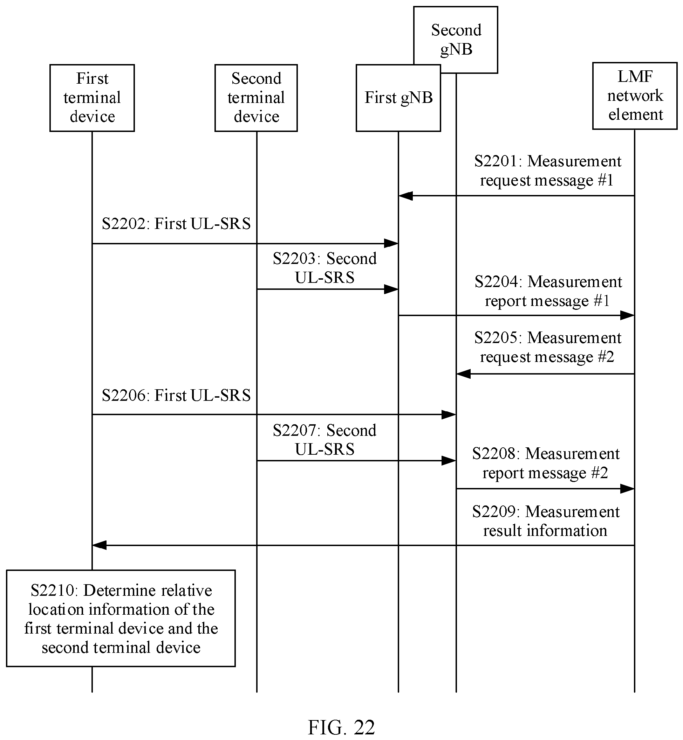

The following uses an example in which the first device is a first terminal device, the first positioning assisting node is a first gNB, the second positioning assisting node is a second gNB, and the reference signal is a UL-SRS. A relative positioning method provided in an embodiment of this application is described as an example with reference to FIG. 22.

FIG. 22 is another example of a relative positioning method according to an embodiment of this application. The method may include the following steps.

S2201 to S2208: Steps S2201 to S2208 are the same as steps S2101 to S2108 in the embodiment shown in FIG. 21. For related descriptions, refer to the embodiment shown in FIG. 21. Details are not described herein again.

S2209: The LMF network element sends measurement result information to the first terminal device. Correspondingly, the first terminal device receives the measurement result information from the LMF network element. The measurement result information may include information in the measurement report message #1 and the measurement report message #2.

Optionally, the measurement result information may alternatively be measurement result information obtained after the LMF network element performs processing. For example, in an example, the measurement result information may include:

a difference between the first UL-RSTD and the second UL-RSTD, an average value of the first UL-AOA and the second UL-AOA, and an average value of the third UL-AOA and the fourth UL-AOA.

Optionally, the measurement result information may be carried in an LPP message. The LPP message may be a provide assistance data message, or the LPP message may be a request location information message.

S2210: The first terminal device determines relative location information of the first terminal device and the second terminal device based on the measurement result information. The LMF network element may determine the relative location information according to the method described in S1702. Details are not described herein again.

In this embodiment of this application, the first terminal device may directly calculate the relative location information of the first terminal device and the second terminal device based on time measurement result information and angle measurement result information that are in measurement result information, so that absolute positioning does not need to be separately performed twice based on location information of the positioning assisting node. Therefore, two positioning errors introduced by twice absolute positioning can be avoided, thereby improving positioning accuracy during relative positioning. Further, the LMF network element may request, in one measurement request, the gNBs to perform positioning measurement on the first terminal device and the second terminal device, to obtain a difference between time measurement values that are of the two terminal devices and that are measured by the first gNB and a difference between time measurement values that are of the two terminal devices and that are measured by the second gNB. Such difference calculation can eliminate impact of time asynchronization between the first gNB and the second gNB on positioning. In other words, according to the relative positioning method provided in this embodiment of this application, an existing relative positioning solution can be optimized to improve positioning accuracy.

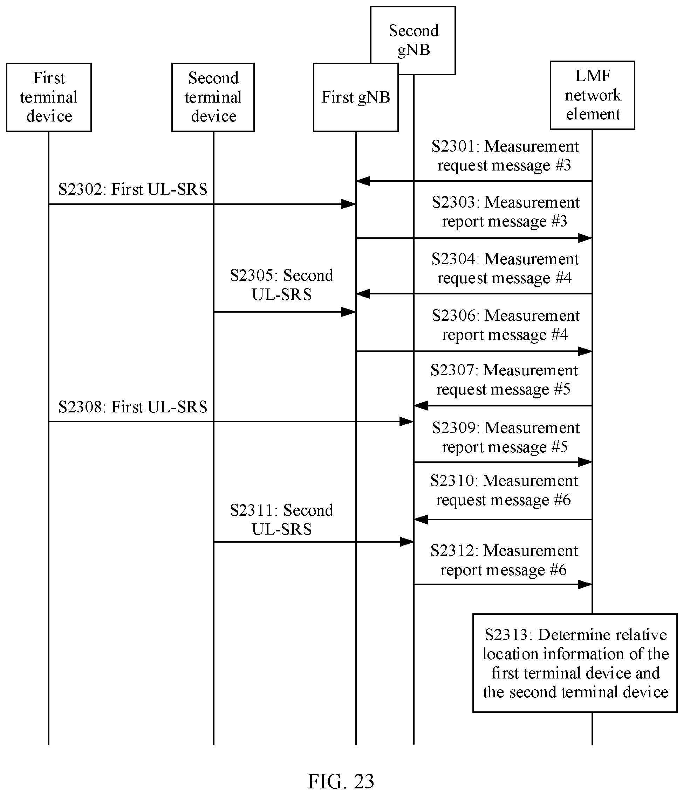

The following uses an example in which the first device is an LMF network element, the first positioning assisting node is a first gNB, the second positioning assisting node is a second gNB, and the reference signal is a UL-SRS. A relative positioning method provided in an embodiment of this application is described as an example with reference to FIG. 23.

FIG. 23 is still another example of a relative positioning method according to an embodiment of this application. The method may include the following steps.

S2301: The LMF network element sends a measurement request message #3 to the first gNB. Correspondingly, the first gNB receives the measurement request message #3 from the LMF network element. The measurement request message #3 is used to request the first gNB to send a first UL-RTOA and a first UL-AOA to the LMF network element. The measurement request message #3 includes a first UL-SRS resource. The first UL-SRS resource may be used by a first terminal device to send a first UL-SRS.

S2302: The first terminal device sends the first UL-SRS to the first gNB. Correspondingly, the first gNB receives the first UL-SRS from the first terminal device based on the first UL-SRS resource.

S2303: The first gNB measures the first UL-SRS, and sends a measurement report message #3 to the LMF network element. Correspondingly, the LMF network element receives the measurement report message #3 from the first gNB. The measurement report message #3 includes the first UL-RTOA and the first UL-AOA.

S2304: The LMF network element sends a measurement request message #4 to the first gNB. Correspondingly, the first gNB receives the measurement request message #4 from the LMF network element. The measurement request message #4 is used to request the first gNB to send a second UL-RTOA and a second UL-AOA to the LMF network element. The measurement request message #4 includes a second UL-SRS resource. The second UL-SRS resource may be used by a second terminal device to send a second UL-SRS.

S2305: The second terminal device sends the second UL-SRS to the first gNB. Correspondingly, the first gNB receives the second UL-SRS from the second terminal device based on the second UL-SRS resource.

S2306: The first gNB measures the second UL-SRS, and sends a measurement report message #4 to the LMF network element. Correspondingly, the LMF network element receives the measurement report message #4 from the first gNB. The measurement report message #4 includes the second UL-RTOA and the second UL-AOA.

S2307: The LMF network element sends a measurement request message #5 to the second gNB. Correspondingly, the second gNB receives the measurement request message #5 from the LMF network element. The measurement request message #5 is used to request the second gNB to send a third UL-RTOA and a third UL-AOA to the LMF network element. The measurement request message #5 includes the first UL-SRS resource. The first UL-SRS resource may be used by the first terminal device to send the first UL-SRS.

S2308: The first terminal device sends the first UL-SRS to the second gNB. Correspondingly, the second gNB receives the first UL-SRS from the first terminal device based on the first UL-SRS resource.

S2309: The second gNB measures the first UL-SRS, and sends a measurement report message #5 to the LMF network element. Correspondingly, the LMF network element receives the measurement report message #5 from the second gNB. The measurement report message #5 includes the third UL-RTOA and the third UL-AOA.

S2310: The LMF network element sends a measurement request message #6 to the second gNB. Correspondingly, the second gNB receives the measurement request message #6 from the LMF network element. The measurement request message #6 is used to request the second gNB to send a fourth UL-RTOA and a fourth UL-AOA to the LMF network element. The measurement request message #6 includes the second UL-SRS resource. The second UL-SRS resource may be used by the second terminal device to send the second UL-SRS.

S2311: The second terminal device sends the second UL-SRS to the second gNB. Correspondingly, the second gNB receives the second UL-SRS from the second terminal device based on the second UL-SRS resource.

S2312: The second gNB measures the second UL-SRS, and sends a measurement report message #6 to the LMF network element. Correspondingly, the LMF network element receives the measurement report message #6 from the second gNB. The measurement report message #6 includes the fourth UL-RTOA and the fourth UL-AOA.

S2313: The LMF network element determines relative location information of the first terminal device and the second terminal device based on the measurement report message #5 and the measurement report message #6. The LMF network element may determine the relative location information according to the method described in S1702. Details are not described herein again.

Optionally, the measurement request message #3 to the measurement request message #6 and the measurement report message #3 to the measurement report message #6 may all be NRPPa messages.

In this embodiment of this application, the LMF network element may directly calculate the relative location information of the two terminal devices based on time measurement result information and angle measurement result information that are in measurement result information, so that absolute positioning does not need to be separately performed on the two terminal devices twice based on location information of the positioning assisting node. Therefore, two positioning errors introduced by twice absolute positioning can be avoided, thereby improving positioning accuracy during relative positioning. In other words, according to the relative positioning method provided in this embodiment of this application, an existing relative positioning solution can be optimized to improve positioning accuracy.

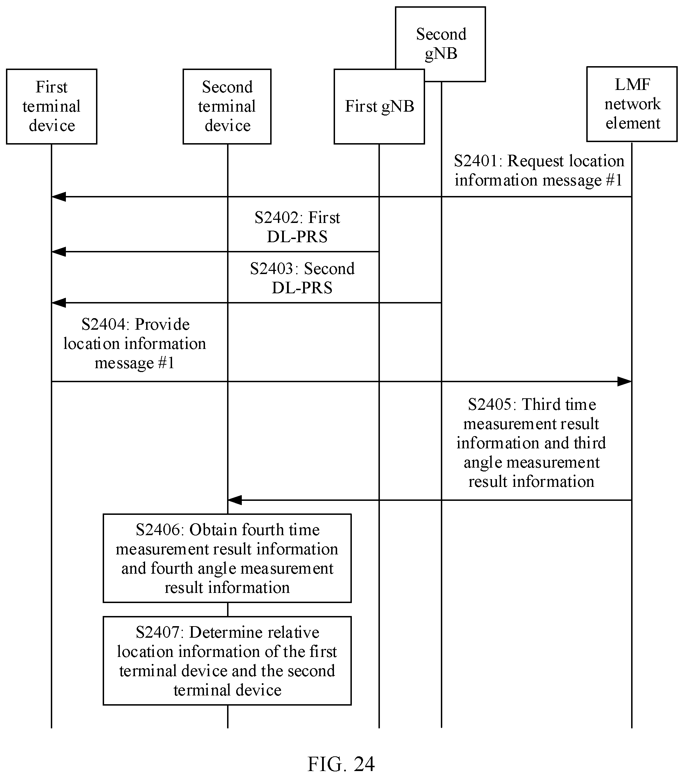

The following uses an example in which the first device is a second terminal device, the first positioning assisting node is a first gNB, the second positioning assisting node is a second gNB, and the reference signal is a DL-PRS. A relative positioning method provided in an embodiment of this application is described as an example with reference to FIG. 24.

FIG. 24 is still another example of a relative positioning method according to an embodiment of this application. The method may include the following steps.

S2401: The LMF network element sends a request location information message #1 to a first terminal device. Correspondingly, the first terminal device receives the request location information message #1 from the LMF network element. The request location information message #1 is used to request information obtained by the first terminal device by measuring a DL-PRS. The information obtained by the first terminal device by measuring the DL-PRS may include third time measurement result information and third angle measurement result information. The third time measurement result information may include a first DL-RSTD. The third angle measurement result information may include:

a first DL-PRS-RSRP and/or a first DL-PRS-RSRPP of at least one path; and
a third DL-PRS-RSRP and/or a third DL-PRS-RSRPP of at least one path.

For example, the request location information message #1 may be an LPP message.

S2402: The first gNB sends a first DL-PRS to the first terminal device. Correspondingly, the first terminal device receives the first DL-PRS from the first gNB based on a first DL-PRS resource.

S2403: The second gNB sends a second DL-PRS to the first terminal device. Correspondingly, the first terminal device receives the second DL-PRS from the second gNB based on a second DL-PRS resource.

S2404: The first terminal device measures the first DL-PRS and the second DL-PRS, and sends a provide location information message #1 to the LMF network element. Correspondingly, the LMF network element receives the provide location information message #1 from the first terminal device. The provide location information message #1 includes the third time measurement result information and the third angle measurement result information. The provide location information message #1 may be an LPP message.

S2405: The LMF network element sends the third time measurement result information and the third angle measurement result information to the second terminal device. The third time measurement result information and the third angle measurement result information may be carried in the LPP message. The LPP message may be a provide assistance data message, or the LPP message may be a request location information message.

S2406: The second terminal device obtains fourth time measurement result information and fourth angle measurement result information. The fourth time measurement result information may include a second DL-RSTD. The fourth angle measurement result information may include:

a first DL-PRS-RSRP and/or a first DL-PRS-RSRPP of at least one path; and
a third DL-PRS-RSRP and/or a third DL-PRS-RSRPP of at least one path.

For the first DL-RSTD, the second DL-RSTD, the first DL-PRS-RSRP to the fourth DL-PRS-RSRP, and the first DL-PRS-RSRPP to the fourth DL-PRS-RSRPP, refer to the related descriptions of S1701. Details are not described herein again.

Optionally, the second terminal device may obtain the fourth time measurement result information and the fourth angle measurement result information by measuring the first DL-PRS of the first gNB and the second DL-PRS of the second gNB.

S2407: The second terminal device determines relative location information of the first terminal device and the second terminal device based on the measurement result information. The measurement result information includes the third time measurement result information, the third angle measurement result information, the fourth time measurement result information, and the fourth measurement result information in steps S2401 to S2406. The second terminal device may determine the relative location information according to the method described in S1702. Details are not described herein again.

In this embodiment of this application, the second terminal device may directly calculate the relative location information of the second terminal device and the first terminal device based on time measurement result information and angle measurement result information, so that absolute positioning does not need to be separately performed on the two terminal devices twice based on location information of the positioning assisting node. Therefore, two positioning errors introduced by twice absolute positioning can be avoided, thereby improving positioning accuracy during relative positioning. In other words, according to the relative positioning method provided in this embodiment of this application, an existing relative positioning solution can be optimized to improve positioning accuracy.

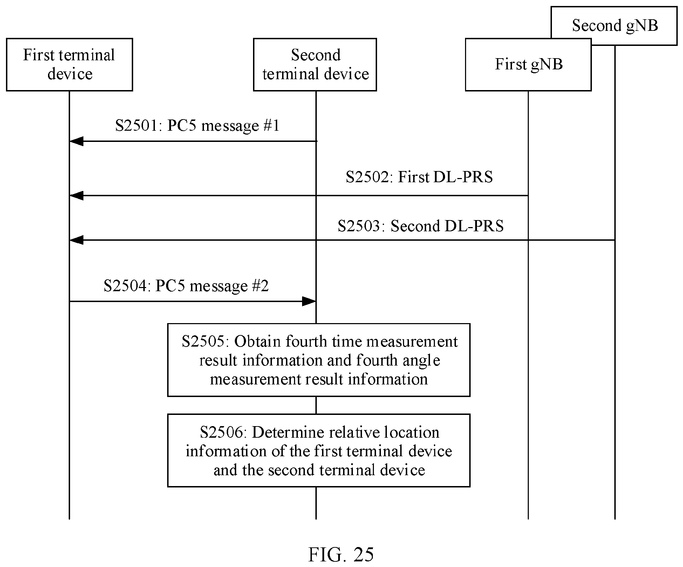

The following uses an example in which the first device is a second terminal device, the first positioning assisting node is a first gNB, the second positioning assisting node is a second gNB, and the reference signal is a DL-PRS. A relative positioning method provided in an embodiment of this application is described as an example with reference to FIG. 25.

FIG. 25 is still another example of a relative positioning method according to an embodiment of this application. The method may include the following steps.

S2501: The second terminal device sends a PC5 message #1 to a first terminal device. Correspondingly, the first terminal device receives the PC5 message # 1 from the second terminal device. The PC5 message #1 is used to request information obtained by the first terminal device by measuring a DL-PRS. The information obtained by the first terminal device by measuring the DL-PRS may include third time measurement result information and third angle measurement result information. The third time measurement result information may include a first DL-RSTD. The third angle measurement result information may include:

a first DL-PRS-RSRP and/or a first DL-PRS-RSRPP of at least one path; and
a third DL-PRS-RSRP and/or a third DL-PRS-RSRPP of at least one path.

S2502 and S2503: Steps S2502 and S2503 are the same as steps S2402 and S2403 in the embodiment shown in FIG. 24. For related descriptions, refer to the embodiment shown in FIG. 24. Details are not described herein again.

S2504: The first terminal device measures the first DL-PRS and the second DL-PRS, and sends a PC5 message #2 to the second terminal device. Correspondingly, the second terminal device receives the PC5 message #2 from the first terminal device. The PC5 message #2 includes the third time measurement result information and the third angle measurement result information.

S2505: The second terminal device obtains fourth time measurement result information and fourth angle measurement result information. The fourth time measurement result information may include a second DL-RSTD. The fourth angle measurement result information may include:

a first DL-PRS-RSRP and/or a first DL-PRS-RSRPP of at least one path; and
a third DL-PRS-RSRP and/or a third DL-PRS-RSRPP of at least one path.

Optionally, the second terminal device may obtain the fourth time measurement result information and the fourth angle measurement result information by measuring the first DL-PRS of the first gNB and the second DL-PRS of the second gNB.

It may be understood that S2505 may be performed before or after S2501, or S2505 and S2501 may be simultaneously performed. This is not specifically limited in embodiments of this application.

S2506: The second terminal device determines relative location information of the first terminal device and the second terminal device based on the measurement result information. The measurement result information includes the third time measurement result information, the third angle measurement result information, the fourth time measurement result information, and the fourth measurement result information in steps. The second terminal device may determine the relative location information according to the method described in S1702. Details are not described herein again.

In this embodiment of this application, the second terminal device may directly calculate the relative location information of the two terminal devices based on time measurement result information and angle measurement result information that are in the measurement result information, so that absolute positioning does not need to be separately performed on the two terminal devices twice based on location information of the positioning assisting node. Therefore, two positioning errors introduced by twice absolute positioning can be avoided, thereby improving positioning accuracy during relative positioning. In other words, according to the relative positioning method provided in this embodiment of this application, an existing relative positioning solution can be optimized to improve positioning accuracy.

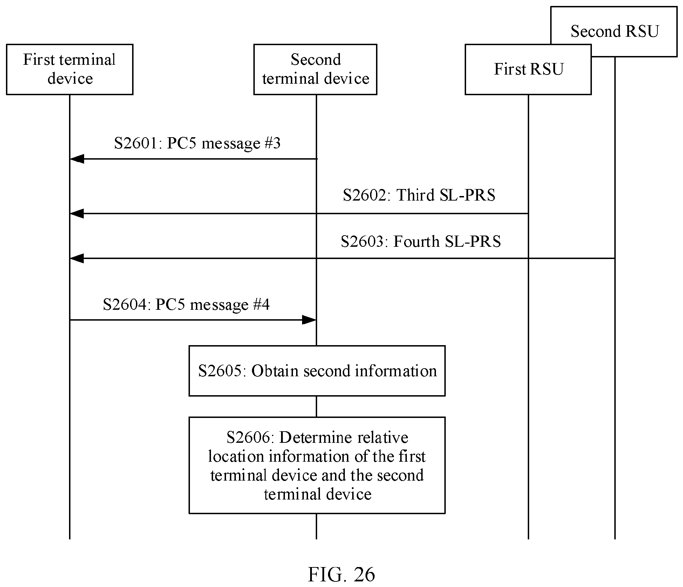

The following uses an example in which the first device is a second terminal device, the first positioning assisting node is a first RSU, the second positioning assisting node is a second RSU, and the reference signal is an SL-PRS. A relative positioning method provided in an embodiment of this application is described as an example with reference to FIG. 26.

FIG. 26 is still another example of a relative positioning method according to an embodiment of this application. The method may include the following steps.

S2601: The second terminal device sends a PCS message #3 to a first terminal device. Correspondingly, the first terminal device receives the PCS message # 3 from the second terminal device. The PCS message #3 is used to request information obtained by the first terminal device by measuring an SL-PRS. The information obtained by the first terminal device by measuring the SL-PRS may include fourth information. The fourth information may include a third SL-RSTD, a first SL-AOD, and a third SL-AOD. For the third SL-RSTD, the first SL-AOD, and the third SL-AOD, refer to the related descriptions of S1701. Details are not described herein again.

S2602: The first RSU sends a third SL-PRS to the first terminal device. Correspondingly, the first terminal device receives the third SL-PRS from the first RSU based on a third SL-PRS resource.

S2603: The second RSU sends a fourth SL-PRS to the first terminal device. Correspondingly, the first terminal device receives the fourth SL-PRS from the second RSU based on a fourth SL-PRS resource.

S2604: The first terminal device measures the third SL-PRS and the fourth SL-PRS, and sends a PCS message #4 to the second terminal device. Correspondingly, the second terminal device receives the PCS message #4 from the first terminal device. The PCS message #4 includes the fourth information.

S2605: The second terminal device obtains second information. The second information includes a fourth SL-RSTD, a second SL-AOD, and a fourth SL-AOD. The second terminal device may obtain the fourth SL-RSTD, the second SL-AOD, and the fourth SL-AOD by measuring the third SL-PRS of the first RSU and the fourth SL-PRS of the second RSU. For the fourth SL-RSTD, the second SL-AOD, and the fourth SL-AOD, refer to the related descriptions of S1701. Details are not described herein again.

It may be understood that S2605 may be performed before or after S2601, or S2605 and S2601 may be simultaneously performed. This is not specifically limited in embodiments of this application.

S2606: The second terminal device determines relative location information of the first terminal device and the second terminal device based on the fourth information and the second information. The second terminal device may determine the relative location information according to the method described in S1702. Details are not described herein again.

In this embodiment of this application, the second terminal device may directly calculate the relative location information of the two terminal devices based on time measurement result information and angle measurement result information that are in the measurement result information, so that absolute positioning does not need to be separately performed on the two terminal devices twice based on location information of the positioning assisting node. Therefore, two positioning errors introduced by twice absolute positioning can be avoided, thereby improving positioning accuracy during relative positioning. In other words, according to the relative positioning method provided in this embodiment of this application, an existing relative positioning solution can be optimized to improve positioning accuracy.

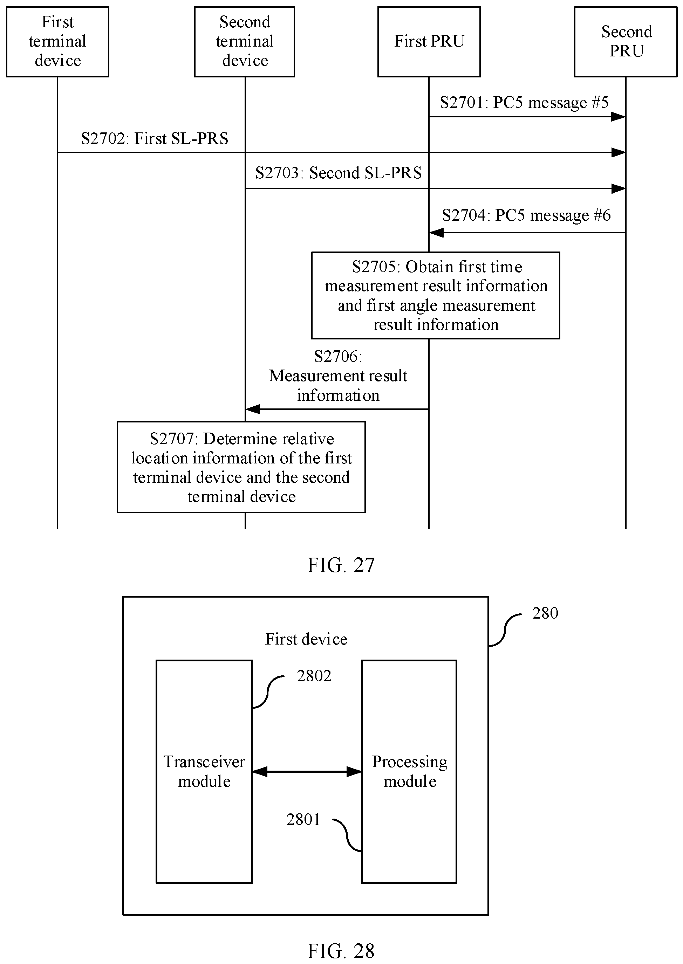

The following uses an example in which the first device is a second terminal device, the first positioning assisting node is a first PRU, the second positioning assisting node is a second PRU, and the reference signal is an SL-PRS. A relative positioning method provided in an embodiment of this application is described as an example with reference to FIG. 27.

FIG. 27 is still another example of a relative positioning method according to an embodiment of this application. The method may include the following steps.

S2701: The first PRU sends a PC5 message #5 to the second PRU. Correspondingly, the second PRU receives the PC5 message #5 from the first PRU. The PC5 message #5 is used to request information obtained by the second PRU by measuring an SL-PRS. The information obtained by the second PRU by measuring the SL-PRS may include second time measurement result information and second angle measurement result information. The second time measurement result information includes: a third SL-RTOA and a fourth SL-RTOA; or a second SL-RSTD; or a difference between a third SL-RTOA and a fourth SL-RTOA. The second angle measurement result information may include: a third SL-AOA; or a fourth SL-AOA; or a third SL-AOA and a fourth SL-AOA; or an average value of a third SL-AOA and a fourth SL-AOA. For the third SL-RTOA, the fourth SL-RTOA, the second SL-RSTD, the third SL-AOA, and the fourth SL-AOA, refer to the related descriptions of S1701. Details are not described herein again.

S2702: The first terminal device sends a first SL-PRS to the second PRU. Correspondingly, the second PRU receives the first SL-PRS from the first terminal device based on a first SL-PRS resource.

S2703: The second terminal device sends a second SL-PRS to the second PRU. Correspondingly, the second PRU receives the second SL-PRS from the second terminal device based on a second SL-PRS resource.

S2704: The second PRU measures the first SL-PRS and the second SL-PRS, and sends a PC5 message #6 to the first PRU. Correspondingly, the first PRU receives the PC5 message #6 from the second PRU. The PC5 message #6 includes the second time measurement result information and the second angle measurement result information.

S2705: The first PRU obtains first time measurement result information and first angle measurement result information. The first time measurement result information includes: a first SL-RTOA and a second SL-RTOA; or a first SL-RSTD; or a difference between a first SL-RTOA and a second SL-RTOA. The first angle measurement result information may include: a first SL-AOA; or a second SL-AOA; or a first SL-AOA and a second SL-AOA; or an average value of a first SL-AOA and a second SL-AOA. For the first SL-RTOA, the second SL-RTOA, the first SL-RSTD, the first SL-AOA, and the second SL-AOA, refer to the related descriptions of S1701. Details are not described herein again.

It may be understood that S2705 may be performed before or after S2701, or S2705 and S2701 may be simultaneously performed. This is not specifically limited in embodiments of this application.

S2706: The first PRU sends measurement result information to the second terminal device. Correspondingly, the second terminal device receives the measurement result information from the first PRU. The measurement result information includes the first time measurement result information, the second time measurement result information, the first angle measurement result information, and the second angle measurement result information.

For example, the measurement result information may be carried in the PC5 message.

S2707: The second terminal device determines relative location information of the first terminal device and the second terminal device based on the measurement result information. The second terminal device may determine the relative location information according to the method described in S1702. Details are not described herein again.

In this embodiment of this application, the second terminal device may directly calculate the relative location information of the two terminal devices based on time measurement result information and angle measurement result information that are in the measurement result information, so that absolute positioning does not need to be separately performed on the two terminal devices twice based on location information of the positioning assisting node. Therefore, two positioning errors introduced by twice absolute positioning can be avoided, thereby improving positioning accuracy during relative positioning. In other words, according to the relative positioning method provided in this embodiment of this application, an existing relative positioning solution can be optimized to improve positioning accuracy.

It may be understood that, in the foregoing embodiments, the methods and/or steps implemented by the first device may be alternatively implemented by a component (for example, a processor, a chip, a chip system, a circuit, a logical module, or software) that may be used in the first device.

The foregoing mainly describes the solutions provided in this application. Correspondingly, this application further provides a communication apparatus. The communication apparatus is configured to implement the methods in the foregoing method embodiments. The communication apparatus may be the first device in the method embodiments, an apparatus including the first device, or a component that may be used in the first device, for example, a chip or a chip system.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

For example, the communication apparatus is the first device in the foregoing method embodiments. FIG. 28 is a diagram of a structure of a first device 280. The first device 280 includes a processing module 2801 and a transceiver module 2802.

In some embodiments, the first device 280 may further include a storage module (not shown in FIG. 28), configured to store program instructions and data.

In some embodiments, the processing module 2801 is configured to: obtain measurement result information, and determine relative location information of a first terminal device and a second terminal device based on the measurement result information. The measurement result information includes time measurement result information of arrival of a reference signal at a target positioning assisting node and/or a target terminal device, and angle measurement result information of the target terminal device relative to the target positioning assisting node. The target positioning assisting node includes a first positioning assisting node and a second positioning assisting node. The target terminal device includes the first terminal device and the second terminal device. The relative location information includes one or more of the following: relative location coordinates, a relative distance, or a relative direction.

In a possible implementation, the time measurement result information of arrival of the reference signal at the target positioning assisting node and/or the target terminal device includes one or more of the following:

a first RTOA, where the first RTOA is a difference between a first RTOA reference time value and a TOA measurement value obtained by the first positioning assisting node by measuring a reference signal sent by the first terminal device;
a second RTOA, where the second RTOA is a difference between a second RTOA reference time value and a TOA measurement value obtained by the first positioning assisting node by measuring a reference signal sent by the second terminal device;
a third RTOA, where the third RTOA is a difference between a third RTOA reference time value and a TOA measurement value obtained by the second positioning assisting node by measuring the reference signal sent by the first terminal device;
a fourth RTOA, where the fourth RTOA is a difference between a fourth RTOA reference time value and a TOA measurement value obtained by the second positioning assisting node by measuring the reference signal sent by the second terminal device;

a first RSTD, where the first RSTD is a difference between the TOA measurement value obtained by the first positioning assisting node by measuring the reference signal sent by the first terminal device and the TOA measurement value obtained by the first positioning assisting node by measuring the reference signal sent by the second terminal device;

a second RSTD, where the second RSTD is a difference between the TOA measurement value obtained by the second positioning assisting node by measuring the reference signal sent by the first terminal device and the TOA measurement value obtained by the second positioning assisting node by measuring the reference signal sent by the second terminal device;

a third RSTD, where the third RSTD is a difference between a TOA measurement value obtained by the first terminal device by measuring a reference signal sent by the first positioning assisting node and a TOA measurement value obtained by the first terminal device by measuring a reference signal sent by the second positioning assisting node;

a fourth RSTD, where the fourth RSTD is a difference between a TOA measurement value obtained by the second terminal device by measuring the reference signal sent by the first positioning assisting node and a TOA measurement value obtained by the second terminal device by measuring the reference signal sent by the second positioning assisting node;

a difference between the first RTOA and the second RTOA;

a difference between the third RTOA and the fourth RTOA;

a difference between the first RTOA and the third RTOA;

a difference between the second RTOA and the fourth RTOA;

a difference between the first RSTD and the second RSTD; or

a difference between the third RSTD and the fourth RSTD.

For example, the first RSTD, or the difference between the first RTOA and the second RTOA may indicate a first distance difference. The first distance difference is a distance difference between a distance from the first positioning assisting node to the first terminal device and a distance from the first positioning assisting node to the second terminal device.

For example, the second RSTD, or the difference between the third RTOA and the fourth RTOA may indicate a second distance difference. The second distance difference is a distance difference between a distance from the second positioning assisting node to the first terminal device and a distance from the second positioning assisting node to the second terminal device.

For example, the third RSTD, or the difference between the first RTOA and the third RTOA may indicate a third distance difference. The third distance difference is a difference between a distance from the first terminal device to the first positioning assisting node and a distance from the first terminal device to the second positioning assisting node.

For example, the fourth RSTD, or the difference between the second RTOA and the fourth RTOA may indicate a fourth distance difference. The fourth distance difference is a difference between a distance from the second terminal device to the first positioning assisting node and a distance from the second terminal device to the second positioning assisting node.

Optionally, in this embodiment of this application, a difference between the first distance difference and the second distance difference may be used to determine the relative location information of the first terminal device and the second terminal device.

Optionally, in this embodiment of this application, a difference between the third distance difference and the fourth distance difference may be used to determine the relative location information of the first terminal device and the second terminal device.

The angle measurement result information of the target terminal device relative to the target positioning assisting node includes one or more of the following angle measurement values:

a first angle measurement value, where the first angle measurement value is an angle measurement value of the first terminal device relative to the first positioning assisting node;

a second angle measurement value, where the second angle measurement value is an angle measurement value of the second terminal device relative to the first positioning assisting node;

a third angle measurement value, where the third angle measurement value is an angle measurement value of the first terminal device relative to the second positioning assisting node;

a fourth angle measurement value, where the fourth angle measurement value is an angle measurement value of the second terminal device relative to the second positioning assisting node;

a fifth angle measurement value, where the fifth angle measurement value is a value between the first angle measurement value and the second angle measurement value; and

a sixth angle measurement value, where the sixth angle measurement value is a value between the third angle measurement value and the fourth angle measurement value, where

a measurement value type corresponding to the angle measurement value includes one or more of the following: AOA, AOD, RSRP, or RSRPP of at least one path.

Optionally, the fifth angle measurement value is an angle measurement value of the first terminal device and the second terminal device relative to the first positioning assisting node. The fifth angle measurement value may be an average value of the first angle measurement value and the second angle measurement value.

Optionally, the sixth angle measurement value is an angle measurement value of the first terminal device and the second terminal device relative to the second positioning assisting node. The sixth angle measurement value may be an average value of the third angle measurement value and the fourth angle measurement value.

In a possible implementation, the AOA includes a first arrival path AOA and/or a non-first arrival path AOA; or the AOD includes a first arrival path AOD and/or a non-first arrival path AOD.

Optionally, an NLOS path AOA may refer to: When a UL-SRS sent by a terminal device arrives at a network device via an intermediate device, an included angle that is between a reference direction and a direction of arrival of the UL-SRS to the intermediate device and that is observed from the intermediate device; or when an SL-PRS sent by a terminal device arrives at an assisting terminal device via an intermediate device, an included angle that is between a reference direction and a direction of arrival of the SL-PRS to the intermediate device and that is observed from the intermediate device.

Optionally, an NLOS path AOD may refer to: When a DL-PRS sent by a network device arrives at a terminal device via an intermediate device, an included angle that is between a reference direction and a direction of departure of the DL-PRS and that is observed from the intermediate device; or when an SL-PRS sent by an assisting terminal device arrives at a terminal device via an intermediate device, an included angle that is between a reference direction and a direction of departure of the SL-PRS and that is observed from the assisting terminal device.

Optionally, in this embodiment of this application, the intermediate device may include but is not limited to a reflector, a scatterer, an intelligent reflecting surface, an intelligent relay station, or the like.

Optionally, in this embodiment of this application, the intermediate device may be a reflector, a scatterer, an intelligent reflecting surface, or the like that is closest to the terminal device.

In a possible implementation, the measurement result information further includes one or more of the following: identification information of the first positioning assisting node, identification information of the second positioning assisting node, a PCI corresponding to the first positioning assisting node, a PCI corresponding to the second positioning assisting node, a GCI corresponding to the first positioning assisting node, a GCI corresponding to the second positioning assisting node, resource identification information of the reference signal, measurement time information of the reference signal, or beam index information of the reference signal.

In a possible implementation, the time measurement result information of arrival of the reference signal at the target positioning assisting node and/or the target terminal device includes first time measurement result information and second time measurement result information, the first time measurement result information includes time measurement result information of arrival of the reference signal at the first positioning assisting node, and the second time measurement result information includes time measurement result information of arrival of the reference signal at the second positioning assisting node; and the angle measurement result information of the target terminal device relative to the target positioning assisting node includes first angle measurement result information and second angle measurement result information, the first angle measurement result information includes angle measurement result information of the target terminal device relative to the first positioning assisting node, and the second angle measurement result information includes angle measurement result information of the target terminal device relative to the second positioning assisting node. A measurement value type corresponding to an angle measurement value in the first angle measurement result information and an angle measurement value in the second angle measurement result information is an AOA.

In a possible implementation, the first device is a location management network element, and that the processing module 2801 obtains measurement result information specifically includes: The transceiver module 2802 sends first measurement request information to the first positioning assisting node, where the first measurement request information is used to request the first positioning assisting node to send the first time measurement result information and the first angle measurement result information to the first device; the transceiver module 2802 sends second measurement request information to the second positioning assisting node, where the second measurement request information is used to request the second positioning assisting node to send the second time measurement result information and the second angle measurement result information to the first device; and the transceiver module 2802 receives the first time measurement result information and the first angle measurement result information from the first positioning assisting node, and receives the second time measurement result information and the second angle measurement result information from the second positioning assisting node.

Optionally, the first measurement request information includes a reference signal configuration for requesting the first positioning assisting node to perform measurement. The reference signal configuration for requesting the first positioning assisting node to perform measurement may include a first reference signal resource and a second reference signal resource. The first reference signal resource is used by the first terminal device to send a first reference signal to the first positioning assisting node. The second reference signal resource is used by the second terminal device to send a second reference signal to the second positioning assisting node.

Alternatively, optionally, the reference signal configuration for requesting the first positioning assisting node to perform measurement may include a first reference signal resource set and a second reference signal resource set. The first reference signal resource set includes one or more first reference signal resources. The second reference signal resource set includes one or more second reference signal resources.

Optionally, the second measurement request information may include a reference signal configuration for requesting the second positioning assisting node to perform measurement. The reference signal configuration for requesting the second positioning assisting node to perform measurement may include a first reference signal resource and a second reference signal resource.

Alternatively, optionally, the reference signal configuration for requesting the first positioning assisting node to perform measurement may include a first reference signal resource set and a second reference signal resource set. The first reference signal resource set includes one or more first reference signal resources. The second reference signal resource set includes one or more second reference signal resources.

In a possible implementation, the time measurement result information of arrival of the reference signal at the target positioning assisting node and/or the target terminal device includes third time measurement result information and fourth time measurement result information, the third time measurement result information includes time measurement result information of arrival of the reference signal at the first terminal device, and the fourth time measurement result information includes time measurement result information of arrival of the reference signal at the second terminal device; and the angle measurement result information of the target terminal device relative to the target positioning assisting node includes third angle measurement result information and fourth angle measurement result information, the third angle measurement result information includes angle measurement result information of the first terminal device relative to the target positioning assisting node, and the fourth angle measurement result information includes angle measurement result information of the second terminal device relative to the target positioning assisting node. A measurement value type corresponding to an angle measurement value in the third angle measurement result information and an angle measurement value in the fourth angle measurement result information is an AOD, or an RSRP and/or an RSRPP.

In a possible implementation, the first device is a location management network element, and that the processing module 2801 obtains measurement result information specifically includes: The transceiver module 2802 sends third measurement request information to the first terminal device, where the third measurement request information is used to request the first terminal device to send the third time measurement result information and the third angle measurement result information to the first device; the transceiver module 2802 sends fourth measurement request information to the second terminal device, where the fourth measurement request information is used to request the second terminal device to send the fourth time measurement result information and the fourth angle measurement result information to the first device; and the transceiver module 2802 receives the third measurement result information and the third angle measurement result information from the first terminal device, and receives the fourth measurement result information and the fourth angle measurement result information from the second terminal device.

In a possible implementation, the first device is the first terminal device or the second terminal device.

Optionally, the first device is the first terminal device or the second terminal device, and that the processing module 2801 obtains measurement result information specifically includes: The transceiver module 2802 receives the measurement result information from a location management network element.

In a possible implementation, the first device is the first terminal device, the measurement result information includes first information, and the first information includes time measurement result information of arrival of the reference signal at the second terminal device and/or the target positioning assisting node, and angle measurement result information of the second terminal device relative to the target positioning assisting node; and that the processing module 2801 obtains measurement result information specifically includes: The transceiver module 2802 receives the first information from a location management network element.

In a possible implementation, the first device is the first terminal device, the measurement result information includes second information, and the second information includes time measurement result information of arrival of the reference signal at the second terminal device, and angle measurement result information of the second terminal device relative to the target positioning assisting node; and that the processing module 2801 obtains measurement result information specifically includes: The transceiver module 2802 receives the second information from the second terminal device.

Optionally, before the transceiver module 2802 receives the second information from the second terminal device, the transceiver module 2802 is further configured to send a request message to the second terminal device. The request message is used to request the second terminal device to send the second information to the first device.

In a possible implementation, the first device is the second terminal device, the measurement result information includes third information, and the third information includes time measurement result information of arrival of the

**EP 4 607 968 A1**

reference signal at the first terminal device and/or the target positioning assisting node, and angle measurement result information of the first terminal device relative to the target positioning assisting node; and that the processing module 2801 obtains measurement result information specifically includes: The transceiver module 2802 receives the third information from a location management network element.

In a possible implementation, the first device is the second terminal device, the measurement result information includes fourth information, and the fourth information includes time measurement result information of arrival of the reference signal at the first terminal device, and angle measurement result information of the first terminal device relative to the target positioning assisting node; and that the processing module 2801 obtains measurement result information specifically includes: The transceiver module 2802 receives the fourth information from the first terminal device.

Optionally, before the transceiver module 2802 receives the fourth information from the first terminal device, the transceiver module 2802 is further configured to send a request message to the first terminal device. The request message is used to request the first terminal device to send the fourth information to the first device.

Optionally, the first positioning assisting node is a first assisting terminal device, the second positioning assisting node is a second assisting terminal device, and the measurement result information includes time measurement result information of arrival of the reference signal at the target positioning assisting node and angle measurement result information of the target terminal device relative to the target positioning assisting node; and that the processing module 2801 obtains measurement result information specifically includes: The transceiver module 2802 receives the measurement result information from the first positioning assisting node or the second positioning assisting node.

In this application, the first device 280 is presented with the functional modules obtained through division in an integrated manner. The "module" herein may be an application-specific integrated circuit ASIC, a circuit, a processor that executes one or more software or firmware programs and a memory, an integrated logic circuit, and/or another component that can provide the foregoing functions.

In some embodiments, in hardware implementation, a person skilled in the art can figure out that the first device 280 may use a form of the communication apparatus 160 shown in FIG. 16.

In an example, functions/implementation processes of the processing module 2801 in FIG. 28 may be implemented by the processor 1601 in the communication apparatus 160 shown in FIG. 16 by invoking the computer-executable instructions stored in the memory 1602. Functions/implementation processes of the transceiver module 2802 in FIG. 28 may be implemented by the transceiver 1603 in the communication apparatus 160 shown in FIG. 16.

In some embodiments, when the first device 280 in FIG. 28 is a chip or a chip system, the function/implementation process of the transceiver module 2802 may be implemented by an input/output interface (or a communication interface) of the chip or the chip system, and the function/implementation process of the processing module 2801 may be implemented by a processor (or a processing circuit) of the chip or the chip system.

The first device 280 provided in this embodiment may perform the foregoing relative positioning method. Therefore, for technical effect that can be achieved by the first device 280, refer to the foregoing method embodiments. Details are not described herein again.

In some embodiments, the first device in this application may be alternatively implemented by using the following: one or more field-programmable gate arrays (field-programmable gate array, FPGA), a programmable logic device (programmable logic device, PLD), a controller, a state machine, gate logic, a discrete hardware component, any other suitable circuit, or any combination of circuits that can perform various functions described in this application.

In some embodiments, this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read through another component), and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or instructions are executed by a computer, functions in any foregoing method embodiment are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be physically separated or not, this is, may be located together in the same place or distributed on a plurality of network units. Parts displayed as units may or may not be physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or a part of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. In embodiments of this application, the computer may include the foregoing apparatus.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the protection scope of this application. Correspondingly, the specification and accompanying drawings are merely example description of this application defined by the accompanying claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

**1.** A relative positioning method, wherein the method comprises:

> obtaining, by a first device, measurement result information, wherein the measurement result information comprises time measurement result information of arrival of a reference signal at a target positioning assisting node and/or a target terminal device, and angle measurement result information of the target terminal device relative to the target positioning assisting node, the target positioning assisting node comprises a first positioning assisting node and a second positioning assisting node, and the target terminal device comprises a first terminal device and a second terminal device; and

determining, by the first device, relative location information of the first terminal device and the second terminal device based on the measurement result information, wherein the relative location information comprises one or more of the following: relative location coordinates, a relative distance, or a relative direction.

2. The method according to claim 1, wherein the time measurement result information of arrival of the reference signal at the target positioning assisting node and/or the target terminal device comprises one or more of the following:

a first relative time of arrival RTOA, wherein the first RTOA is a difference between a first RTOA reference time value and a time of arrival TOA measurement value obtained by the first positioning assisting node by measuring a reference signal sent by the first terminal device;

a second RTOA, wherein the second RTOA is a difference between a second RTOA reference time value and a TOA measurement value obtained by the first positioning assisting node by measuring a reference signal sent by the second terminal device;

a third RTOA, wherein the third RTOA is a difference between a third RTOA reference time value and a TOA measurement value obtained by the second positioning assisting node by measuring the reference signal sent by the first terminal device;

a fourth RTOA, wherein the fourth RTOA is a difference between a fourth RTOA reference time value and a TOA measurement value obtained by the second positioning assisting node by measuring the reference signal sent by the second terminal device;

a first reference signal time difference of arrival RSTD, wherein the first RSTD is a difference between the TOA measurement value obtained by the first positioning assisting node by measuring the reference signal sent by the first terminal device and the TOA measurement value obtained by the first positioning assisting node by measuring the reference signal sent by the second terminal device;

a second RSTD, wherein the second RSTD is a difference between the TOA measurement value obtained by the second positioning assisting node by measuring the reference signal sent by the first terminal device and the TOA measurement value obtained by the second positioning assisting node by measuring the reference signal sent by the second terminal device;

a third RSTD, wherein the third RSTD is a difference between a TOA measurement value obtained by the first terminal device by measuring a reference signal sent by the first positioning assisting node and a TOA measurement value obtained by the first terminal device by measuring a reference signal sent by the second positioning assisting node;

a fourth RSTD, wherein the fourth RSTD is a difference between a TOA measurement value obtained by the second terminal device by measuring the reference signal sent by the first positioning assisting node and a TOA measurement value obtained by the second terminal device by measuring the reference signal sent by the second positioning assisting node;

a difference between the first RSTD and the second RSTD; or

a difference between the third RSTD and the fourth RSTD.

3. The method according to claim 1 or 2, wherein the angle measurement result information of the target terminal device relative to the target positioning assisting node comprises one or more of the following angle measurement values:

a first angle measurement value, wherein the first angle measurement value is an angle measurement value of the first terminal device relative to the first positioning assisting node;

a second angle measurement value, wherein the second angle measurement value is an angle measurement value of the second terminal device relative to the first positioning assisting node;

a third angle measurement value, wherein the third angle measurement value is an angle measurement value of the first terminal device relative to the second positioning assisting node;

a fourth angle measurement value, wherein the fourth angle measurement value is an angle measurement value of the second terminal device relative to the second positioning assisting node;

a fifth angle measurement value, wherein the fifth angle measurement value is a value between the first angle measurement value and the second angle measurement value; and

a sixth angle measurement value, wherein the sixth angle measurement value is a value between the third angle measurement value and the fourth angle measurement value, wherein

a measurement value type corresponding to the angle measurement value comprises one or more of the following: an angle of arrival AOA, an angle of departure AOD, a reference signal received power RSRP, or a reference signal received path power RSRPP of at least one path.

4. The method according to claim 3, wherein the AOA comprises a first arrival path AOA and/or a non-first arrival path AOA; or the AOD comprises a first arrival path AOD and/or a non-first arrival path AOD.

5. The method according to any one of claims 1 to 4, wherein the measurement result information further comprises one or more of the following:
identification information of the first positioning assisting node, identification information of the second positioning assisting node, a physical cell identifier PCI corresponding to the first positioning assisting node, a PCI corresponding to the second positioning assisting node, a global cell identifier GCI corresponding to the first positioning assisting node, a GCI corresponding to the second positioning assisting node, resource identification information of the reference signal, measurement time information of the reference signal, or beam index information of the reference signal.

6. The method according to any one of claims 1 to 5, wherein the time measurement result information of arrival of the reference signal at the target positioning assisting node and/or the target terminal device comprises first time measurement result information and second time measurement result information, the first time measurement result information comprises time measurement result information of arrival of the reference signal at the first positioning assisting node, and the second time measurement result information comprises time measurement result information of arrival of the reference signal at the second positioning assisting node; and the angle measurement result information of the target terminal device relative to the target positioning assisting node comprises first angle measurement result information and second angle measurement result information, the first angle measurement result information comprises angle measurement result information of the target terminal device relative to the first positioning assisting node, and the second angle measurement result information comprises angle measurement result information of the target terminal device relative to the second positioning assisting node, wherein a measurement value type corresponding to an angle measurement value in the first angle measurement result information and an angle measurement value in the second angle measurement result information is an AOA.

7. The method according to claim 6, wherein the first device is a location management network element; and the obtaining, by a first device, measurement result information comprises:

sending, by the first device, first measurement request information to the first positioning assisting node, wherein the first measurement request information is used to request the first positioning assisting node to send the first time measurement result information and the first angle measurement result information to the first device;
sending, by the first device, second measurement request information to the second positioning assisting node, wherein the second measurement request information is used to request the second positioning assisting node to send the second time measurement result information and the second angle measurement result information to the first device; and
receiving, by the first device, the first time measurement result information and the first angle measurement result information from the first positioning assisting node, and receiving the second time measurement result information and the second angle measurement result information from the second positioning assisting node.

8. The method according to any one of claims 1 to 5, wherein the time measurement result information of arrival of the reference signal at the target positioning assisting node and/or the target terminal device comprises third time measurement result information and fourth time measurement result information, the third time measurement result information comprises time measurement result information of arrival of the reference signal at the first terminal device, and the fourth time measurement result information comprises time measurement result information of arrival of the reference signal at the second terminal device; and the angle measurement result information of the target terminal device relative to the target positioning assisting node comprises third angle measurement result information and fourth angle measurement result information, the third angle measurement result information comprises angle measurement result information of the first terminal device relative to the target positioning assisting node, and the fourth angle measurement result information comprises angle measurement result information of the second terminal device relative to the target positioning assisting node, wherein a measurement value type corresponding to an angle measurement value in the third angle measurement result information and an angle measurement value in the fourth angle measurement result information is an AOD, or an RSRP and/or an RSRPP.

9. The method according to claim 8, wherein the first device is a location management network element; and the obtaining, by a first device, measurement result information comprises:

sending, by the first device, third measurement request information to the first terminal device, wherein the third measurement request information is used to request the first terminal device to send the third time measurement result information and the third angle measurement result information to the first device;

sending, by the first device, fourth measurement request information to the second terminal device, wherein the fourth measurement request information is used to request the second terminal device to send the fourth time measurement result information and the fourth angle measurement result information to the first device; and

receiving, by the first device, the third measurement result information and the third angle measurement result information from the first terminal device, and receiving the fourth measurement result information and the fourth angle measurement result information from the second terminal device.

10. The method according to any one of claims 1 to 5, wherein the first device is the first terminal device or the second terminal device.

11. The method according to claim 10, wherein the first device is the first terminal device, the measurement result information comprises first information, and the first information comprises time measurement result information of arrival of the reference signal at the second terminal device and/or the target positioning assisting node, and angle measurement result information of the second terminal device relative to the target positioning assisting node; and the obtaining, by a first device, measurement result information comprises:
receiving, by the first device, the first information from a location management network element.

12. The method according to claim 10, wherein the first device is the first terminal device, the measurement result information comprises second information, and the second information comprises time measurement result information of arrival of the reference signal at the second terminal device, and angle measurement result information of the second terminal device relative to the target positioning assisting node; and the obtaining, by a first device, measurement result information comprises:
receiving, by the first device, the second information from the second terminal device.

13. A communication apparatus, wherein the communication apparatus is configured to perform the relative positioning method according to any one of claims 1 to 12.

14. A communication apparatus, comprising:

a processor, wherein the processor is coupled to a memory, wherein
the processor is configured to execute a computer program stored in the memory, so that the communication apparatus performs the relative positioning method according to any one of claims 1 to 12.

15. A communication apparatus, comprising:

a processor and an interface circuit, wherein the interface circuit is configured to receive code instructions and transmit the code instructions to the processor; and
the processor is configured to run the code instructions to perform the relative positioning method according to any one of claims 1 to 12.

16. A communication apparatus, wherein the communication apparatus comprises a processor and a transceiver, the transceiver is configured to exchange information between the communication apparatus and another communication apparatus, and the processor executes program instructions to perform the relative positioning method according to any one of claims 1 to 12.

17. A computer-readable storage medium, wherein the computer-readable storage medium comprises a computer program or instructions, and when the computer program or the instructions are run on a computer, the computer is enabled to perform the relative positioning method according to any one of claims 1 to 12.

18. A computer program product, wherein the computer program product comprises instructions, and when the instructions are run on a computer, the computer is enabled to perform the relative positioning method according to any one of claims 1 to 12.

FIG. 1

FIG. 2

FIG. 3

FIG. 4

FIG. 5

FIG. 6

FIG. 7

```
┌──────────┐                              ┌──────────┐
│ Terminal │                              │   LMF    │
│  device  │                              │ network  │
│          │                              │ element  │
└────┬─────┘                              └────┬─────┘
     │                                         │
     │          S801: LPP message 7            │
     │◄────────────────────────────────────────│
     │                                         │
     │          S802: LPP message 8            │
     │────────────────────────────────────────►│
     │                                         │
```

FIG. 8

```
┌──────────┐                              ┌──────────┐
│ Terminal │                              │   LMF    │
│  device  │                              │ network  │
│          │                              │ element  │
└────┬─────┘                              └────┬─────┘
     │                                         │
     │          S901: LPP message 9            │
     │────────────────────────────────────────►│
     │                                         │
```

FIG. 9

```
┌──────────┐                              ┌──────────┐
│ Network  │                              │   LMF    │
│  device  │                              │ network  │
│          │                              │ element  │
└────┬─────┘                              └────┬─────┘
     │                                         │
     │        S1001: NRPPa message 5           │
     │◄────────────────────────────────────────│
     │                                         │
     │        S1002: NRPPa message 6           │
     │────────────────────────────────────────►│
     │                                         │
     │        S1003: NRPPa message 7           │
     │- - - - - - - - - - - - - - - - - - - - ►│
     │                                         │
     │        S1004: NRPPa message 8           │
     │◄- - - - - - - - - - - - - - - - - - - - │
     │                                         │
     │        S1005: NRPPa message 9           │
     │- - - - - - - - - - - - - - - - - - - - ►│
     │                                         │
     │        S1006: NRPPa message 10          │
     │◄- - - - - - - - - - - - - - - - - - - - │
     │                                         │
```

FIG. 10

Network device #1

(a)

Network device #1

(b)

Network device #1

(c)

FIG. 11

FIG. 12

FIG. 13

FIG. 14

FIG. 15

FIG. 16

S1701: A first device obtains measurement result information

↓

S1702: The first device determines relative location information of a first terminal device and a second terminal device based on the measurement result information

FIG. 17

Second positioning
assisting node

First positioning
assisting node

First terminal device          Second terminal device

FIG. 18

First positioning          Second positioning
assisting node             assisting node

First terminal device          Second terminal device

FIG. 19

First positioning
assisting node

Second positioning
assisting node

y-axis

$\theta_1$

$\theta_2$

$d_{12}$

$d_{11}$

$d_{21}$

$d_{22}$

Second terminal device

(x, y)

x-axis

First terminal device

FIG. 20

FIG. 21

FIG. 22

FIG. 23

| First terminal device | Second terminal device | First gNB | Second gNB | LMF network element |
|---|---|---|---|---|

S2401: Request location information message #1

S2402: First DL-PRS

S2403: Second DL-PRS

S2404: Provide location information message #1

S2405: Third time measurement result information and third angle measurement result information

S2406: Obtain fourth time measurement result information and fourth angle measurement result information

S2407: Determine relative location information of the first terminal device and the second terminal device

FIG. 24

First terminal
device

Second
terminal device

First gNB

Second gNB

S2501: PC5 message #1

S2502: First DL-PRS

S2503: Second DL-PRS

S2504: PC5 message #2

S2505: Obtain fourth time measurement
result information and fourth angle
measurement result information

S2506: Determine relative location
information of the first terminal device
and the second terminal device

FIG. 25

First terminal device

Second terminal device

First RSU

Second RSU

S2601: PC5 message #3

S2602: Third SL-PRS

S2603: Fourth SL-PRS

S2604: PC5 message #4

S2605: Obtain second information

S2606: Determine relative location information of the first terminal device and the second terminal device

FIG. 26

| First terminal device | Second terminal device | First PRU | Second PRU |
|---|---|---|---|

S2701: PC5 message #5

S2702: First SL-PRS

S2703: Second SL-PRS

S2704: PC5 message #6

S2705: Obtain first time measurement result information and first angle measurement result information

S2706: Measurement result information

S2707: Determine relative location information of the first terminal device and the second terminal device

**FIG. 27**

First device — 280

Transceiver module — 2802

Processing module

2801

**FIG. 28**

## INTERNATIONAL SEARCH REPORT

| International application No. |
| --- |
| **PCT/CN2023/123451** |

**A. CLASSIFICATION OF SUBJECT MATTER**

H04W4/02(2018.01)i

According to International Patent Classification (IPC) or to both national classification and IPC

**B. FIELDS SEARCHED**

Minimum documentation searched (classification system followed by classification symbols)

IPC: H04W H04L H04Q

Documentation searched other than minimum documentation to the extent that such documents are included in the fields searched

Electronic data base consulted during the international search (name of data base and, where practicable, search terms used)

CNTXT, ENTXT, ENTXTC, WPABS, IEEE, CNKI, 3GPP: 相对, 定位, 位置, 时间, 角度, TOA, RTOA, RSTD, DOA, TDOA, 到达角, 离开角, 出发角, 离去角, AOA, AOD, 参考信号, RS, SRS, PRS, 第一, 第二, 多个, 辅助, 基站, eNB, gNB, 参考, 目标, 节点, 设备, UE?, PRU, relative, position+, distance?, time, angle, reference signal?, first, second, target, terminal?, device?, equipment?

**C. DOCUMENTS CONSIDERED TO BE RELEVANT**

| Category* | Citation of document, with indication, where appropriate, of the relevant passages | Relevant to claim No. |
| --- | --- | --- |
| A | WO 2022073619 A1 (NOKIA TECHNOLOGIES OY) 14 April 2022 (2022-04-14) description, page 27, line 27-page 28, line 32 | 1-18 |
| A | WO 2022126642 A1 (BEIJING XIAOMI MOBILE SOFTWARE CO., LTD.) 23 June 2022 (2022-06-23) entire document | 1-18 |
| A | CN 112333624 A (HUAWEI TECHNOLOGIES CO., LTD.) 05 February 2021 (2021-02-05) entire document | 1-18 |
| A | WO 2021086114 A1 (LG ELECTRONICS INC.) 06 May 2021 (2021-05-06) entire document | 1-18 |
| A | CATT et al. "Discussion on potential solutions for SL positioning" *3GPP TSG RAN WG1 #109-e R1-2203467*, 20 May 2022 (2022-05-20), entire document | 1-18 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **09 December 2023** | **20 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/123451** |

**C. DOCUMENTS CONSIDERED TO BE RELEVANT**

| Category* | Citation of document, with indication, where appropriate, of the relevant passages | Relevant to claim No. |
| --- | --- | --- |
| A | Fraunhofer IIS et al. "Potential solutions for SL positioning" *3GPP TSG RAN WG1 #109-e R1-2204835*, 20 May 2022 (2022-05-20), entire document | 1-18 |

## INTERNATIONAL SEARCH REPORT
### Information on patent family members

International application No.

**PCT/CN2023/123451**

| Patent document cited in search report | | | Publication date (day/month/year) | Patent family member(s) | | | Publication date (day/month/year) |
|---|---|---|---|---|---|---|---|
| WO | 2022073619 | A1 | 14 April 2022 | US | 2023366974 | A1 | 16 November 2023 |
| | | | | EP | 4226697 | A1 | 16 August 2023 |
| WO | 2022126642 | A1 | 23 June 2022 | CN | 115023987 | A | 06 September 2022 |
| CN | 112333624 | A | 05 February 2021 | WO | 2021008581 | A1 | 21 January 2021 |
| | | | | KR | 20220031086 | A | 11 March 2022 |
| | | | | EP | 3993451 | A1 | 04 May 2022 |
| | | | | US | 2022141797 | A1 | 05 May 2022 |
| | | | | JP | 2022541463 | A1 | 26 September 2022 |
| WO | 2021086114 | A1 | 06 May 2021 | KR | 20220092916 | A | 04 July 2022 |
| | | | | US | 2022365163 | A1 | 17 November 2022 |

Form PCT/ISA/210 (patent family annex) (July 2022)

**EP 4 607 968 A1**

**Patent documents cited in the description**

- CN 202211321629